# EUROPÄISCHE PATENTSCHRIFT

(11) **EP 0 324 372 B1**
(45) Veröffentlichungstag und Bekanntmachung des Hinweises auf die Patenterteilung: **19.05.1993**
(21) Anmeldenummer: 89100120.8
(22) Anmeldetag: 05.01.1989
(51) Int. Cl.: C09B 62/085, C09B 62/51, D06P 1/38

(54) **Wasserlösliche 2-Naphthol-Azoverbindungen, Verfahren zu ihrer Herstellung und ihre Verwendung als Farbstoffe**
Water soluble 2-naphthol azo compounds, process for their preparation and their use as dyestuffs
Composés 2-naphtol-azo-solubles dans l'eau, procédé pour leur préparation et leur emploi comme colorants

(30) Priorität: 13.01.1988 DE 3800690
(43) Veröffentlichungstag der Anmeldung: 19.07.1989
(73) Patentinhaber: HOECHST AKTIENGESELLSCHAFT, 65926 Frankfurt am Main (DE)
(72) Erfinder: Springer, Hartmut, Dr., D-6240 Königstein/Taunus (DE); Hussong, Kurt, Dr., D-6233 Kelkheim (Taunus) (DE)

(56) Entgegenhaltungen:
- EP-A- 0 167 219
- DE-C- 960 534
- DE-C- 965 902
- FR-A- 641 816

## Beschreibung

Die Erfindung liegt auf dem technischen Gebiet der faserreaktiven Farbstoffe.

Die französische Patentschrift Nr. 641 816 beschreibt die Herstellung von Monoazofarbstoffen, die als Kupplungskomponente die 2 - Hydroxynaphthalin - 6 - carbonsäure enthalten, jedoch keine faserreaktiven Eigenschaften aufweisen und zum Färben von Wolle und von Baumwolle eingesetzt werden, wobei die hierdurch erhaltenen Färbungen in der Regel einer Nachbehandlung mit Chromsalzen unterworfen werden.

Mit der vorliegenden Erfindung wurden neue, wertvolle faserreaktive Monoazoverbindungen gefunden, die faserreaktive Farbstoffeigenschaften besitzen und der allgemeinen Formel (1) 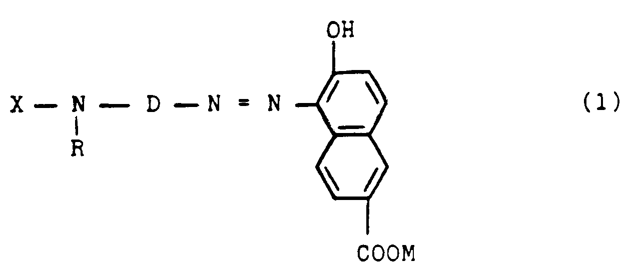 entsprechen, in welcher bedeuten:
D ist eine para- oder meta - Phenylengruppe, die durch 1 Carboxygruppe oder 1 oder 2 Sulfogruppen substituiert sein kann, oder ist eine Naphthylengruppe, die in 1 - oder 2 - Stellung die Azogruppe gebunden enthält und an die in 5 - oder 6 - Stellung die Gruppierung X- N(R) - gebunden ist und die durch 1 Carboxygruppe oder 1 oder 2 Sulfogruppen substituiert sein kann;
R ist ein Wasserstoffatom oder eine Alkylgruppe von 1 bis 4 C -Atomen, wie die Methyl - oder Ethylgruppe, oder eine durch eine Hydroxy-, Cyano-, Carboxy-, Sulfo-, Sulfato- oder Phosphatogruppe oder Phenyl - oder Sulfophenylgruppe substituierte Alkylgruppe von 1 bis 4 C-Atomen, wie beispielsweise die Benzyl-, Phenethyl-, β - Cyanoethyl - , β - Carboxyethyl - , β - Sulfoethyl - , β - Sulfatoethyl - , β - Phosphatoethyl - oder Sulfomethyl - Gruppe, bevorzugt hiervon ein Wasserstoffatom und die Methylgruppe;
M ist ein Wasserstoffatom oder ein Alkalimetall oder das Äquivalent eines zweiwertigen Metalls, wie des Erdalkalimetalls, wie beispielsweise des Calciums, bevorzugt jedoch ein Wasserstoffatom oder ein Alkalimetall, wie Natrium, Kalium oder Lithium;
X ist eine Gruppe der allgemeinen Formel (2) 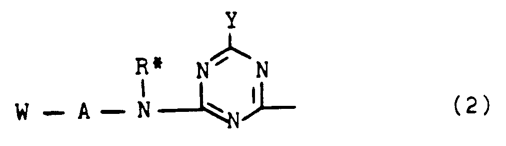 in welcher
Y ein Halogenatom, wie ein Fluoratom und insbesondere ein Chloratom, ist,
R* ein Wasserstoffatom oder eine Alkylgruppe von 1 bis 4 C-Atomen, wie die Ethyl- oder Methylgruppe, oder eine Alkylgruppe von 1 bis 4 C-Atomen ist, die durch eine Sulfo-, Carboxy - , Phosphato - , Sulfato -, Hydroxy - oder Cyanogruppe substituiert ist,
A eine direkte Bindung ist oder eine Gruppe der Formel (3a), (3b) oder (3c) 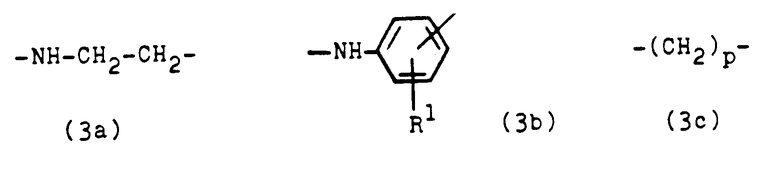 in welchen
R¹ ein Wasserstoffatom oder eine Sulfo - oder Carboxygruppe ist, die freie Bindung im Benzolkern von Formel (3b) in meta-Stellung oder bevorzugt in paraStellung zur Gruppe - NH - gebunden ist und
p die Zahl 1, 2 oder 3 bedeutet, und
W eine Gruppe der allgemeinen Formel (4a) oder (4b) 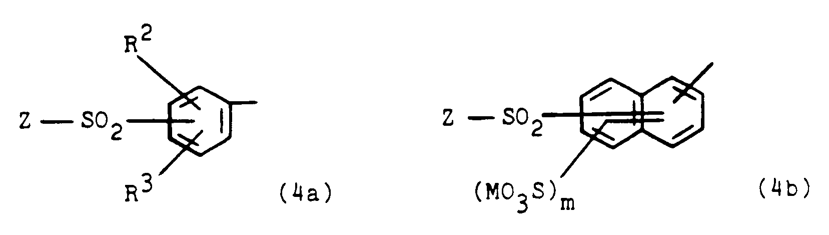 ist, in welchen
R² ein Wasserstoffatom oder eine Alkylgruppe von 1 bis 4 C-Atomen, wie die Ethylgruppe und insbesondere Methylgruppe, eine Alkoxygruppe von 1 bis 4 C-Atomen, wie die Ethoxygruppe und insbesondere Methoxygruppe, ein Chlor- oder Bromatom, eine Hydroxy-, Sulfo-, Carboxy- oder Nitrogruppe oder eine Alkylaminogruppe von 1 bis 4 C-Atomen oder eine im Alkylrest durch Hydroxy, Sulfato, Sulfo, Phosphato, Alkanoyloxy von 2 bis 5 C-Atomen oder durch carboxysubstituiertes Alkanoylamido von 1 bis 4 C -Atomen im Alkylenrest, wie Succininamido der Formel MOOC - CH₂ - CH₂ - CO - NH - mit M der obigen Bedeutung, substituierte Alkylaminogruppe von 1 bis 4 C-Atomen ist,
R³ ein Wasserstoffatom oder Alkylgruppe von 1 bis 4 C -Atomen, wie die Ethylgruppe und insbesondere Methylgruppe, oder eine Alkoxygruppe von 1 bis 4 C-Atomen, wie die Ethoxygruppe und insbesondere die Methoxygruppe, ist,
Z die Vinylgruppe bedeutet oder eine Ethylgruppe ist, die in β - Stellung durch einen Substituenten substituiert ist, der durch ein Alkali unter Bildung der Vinylgruppe eliminiert werden kann,
m für die Zahl Null, 1 oder 2 steht (wobei im Falle von m gleich Null diese Gruppe ein Wasserstoffatom bedeutet) und
M die obengenannte Bedeutung besitzt.

Substituierte Alkylaminogruppen als Substituenten R² sind beispielsweise die ß - Sulfoethylamino - und die ß - Succinamidoethyl - amino - Gruppe.

In der Ethylgruppe in β - Stellung stehende alkalisch eliminierbare Substituenten sind beispielsweise ein Halogenatom, wie das Chlor - oder Bromatom, Estergruppen organischer Carbon- und Sulfonsäuren, wie eine Alkanoyloxygruppe von 2 bis 5 C-Atomen, beispielsweise die Acetyloxygruppe, oder eine Sulfobenzoyloxy - , Benzoyloxy - , Phenylsulfonyloxy - oder (Methylphenyl) - sulfonyloxy - Gruppe, desweiteren eine Phosphato - , Sulfato - oder Thiosulfatogruppe oder eine Dialkylaminogruppe mit Alkylgrup - pen von jeweils 1 bis 4 C -Atomen, wie die Dimethylamino - und Diethylaminogruppe. Bevorzugt hiervon ist die Sulfatogruppe.

Von den erfindungsgemäßen Azoverbindungen der allgemeinen Formel (1) sind insbesondere bevorzugt solche, in welchen R für ein Wasserstoffatom stehen, des weiteren solche, in welchen D die meta- oder para-Phenylengruppe ist, die durch 1 oder 2 Sulfogruppen substituiert sind, des weiteren solche, in welchen A eine direkte Bindung ist, und des weiteren solche in welchen W für eine Gruppe der allgemeinen Formel (4a) steht.

Bevorzugt bedeutet R² ein Wasserstoffatom oder eine Methyl - , Methoxy - oder Ethoxygruppe oder ein Chloratom und R³ ein Wasserstoffatom oder eine Methoxy - oder Ethoxygruppe.

Insbesondere bevorzugt können von den erfindungsgemäßen Azoverbindungen diejenigen hervorgehoben werden, die der allgemeinen Formel (1 a) 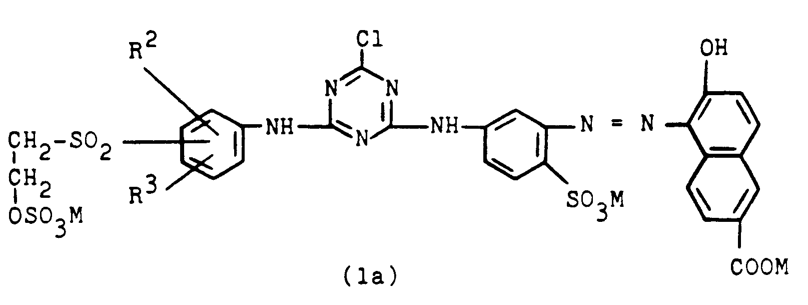 entsprechen, in welchen M, R² und R³ die obengenannten, insbesondere bevorzugten Bedeutungen besitzen und die β - Sulfatoethylsulfonyl - Gruppe in meta - oder para - Stellung zur Aminogruppe an den Benzolkern gebunden ist.

Bedeutet D ein durch eine Sulfogruppe substituierte Phenylengruppe, so ist diese bevorzugt ein Rest der allgemeinen Formel (3d) 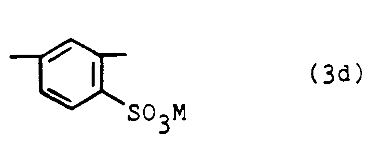 mit M der obengenannten Bedeutung.

In den vorstehenden und in den nachstehenden Angaben bedeutet eine Sulfogruppe eine Gruppe entsprechend der allgemeinen Formel - -S0₃M , eine Carboxygruppe eine Gruppe entsprechend der allgemeinen Formel - COOM , eine Thiosulfatogruppe eine Gruppe entsprechend der allgemeinen Formel

- S - SO₃ M , eine Sulfatogruppe eine Gruppe entsprechend der allgemeinen Formel - OSO₃ M und eine Phosphatogruppe eine Gruppe entsprechend der allgemeinen Formel - -OP0₃M₂ , in welchen M die obengenannte Bedeutung besitzt.

Die neuen Azoverbindungen können in saurer Form und in Form ihrer Salze vorliegen. Bevorzugt sind sie in Form ihrer Salze, insbesondere der Alkali - und Erdalkalimetallsalze, und finden auch bevorzugt in Form dieser Salze verwendung zum Färben (hier und im folgenden im allgemeinen Sinne und einschließlich des Bedruckens verstanden) von hydroxy-und/oder carbonamidgruppenhaltigen Materialien, insbesondere Fasermaterialien.

Die vorliegende Erfindung betrifft weiterhin Verfahren zur Herstellung der Verbindungen der allgemeinen Formel (1), die dadurch gekennzeichnet sind, daß man
a) eine Verbindung der allgemeinen Formel (5) 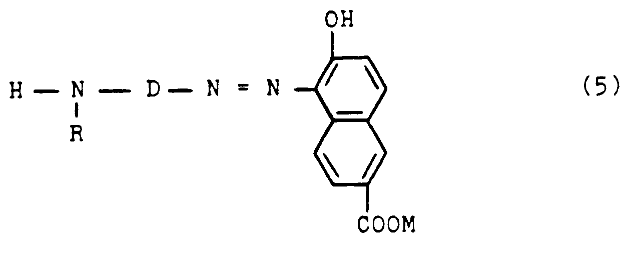 in welcher R, D und M die obengenannten Bedeutungen haben, in an und für sich bekannter Verfahrensweise mit einer Verbindung der allgemeinen Formel (6) 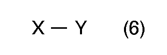 in welcher X und Y die obengenannten Bedeutungen besitzen, wobei der Formelrest Z in X hier einen Rest Z' bedeutet, der eine β - Hydroxyethyl - Gruppe darstellt oder die Bedeutung von Z besitzt, umsetzt oder daß man
b) eine aromatische Aminoverbindung der allgemeinen Formel (7) 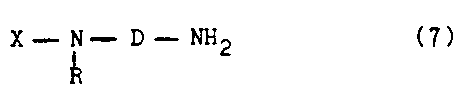 in welcher X, R und D die obengenannten Bedeutungen haben, wobei der Formelrest Z in X hier einen Rest Z' mit der oben genannten Bedeutung darstellt, diazotiert und mit der 2 - Naphthol - 6 - carbon - säure oder einem Salz dieser Carbonsäure kuppelt, oder daß man
c) eine Verbindung der allgemeinen Formel (8) 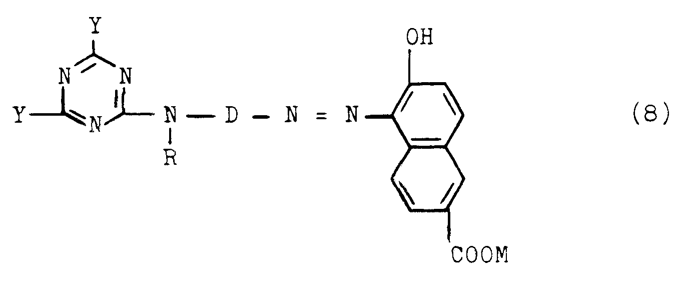 in welcher beide Y sowie R, D und M die obengenannten Bedeutungen haben, mit einer Aminoverbin - dung der allgemeinen Formel (9) 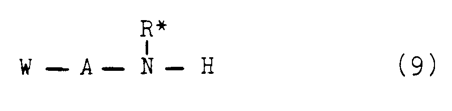 mit W, A und R^{*} der obigen Bedeutung, wobei der Formelrest Z in W hier einen Rest Z' der obengenannten Bedeutung darstellt, umsetzt, wobei man im Falle der Verwendung von Ausgangsverbindungen, in welchen Z' für die β - Hydroxyethyl - Gruppe steht, diese β - Hydroxyethyl - Gruppe in der erhaltenen Verbindung entsprechend der Formel (1) mit Z hier der β - Hydroxyethyl - Gruppe analog bekannten Verfahrensweisen mit Hilfe eines Veresterungs- oder Acylierungsmittel, wie bspw. eines Phosphatierungs- oder Sulfatierungsmittels oder eines organischen Säurehalogenids oder - anhydrids, zwingend in eine Ester- oder Acyloxy-ethyl-, wie bspw. eine β - Phosphatoethyl - oder β - Acetyloxyethyl - oder bevorzugt β - Sulfatoethyl - Gruppe, über - führt.

Die Verfahrensweise b) wird analog bekannten Verfahrensweisen der Diazotierung und Kupplung durchgeführt. Die Diazotierung der Aminoverbindung der allgemeinen Formel (7) erfolgt in der Regel in wäßrigem mineralsaurem Medium mittels Natriumnitrit, d.h. durch Einwirkung salpetriger Säure, bei einem pH - Wert von 2 oder kleiner als 2 und bei einer Temperatur zwischen - -10 ° C und + 15 ° C, bevorzugt zwischen - 5 ° C und + 10 ° C. Die Kupplung des Diazoniumsalzes des Amins (7) mit der 2 - Naphthol - 6 - carbonsäure oder deren Salz wird ebenfalls in der Regel in wäßrigem Medium bei einer Temperatur zwischen 0 und 30 ° C, bevorzugt zwischen 5 und 20 ° C, und bei einem pH - Wert zwischen 3,5 und 7,5, bevorzugt zwischen 4 und 7, insbesondere zwischen 4 und 6, durchgeführt.

Die Reaktionsbedingungen der Verfahrensweisen a) und c) sind analog bekannten Verfahrensweisen der Umsetzung von Aminoverbindungen mit Dihalogen-triazinylamino-Verbindungen, so in wäßrigem oder wäßrig organischem Medium (wobei der organische Lösemittelanteil ein unter den Reaktionsbedingungen inertes, bevorzugt wasserlösliches Lösemittel ist, wie beispielsweise Aceton, Dimethylformamid und Dime - thylsulfoxid) bei einem pH - Wert zwischen 1 und 7, insbesondere 2 und 6, und einer Temperatur zwischen -10 ° C und + 80 ° C, insbesondere -10 ° C und + 50 ° C.

Die Ausgangsverbindungen der allgemeinen Formel (5) lassen sich analog bekannten Verfahrensweisen leicht durch Kupplung des diazotierten Amins H(R)N - D - NH₂ mit D und R der obengenannten Bedeutung mit der 2 - Hydroxy - naphthalin - 6 - carbonsäure oder einem Salz dieser Carbonsäure entsprechend den obigen Reaktionsbedingungen der Diazotierung und Kupplung herstellen. Sowohl diese Diaminoverbindun - gen als auch die 2 - Naphthol - 6 - carbonsäure sind allgemein bekannt und in der Literatur beschrieben.

Ebenso sind die den faserreaktiven Rest X enthaltenden Ausgangs-Aminoverbindungen entsprechend der allgemeinen Formel (7) allgemein bekannt; sie können durch Umsetzung der entsprechenden Diaminoverbindung der allgemeinen Formel H(R)N - D - NH₂ mit D und R der obengenannten Bedeutung mit einer Amino - halogen - triazin - Verbindung entsprechend der allgemeinen Formel (6) hergestellt werden. Ebenso lassen sich die Ausgangsverbindungen der allgemeinen Formel (8) analog anderen Azoverbindungen, die solch einen Dihalogentriazinylamino - Rest gebunden enthalten, herstellen, indem man eine Aminoazover - bindung entsprechend der allgemeinen Formel (5) mit Cyanurchlorid oder Cyanurfluorid umsetzt. Verfah - rensbedingungen für solche Reaktionen sind allgemein bekannt und entsprechen im wesentlichen der Verfahrensbedingungen, die später für die Reaktionen zwischen den Ausgangsverbindungen (5) und (6) oder (8) und (9) angegeben sind.

Zur Neutralisierung der bei den Kondensationsreaktionen freiwerdenden Halogenwasserstoffe verwendet man in der Regel Alkali - und Erdalkalicarbonate, Alkali - und Erdalkalihydrogencarbonate oder Alkali - oder Erdalkalihydroxide oder auch Alkaliacetate, wobei die Alkali - und Erdalkalimetalle vorzugsweise solche des Natriums, Kaliums und Calciums sind; säurebindende Mittel sind ebenso tertiäre Amine, wie beispielsweise Pyridin oder Triethylamin oder Chinolin.

Die erfindungsgemäße Umsetzung der Aminoazoverbindungen der allgemeinen Formel (5) mit einer Amino-dihalogen-triazin-Verbindung der allgemeinen Formel (6) erfolgt im Falle, daß Y für ein Chloratom steht, in der Regel bei einem pH - Wert zwischen 4 und 7, bevorzugt zwischen 5 und 6, und bei einer Temperatur zwischen 0 und 50 ° C, bevorzugt zwischen 10 und 40 ° C, insbesondere bevorzugt zwischen 10 und 30 ° C, und im Falle, daß Y für ein Fluoratom steht, in der Regel bei einem pH - Wert zwischen 4 und 7, bevorzugt zwischen 5 und 6, und bei einer Temperatur zwischen - -10 ° C und + 40 ° C, vorzugsweise zwischen - -10 ° C und + 30 ° C, insbesondere bevorzugt zwischen 0 ° C und + 10 ° C.

Die erfindungsgemäße Umsetzung von Dihalogen-triazinylamino-Azoverbindungen entsprechend der allgemeinen Formel (8) mit einer Aminoverbindung der allgemeinen Formel (9) der obengenannten Bedeu - tung erfolgt in der Regel im Falle, daß Y für ein Chloratom steht, in der Regel bei einem pH - Wert zwischen 4 und 7, bevorzugt zwischen 5 und 6, und bei einer Temperatur zwischen 0 und 50 ° C, bevorzugt zwischen 10 und 40 ° C, insbesondere bevorzugt zwischen 10 und 30 ° C, und im Falle, daß Y für ein Fluoratom steht, in der Regel bei einem pH - Wert zwischen 4 und 7, bevorzugt zwischen 5 und 6, und bei einer Temperatur zwischen -10 ° C und + 40 ° C, vorzugsweise zwischen -10 ° C und + 30 ° C, insbesondere bevorzugt zwischen 0 ° C und + 10 ° C.

Amino - Ausgangsverbindungen entsprechend der allgemeinen Formel (9) sind beispielsweise 3 - (ß - Sulfatoethylsulfonyl) - anilin, 2 - Methoxy - 5 - (β - sulfatoethylsulfonyl) - anilin, 2 - Methoxy - 4 - (β - sulfa - toethylsulfonyl) - anilin, 2 - Methyl - 5 - (ß - sulfatoethylsulfonyl) - anilin, 2 - Methyl - 4 - (ß - sulfatoethylsul - fonyl) - anilin, 4 - Methoxy - 5 - (β - sulfatoethylsulfonyl) - anilin, 4 - Methyl - 5 - (β - sulfatoethylsulfonyl) - anilin, 2 - Methoxy - 5 - methyl 4 - (ß - sulfatoethylsulfonyl) - anilin, 2,5 - Dimethoxy - 4 - (ß - sulfatoethyl - sulfonyl) - anilin, 2,4 - Dimethoxy - 4 - (ß - sulfatoethylsulfonyl) - anilin, 2 - Methyl - 5 - methoxy - 4 - (ß - sulfatoethylsulfonyl) - anilin, 2 - Chlor - 5 - (β - sulfatoethylsulfonyl) - anilin, 4 - Chlor - 2 - methyl - 3 - (β - sulfatoethylsulfonyl) - anilin, 5 - Chlor - 2 - methoxy - 4 - (β - sulfatoethylsulfonyl) - anilin, 4 - (β - Sulfato - ethylsulfonyl) - anilin, 6 - (ß - Sulfatoethylsulfonyl) - 2 - amino - naphthalin, 6 - (ß - Sulfatoethylsulfonyl) - 8 - sulfo - 2 - amino - naphthalin, 8 - (ß - Sulfatoethylsulfonyl) -1- sulfo - 2 - amino - naphthalin, 8 - (ß - Sulfa - toethylsulfonyl) - 6 - sulfo - 2 - amino - naphthalin, 8 - (β - Sulfatoethylsulfonyl) - 2 - amino - naphthalin, β - [4 - (β'- Sulfatoethylsulfonyl) - phenyl] - ethylamin, 4 - (β - Sulfatoethylsulfonyl) - benzylamin, β - [N - (2 - Nitro - 4 - ß' - sulfatoethylsulfonyl) - phenyl] - amino - ethylamin, 4 - [N - (2' - Nitro - 4' - β - sulfatoethylsulfonyl) - phenyl] - amino - anilin, 4 - Sulfo - 3 - [N - (2' - nitro - 4' - β - sulfatoethylsulfonyl) - phenyl] - amino - anilin und 3 - Sulfo - 4 - [N - (2' - nitro - 4' - β - sulfatoethylsulfonyl) - phenyl] - amino - anilin sowie deren Derivate, in denen die β - Sulfatoethylsulfonyl - Gruppe durch eine β - Hydroxyethylsulfonyl - Gruppe oder durch eine Ethylsulfonyl - Gruppe, die in β - Stellung einen alkalisch eliminierbaren Substituenten besitzt, wie insbesondere die β - Thiosulfatoethylsulfonyl - oder β - Phospha - toethylsulfonyl - Gruppe, ausgetauscht ist.

Diamino-Ausgangsverbindungen entsprechend der allgemeinen Formel H(R)N - D - NH₂ sind beispielsweise 4,6-Disulfo-1,3-diaminobenzol, 2,5 - Disulfo -1,4 - diaminobenzol, 4 - Sulfo -1,3 - diamin - obenzol, 2 - Sulfo - -1,4 - diaminobenzol, 4 - Carboxy -1,3 - diaminobenzol, 2 - Carboxy -1,4 - diaminoben - zol. 2 - Sulfo - 4 - (methylamino) - anilin, 4 - Sulfo - 3 - (methylamino) - anilin, 2 - Sulfo - 4 - (ethylamino) - anilin, 4 - Sulfo - 3 - (ethylamino) - anilin, 4 - N - (β - Sulfoethyl) - amino - anilin und 4,8-Disulfo-1,6-diamino - naphthalin.

Die Abscheidung und Isolierung der erfindungsgemäß hergestellten Azoverbindungen der allgemeinen Formel (1) aus den Syntheselösungen kann nach allgemein bekannten Methoden erfolgen, so beispiels - weise entweder durch Ausfällen aus dem Reaktionsmedium mittels Elektrolyten, wie beispielsweise Natri - umchlorid oder Kaliumchlorid, oder durch Eindampfen der Reaktionslösung, beispielsweise Sprühtrocknung, wobei der Syntheselösung eine Puffersubstanz zugefügt werden kann.

Die erfindungsgemäßen Azoverbindungen der allgemeinen Formel (1) - im nachfolgenden Verbindun - gen (1) genannt - haben, wie bereits erwähnt, faserreaktive Farbstoffeigenschaften. Sie können deshalb zum Färben (einschließlich Bedrucken) von hydroxygruppenhaltigen und/oder carbonamidgruppenhaltigen Materialien, insbesondere Fasermaterialien, verwendet werden. Auch können die bei der Synthese der Verbindungen (1) anfallenden Lösungen, gegebenenfalls nach Zusatz einer Puffersubstanz und gegebenenfalls auch nach Konzentriertung, direkt als Flüssigpräparation der färberischen Verwendung zugeführt werden.

Gegenstand der vorliegenden Erfindung ist deshalb auch die Verwendung der Verbindungen (1) zum Färben (einschließlich) Bedrucken) von hydroxy - und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie bei - spielsweise Cellulosefasermaterialien oder deren Regeneratprodukte und Polyvinylalkohole. Cellulosefaser - materialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid - 6,6, Polyamid - 6, Polyamid - 11 und Polyamid - 4.

Die Verbindungen lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispiels - weise, indem man eine Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe - und Fixierweisen sind sowohl in der Fachliteratur als auch in der Patentliteratur zahlreich beschrieben; wie beispielsweise in der Europäischen Patentanmeldungs - Veröffentlichung Nr. 0 181 585A.

Mit den Verbindungen (1) lassen sich sowohl auf carbonamidgruppenhaltigen Materialien, wie insbe - sondere auf Wolle, als auch auf hydroxygruppenhaltigem Material, wie insbesondere Cellulosefasermaterial, gelbstichig bis blaustichig rote Färbungen und Drucke mit hoher Farbausbeute und gutem Farbaufbau, wobei die brillante Nuance auch in tiefen Tönen erhalten bleibt, herstellen. Die Färbungen und Drucke besitzen gute Echtheitseigenschaften, wie gute Licht- und Naßechtheitseigenschaften und eine gute Plissierechtheit, Bügelechtheit und Reibechtheit.

Von den Färbungen und Drucken auf carbonamidgruppenhaltigem Material, wie insbesondere auf Wolle, können die Licht-, Wasch- und Naßlichtechtheiten hervorgehoben werden, selbst wenn auf eine ansonsten übliche ammoniakalische Nachbehandlung der gefärbten Ware verzichtet wird. Mit anderen faserreaktiven Wollfarbstoffen zeigen sie eine gute Kombinierbarkeit, was eine egales Färben der Faser ermöglicht. Ebenso läßt sich Material aus Wollfasern unterschiedlicher Provinienz mit den Verbindungen (1) egal färben, wobei gegebenenfalls zur Verbesserung des Egalisierverhaltens ein übliches Egalisierhilfsmittel, wie bei - spielsweise N - Methyl - taurin zugesetzt werden kann.

Bevorzugt dienen die Verbindungen (1) zum Färben von Cellulosefasermaterialien. Von den hierauf erzielbaren guten Echtheitseigenschaften sind insbesondere die guten Waschechtheiten bei 60 bis 95 C, auch in Gegenwart von Perboraten, die sauren Walk-, Überfärbe- und Schweißechtheiten, die hohe Dampfbeständigkeit und die guten Säure-, Wasser- und Seewasserechtheiten zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium - oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium - oder Kaliumsalze, in die Synthese eingesetzt werden.

Die im sichtbaren Bereich angegebenen Absorptionsmaxima (λₘₐₓ- Werte) wurden bei 20 ° C aus wäßriger Lösung der Alkalimetallsalze bestimmt.

### Beispiel 1

a) Eine Lösung mit einem pH - Wert von 6 von 148 Teilen 4 - (β - Sulfatoethylsulfonyl) - anilin in 500 Teilen Wasser wird in eine Suspension aus 100 Teilen Cyanurchlorid, 3 Teilen eines handelsüblichen Netzmittels und 800 Teilen Eis und Wasser eingerührt. Man rührt noch einige Zeit bei einer Temperatur zwischen 0 und 5 ° C weiter und hält hierbei den pH-Wert mittels Natriumbicarbonat zwischen 3,5 und 4,5. Der Umsetzungsgrad der Acylierungsreaktion ist 99 % und größer.
b) Der unter a) hergestellte Reaktionsansatz wird zu einer Lösung mit einem pH - Wert zwischen 6 und 7 von 134 Teilen 1,3 - Diaminobenzol - 4,6 - disulfonsäure in etwa 600 Teilen Wasser eingerührt; das Reaktionsgemisch wird auf 40 ° C erwärmt und bei einer Temperatur zwischen 40 und 45 ° C weitergerührt, wobei der pH - Wert mittels Natriumbicarbonat zwischen 5 und 6 gehalten wird, bis die Diamino - verbindung praktisch nicht mehr nachweisbar ist.
c) Der aus der zweiten Acylierungsreaktion unter b) erhaltene Ansatz wird mit 1000 Teilen Eis und 150 Volumenteilen einer wäßrigen 31 %igen Salzsäure versetzt und mit einer wäßrigen Lösung von 35 Teilen Natriumnitrit diazotiert. Das erhaltene Diazotierungsgemisch wird in eine Lösung mit einem pH - Wert zwischen 6 und 6,5 aus 94 Teilen 2 - Naphthol - 6 - carbonsäure in etwa 1100 Teilen Wasser unter Rühren gegeben, wobei der pH - Wert während der gesamten Kupplungsreaktion zwischen 5 und 6 mittels Natriumbicarbonat gehalten wird. Bis zur beendeten Kupplung wird noch einige Zeit weitergerührt.

Die so hergestellt erfindungsgemäße Monoazoverbindung wird in üblicher Weise isoliert, beispielsweise durch Eindampfen oder Sprühtrocknung der neutralen Syntheselösung oder durch Aussalzen mit Natrium - chlorid oder Kaliumchlorid. Man erhält ein elektrolythaltiges gelbes Pulver des Alkalimetallsalzes der Verbindung der Formel 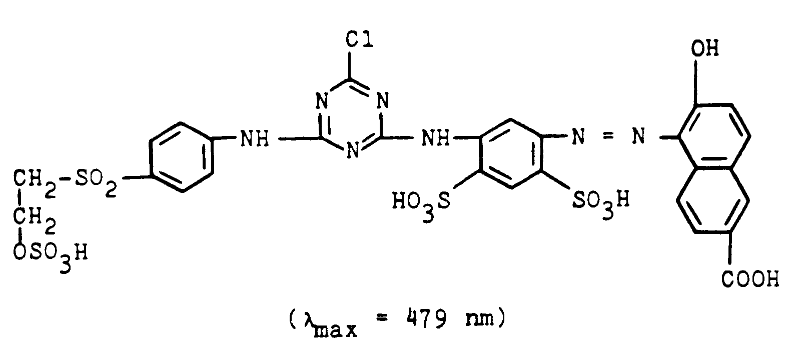 die sehr gute faserreaktive Farbstoffeigenschaften zeigt und auf den in der Beschreibung genannten Materialien, wie insbesonderen Cellulosefasermaterialien, beispielsweise Baumwolle, nach den in der Technik üblichen Applikations - und Fixiermethoden, insbesondere den für faserreaktive Farbstoffe be - schriebenen und angewandten Anwendungsbedingungen, farbstarke klare orange-farbene Färbungen und Drucke mit guten Lichtechtheitseigenschaften und guten Naßechtheiten, wie insbesondere guten Wasch-, Walk- und Schweißechtheiten, liefern.

### Beispiel 2

a) Eine Lösung von 39 Teilen Cyanurchlorid in 150 Volumenteilen Aceton läßt man unter Rühren auf 300 Teile Eis fließen; in diese Suspension gibt man unter Rühren etwa 1000 Volumenteile einer wäßrigen, weniger als 10 ° C kalten, neutralen Lösung von 108 Teilen einer aus 4,6 - Disulfo - 1,3 - diaminobenzol als Diazokomponente und 2 - Naphthol - 6 - carbonsäure als Kupplungskomponente aufgebauten Ami - noazoverbindung. Man rührt den Ansatz noch etwa 4 Stunden bei 0 bis 10 ° C und unter Einhaltung eines pH - Wertes zwischen 4 und 5 weiter, bis praktisch kein Amin mehr nachweisbar ist.
b) 400 Volumenteile einer wäßrigen neutralen Lösung von 59 Teilen 4 - (ß - Sulfatoethylsulfonyl) - anilin werden in den unter a) hergestellten Reaktionsansatz eingerührt. Anschließend erwärmt man die Reaktionsmischung innerhalb von 2 Stunden auf eine Temperatur von 40 bis 50 ° C und rührt den Ansatz noch etwa 12 Stunden bei 40 bis 50 ° C unter Einhaltung eines pH - Wertes zwischen 4,5 und 6,5 bis zur Beendigung der Acylierungsreaktion weiter.

Man isoliert die hergestellte erfindungsgemäße Azoverbindung, die mit der des Beispieles 1 identisch ist, in der dort angegebenen Weise. Sie besitzt dieselben Eigenschaften wie die gemäß Beispiel 1 hergestellte erfindungsgemäße Monoazoverbindung.

### Beispiel 3

Zur Herstellung einer erfindungsgemäßen Monoazoverbindung verfährt man gemäß der im Beispiel 1 angegebenen Verfahrensweise, ersetzt jedoch das dort verwendete 4 - (β - Sulfatoethylsulfonyl) - anilin durch 156 Teile 4-(β-Thiosulfatoethylsulfonyl)-anilin.

Man erhält die erfindungsgemäße Azoverbindung der Formel 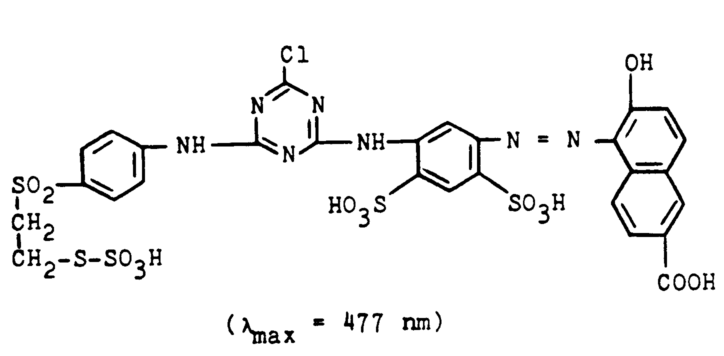 in Form des Alkalimetallsalzes als elektrolythaltiges gelbes Pulver. Sie zeigt sehr gute faserreaktive Farbstoffeigenschaften und liefert auf den in der Beschreibung genannten Materialien, beispielsweise auf Baumwolle, nach den in der Technik üblichen Applikations- und Fixiermethoden, insbesondere den für faserreaktive Farbstoffe beschriebenen und angewandten Anwendungsbedingungen, farbstarke klare orange-farbene Färbungen und Drucke mit guten Lichtechtheitseigenschaften und guten Naßechtheiten, wie insbesondere guten Echtheiten in der Wäsche.

### Beispiel 4

Zur Herstellung einer erfindungsgemäßen Monoazoverbindung verfährt man gemäß der Verfahrensweise des Beispieles 2, ersetzt jedoch dort die im Beispiel 2b) verwendete wäßrige Lösung des 4 - (ß - Sulfatoethylsulfonyl) - anilins durch eine Lösung von 39 Teilen 4-Vinylsulfonyl-anilin in 200 Volumenteilen Aceton.

Man erhält die erfindungsgemäße Azoverbindung der Formel 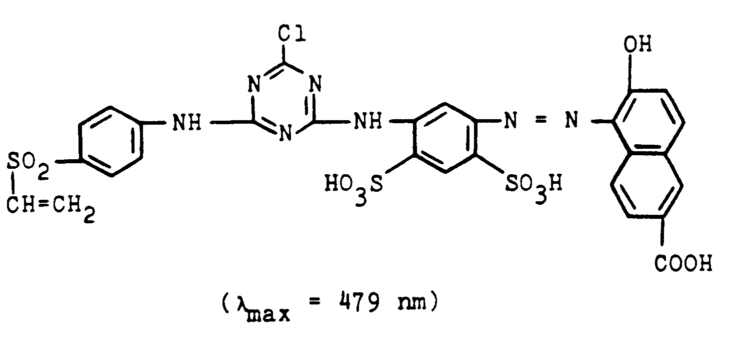 in Form des Alkalimetallsalzes als elektrolythaltiges gelbes Pulver. Sie zeigt ebenfalls sehr gute faserreaktive Farbstoffeigenschaften und liefert auf den in der Beschreibung genannten Materialien, beispielsweise auf Baumwolle, nach den in der Technik üblichen Applikations - und Fixiermethoden, insbesondere den für faserreaktive Farbstoffe beschriebenen und angewandten Anwendungsbedingungen, farbstarke klare orange-farbene Färbungen und Drucke mit guten Lichtechtheitseigenschaften und guten Naßechtheiten, wie insbesondere guten Wasch-, Walk -, Schweiß- und Überfärbeechtheiten.

### Beispiel 5

Man verfährt zur Herstellung einer erfindungsgemäßen Monoazoverbindung gemäß der Verfahrensweise des Beispieles 1, ersetzt jedoch dort die 1,3 - Diaminobenzol - 4,6 - disulfonsäure durch die gleiche Menge 1,4 - Diamino - 2,5 - disulfonsäure. Man erhält die erfindungsgemäße Azoverbindung der Formel 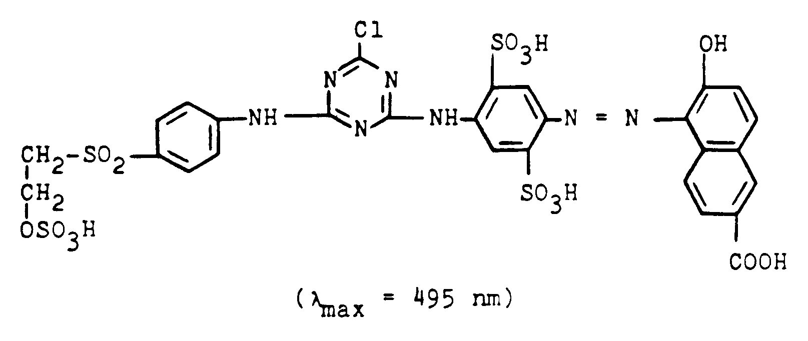 in Form des Alkalimetallsalzes als elektrolythaltiges rotoranges Pulver. Sie zeigt sehr gute faserreaktive Farbstoffeigenschaften und liefert auf den in der Beschreibung genannten Materialien, wie insbesondere Cellulosefasermaterialien, wie beispielsweise Baumwolle, farbstarke, klare, scharlachfarbene Färbungen und Drucke von guten Licht- und Naßechtheitseigenschaften, von denen die guten Wasch-, Walk- und Schweißechtheiten hervorgehoben werden können.

### Beispiel 6

a) Zu einer wäßrigen Lösung des Natriumsalzes von 28,1 Teilen 4 - (β - Sulfatoethylsulfonyl) - anilin in 150 Teilen Wasser gibt man bei 0 ° C innerhalb von 5 bis 10 Minuten unter Einhaltung eines pH - Wertes zwischen 5 und 5,5 stetig 13,6 Teile Cyanurfluorid. Man rührt noch 5 bis 10 Minuten bei 0°C und bei dem angegebenen pH - Bereich nach, bis eine entnommene Probe keine diazotierbaren Anteile mehr enthält.
b) Die unter a) hergestellte Lösung des Monokondensationsproduktes rührt man bei einer Temperatur zwischen 10 und 15°C und bei einem pH - Wert zwischen 5 und 5,5 innerhalb von 15 bis 20 Minuten zu einer Lösung des Natriumsalzes von 19 Teilen 1,3 - Diaminobenzol - 4 - sulfonsäure in 200 Teilen Wasser. Der Reaktionsansatz wird bei diesem Temperatur - und pH - Bereich noch etwa 1 Stunde nachgerührt.
c) Das Dikondensationsprodukt gemäß Abschnitt b) wird ohne Isolierung direkt in der erhaltenen Syntheselösung diazotiert, beispielsweise durch Zugabe von 6,9 Teilen Natriumnitrit und anschließend durch Zugabe einer wäßrigen konzentrierten Salzsäure bei einer Temperatur zwischen 0 und 10°C. Die Diazoniumsalzlösung bzw. suspension wird sodann in eine Lösung mit einem pH - Wert von etwa 6 aus 94 Teilen 2 - Naphthol - 6 - carbonsäure in etwa 1100 Teilen Wasser eingerührt und unter Einhaltung eines pH - Wertes zwischen 5 und 6 noch etwa eine Stunde bis zur Beendigung der Kupplungsreaktion nachgerührt.

Die erfindungsgemäße Monoazoverbindung wird aus der Syntheselösung beispielsweise durch Ein - dampfen oder Sprühtrocknung oder durch Aussalzen mit Natriumchlorid oder Kaliumchlorid isoliert. Man erhält das Alkalimetallsalz der Verbindung der Formel 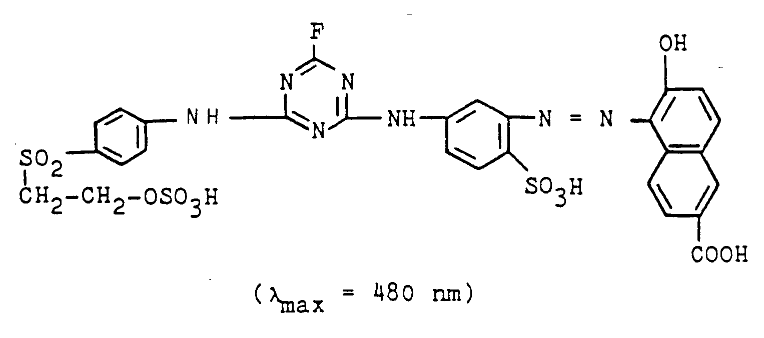 das sehr gute faserreaktive Farbstoffeigenschaften zeigt und auf den in der Beschreibung genannten Materialien, wie insbesondere Wolle, einschließlich filzarm ausgerüsteter Wolle, nach den in der Technik üblichen Anwendungsmethoden farbstarke, brillante orange Färbungen und Drucke mit gutem Farbaufbau und guten Echtheiten, von denen insbesondere die guten Wasch-, Walk-, Schweiß- und Überfärbe - echtheiten hervorgehoben werden können, liefert.

### Beispiel 7

Zur Herstellung einer erfindungsgemäßen Monoazoverbindung verfährt man gemäß der Verfahrensweise des Beispieles 2, geht jedoch anstelle von der dort verwendeten Aminoazo-Ausgangsverbindung von der gleichen Menge der isomeren Ausgangsverbindung mit 2,5 - Disulfo -1,4 - diaminobenzol als Diazokomponente und 2 - Naphthol - 6 - carbonsäure als Kupplungskomponente ein. Man erhält die im Beispiel 5 beschriebene erfindungsgemäße Monoazoverbindung mit den dort angegebenen guten Farbstoffeigenschaften.

### Beispiele 8 bis 292

In den nachfolgenden Tabellenbeispielen sind weitere erfindungsgemäße Monoazoverbindungen entsprechend der allgemeinen Formel (A) 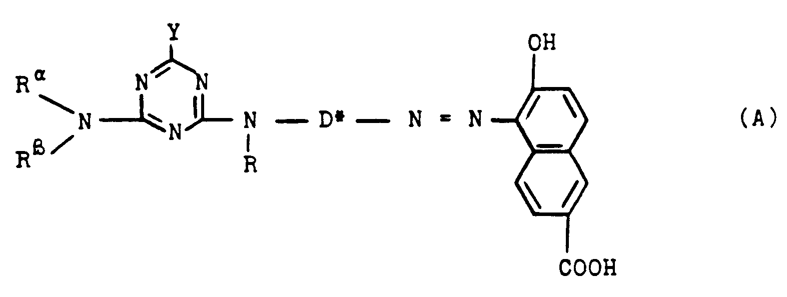 mit Hilfe ihrer Komponenten beschrieben. Sie lassen sich in erfindungsgemäßer Weise, wie beispielsweise nach einer der in den Beispielen 1 bis 7 beschriebenen Verfahrensweise aus den entsprechenden Ausgangsverbindungen (der 2 - Naphthol - 6 - carbonsäure als Kupplungskomponente, der Diaminoverbin - dung der allgemeinen Formel H(R)N - D - NH₂ , Cyanurchlorid oder Cyanurfluorid und einer Aminoverbin - dung entsprechend der Formel R"R^{ß}NH ) herstellen. Sie zeigen sehr gute Farbstoffeigenschaften und liefern auf den in der Beschreibung genannten Materialien, wie insbesondere Cellulosefasermaterialien, beispiels - weise Baumwolle, und ebenfalls auf Wolle farbstarke Färbungen und Drucke mit guten Echtheitseigens - chaften mit dem in dem jeweiligen Tabellenbeispiel angegebenen Farbton (dort für eine Baumwollfärbung; die in Klammern angegebenen Werte sind λₘₐₓ-Werte in nm).

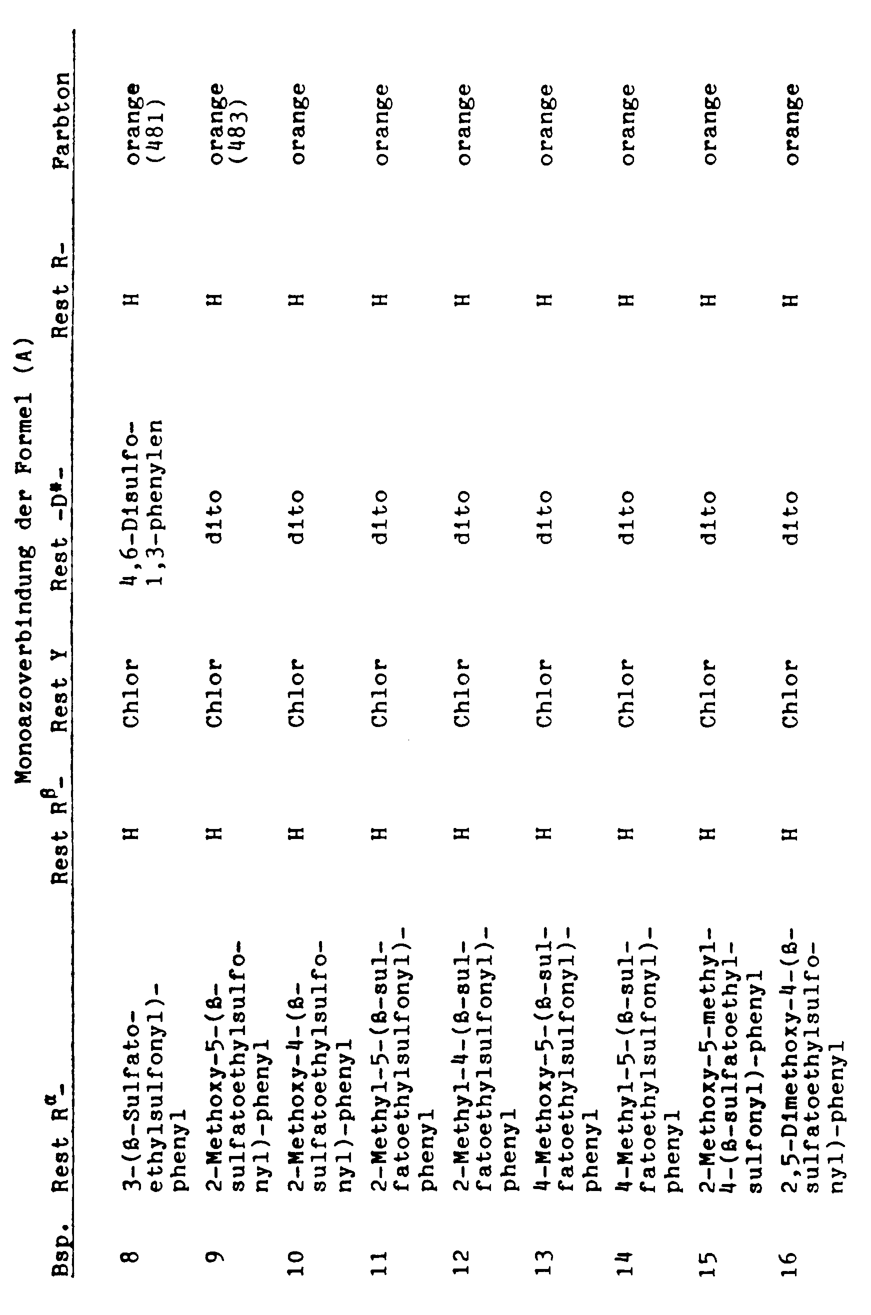

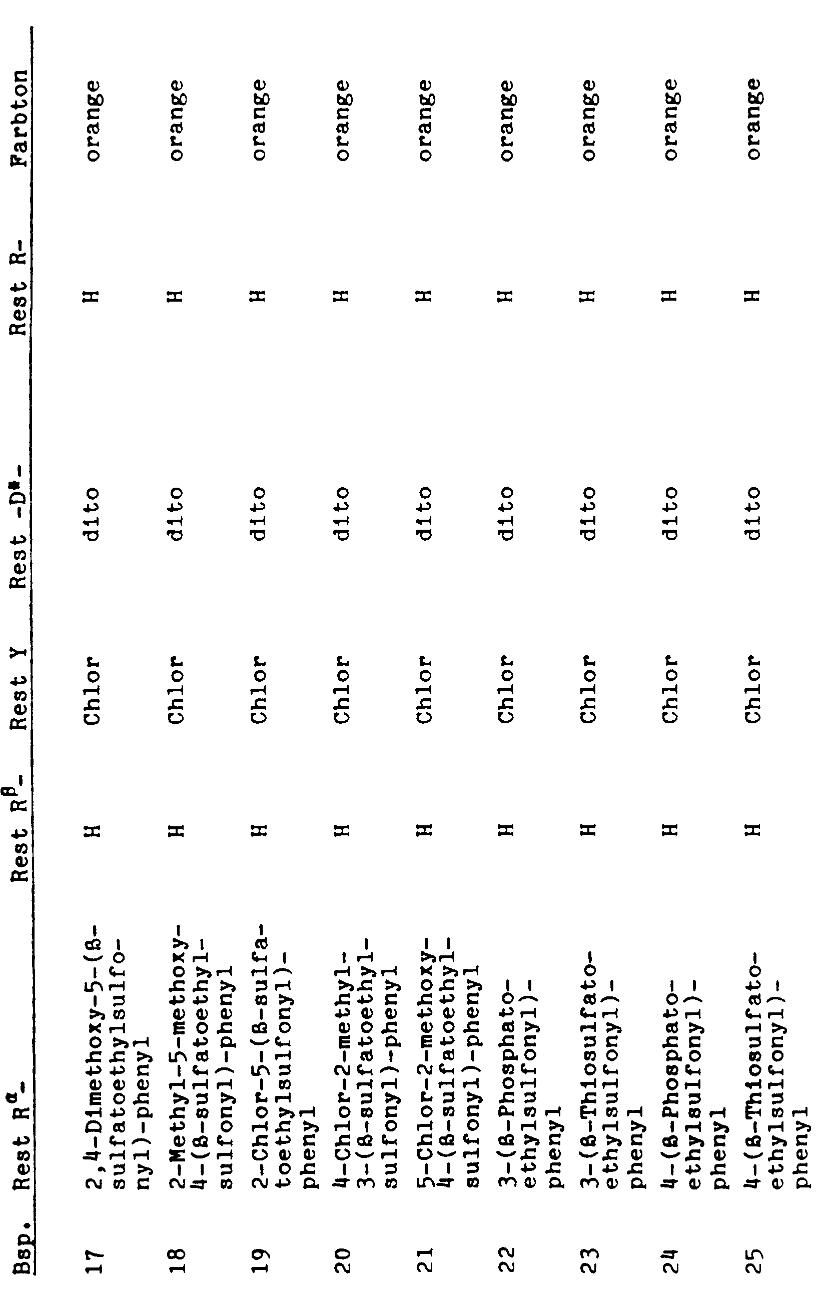

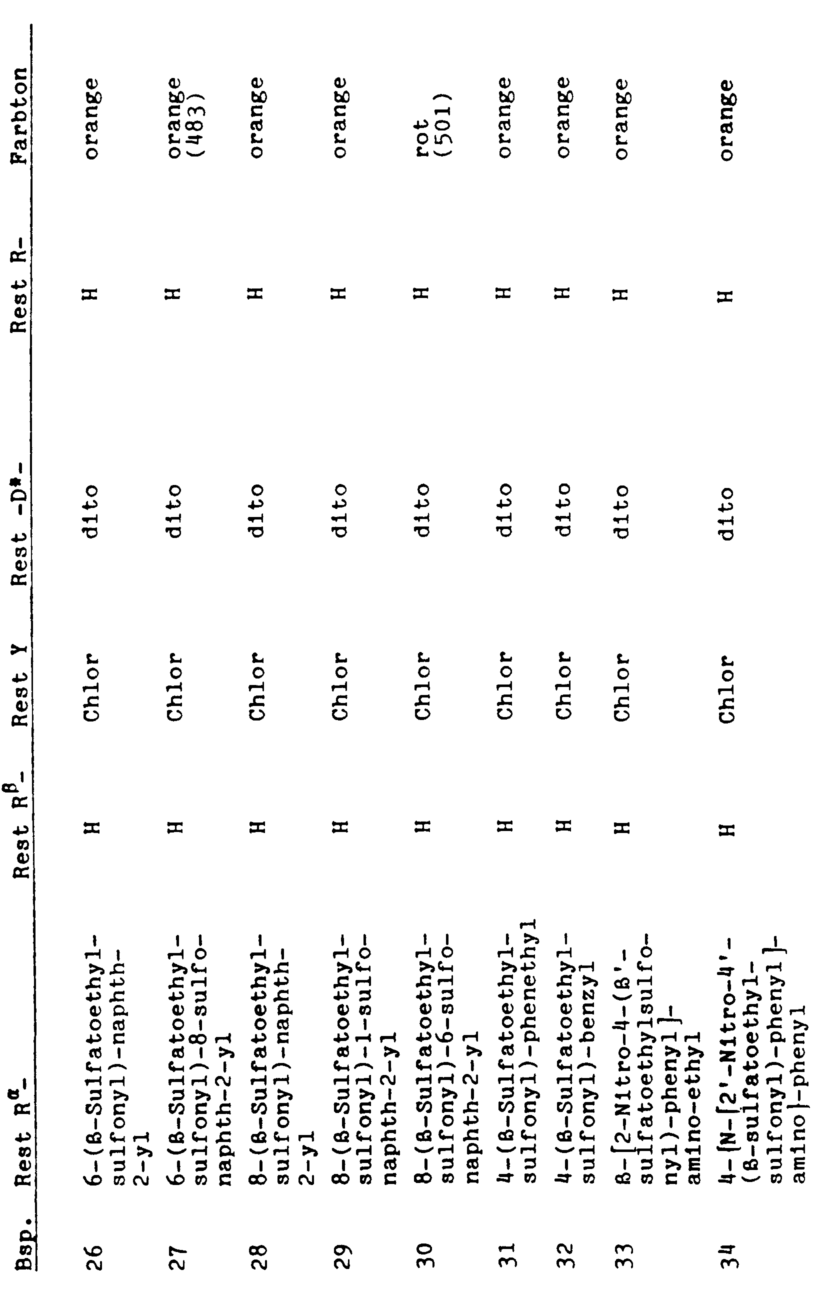

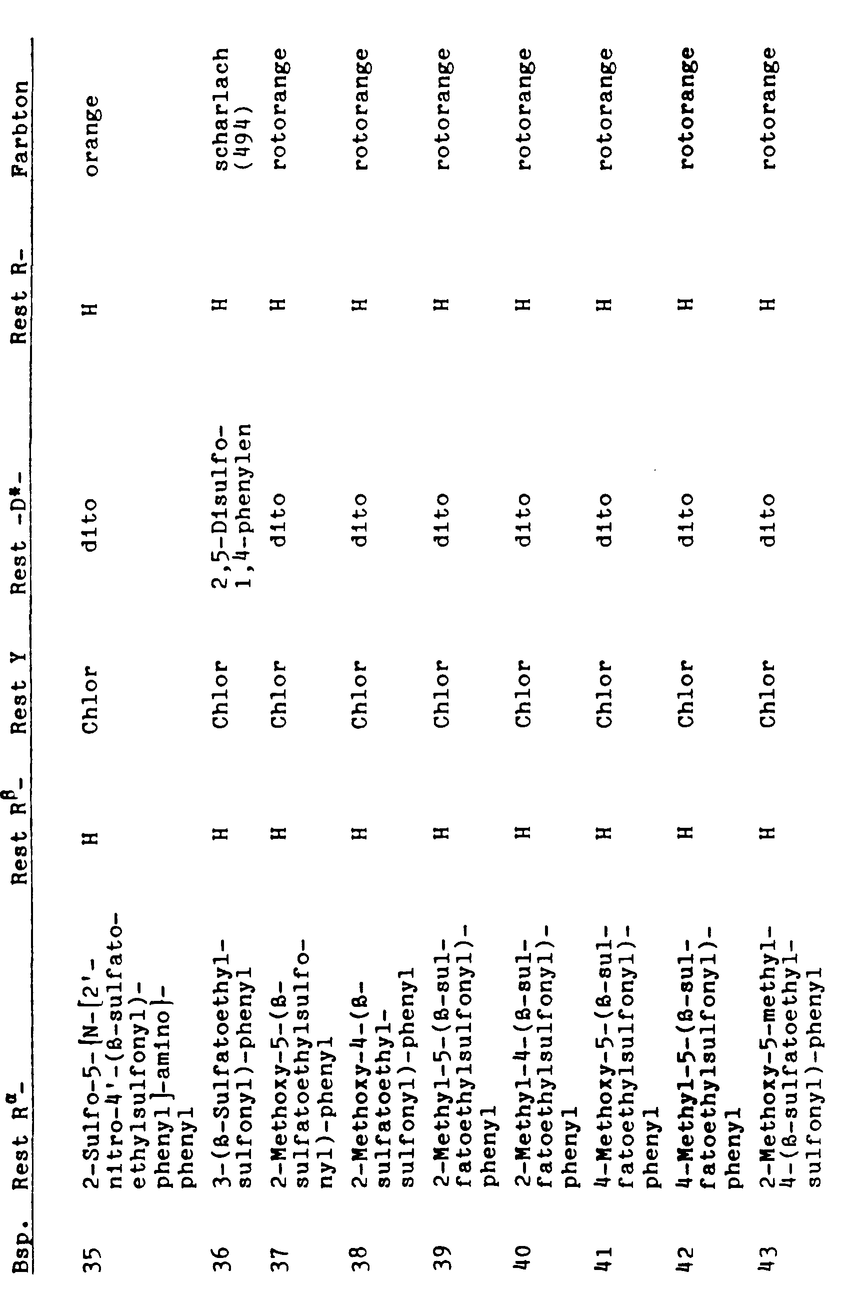

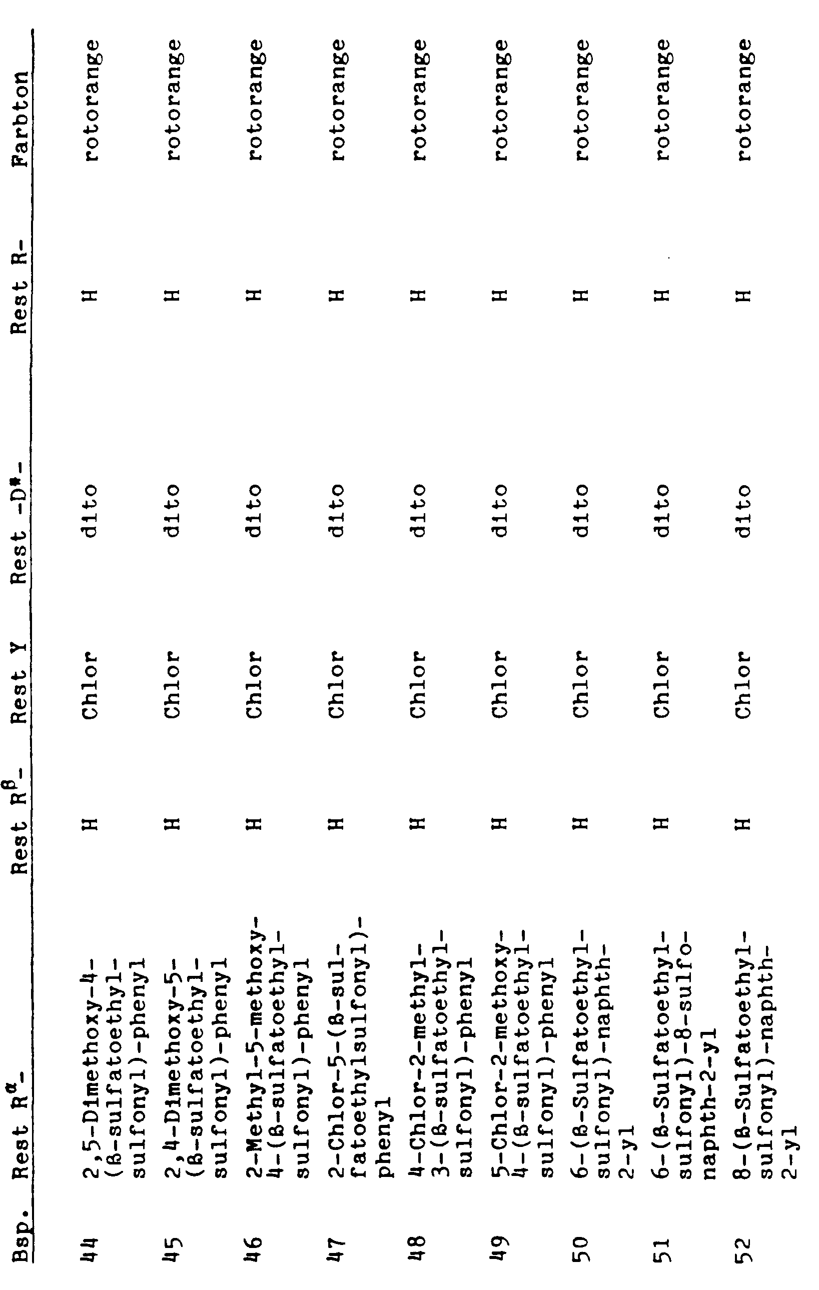

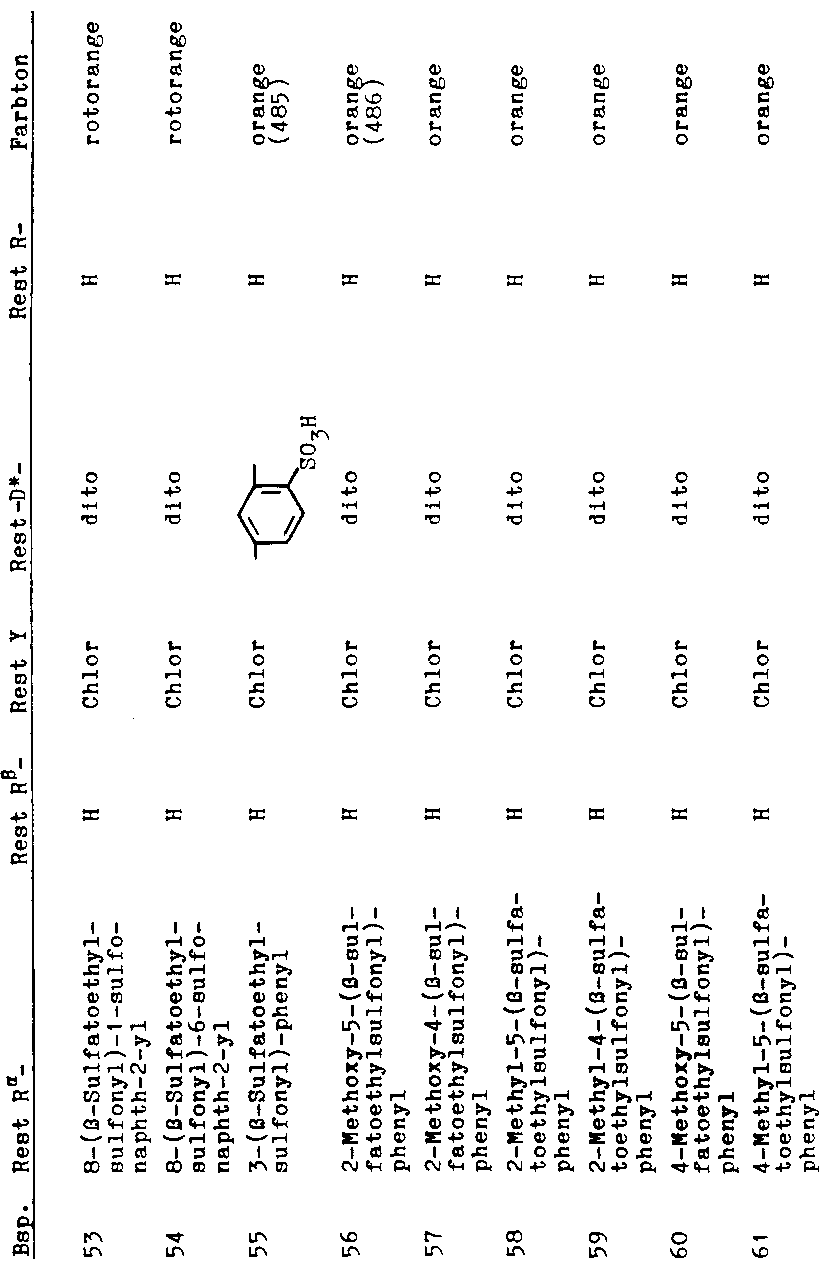

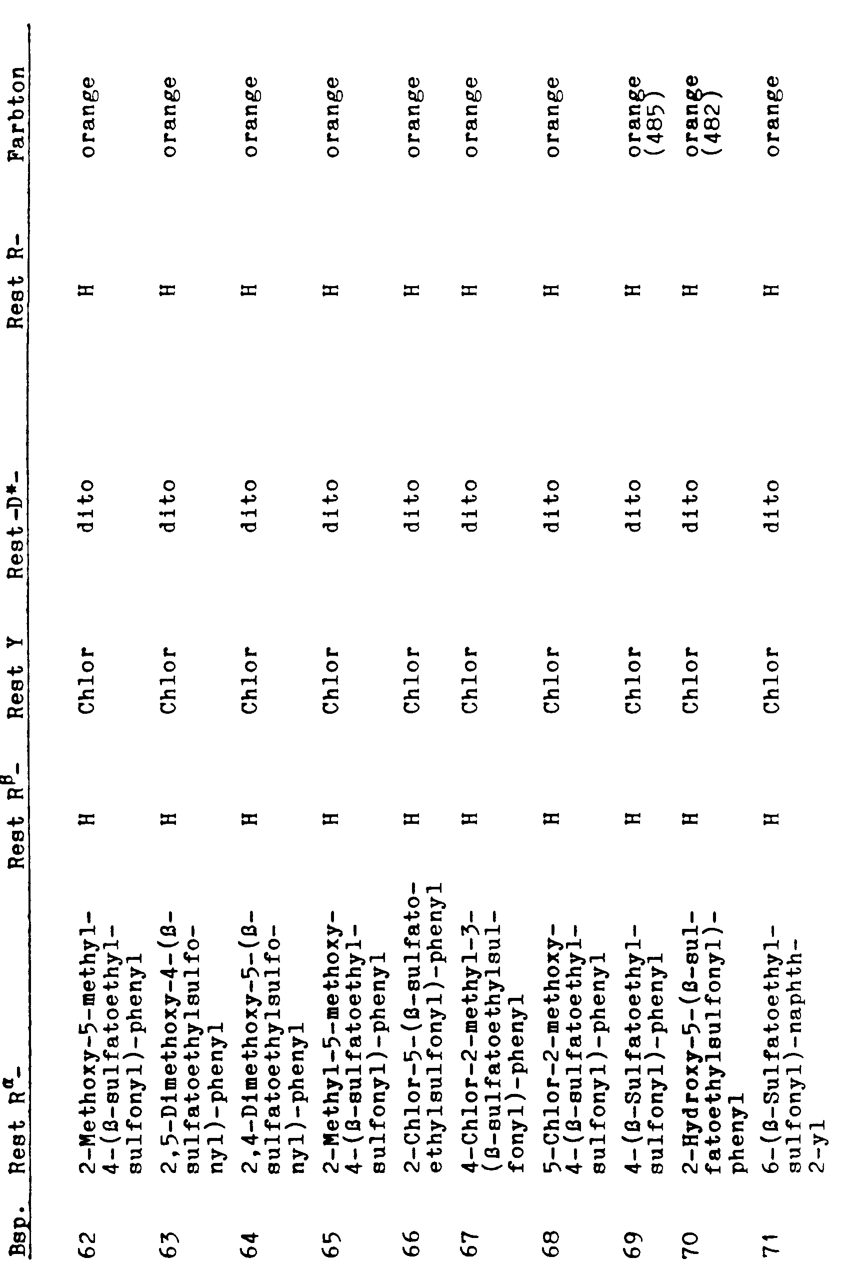

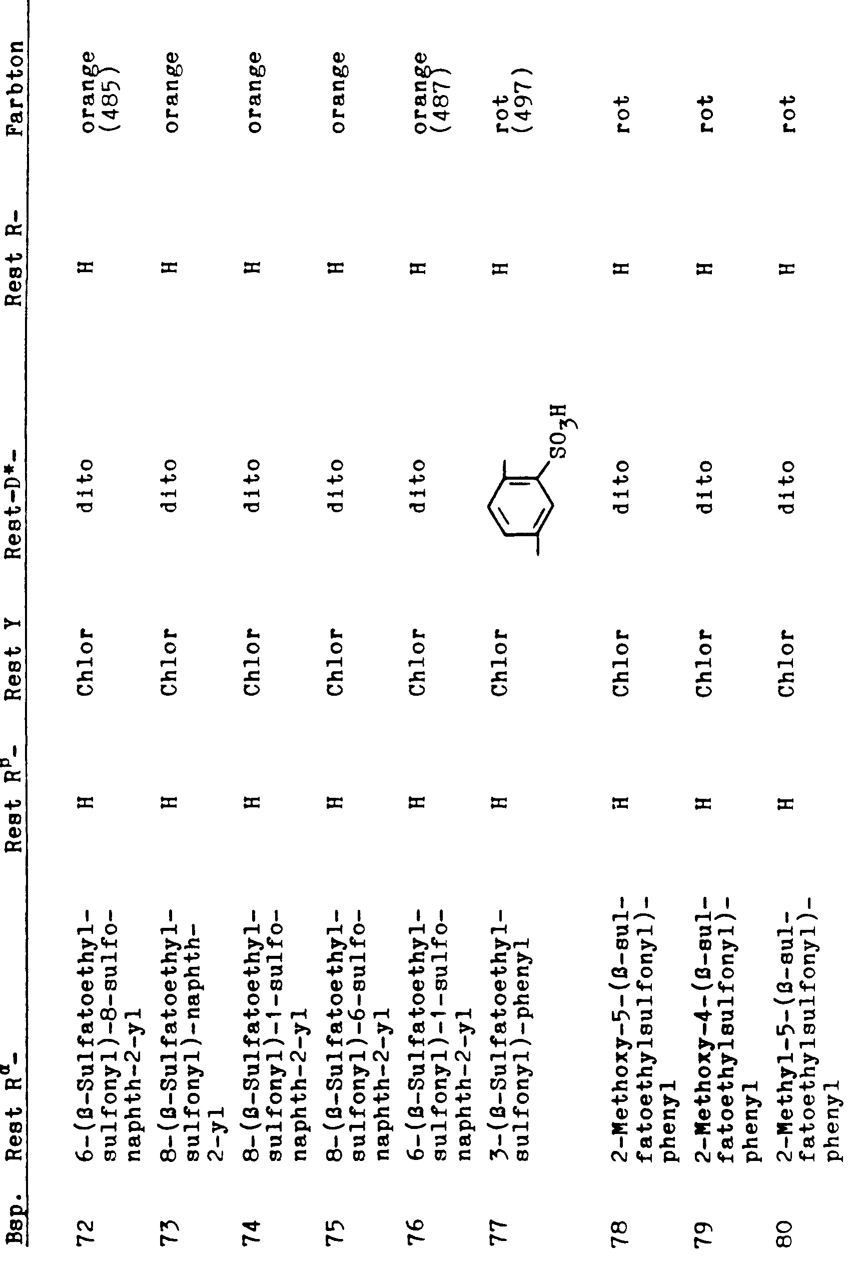

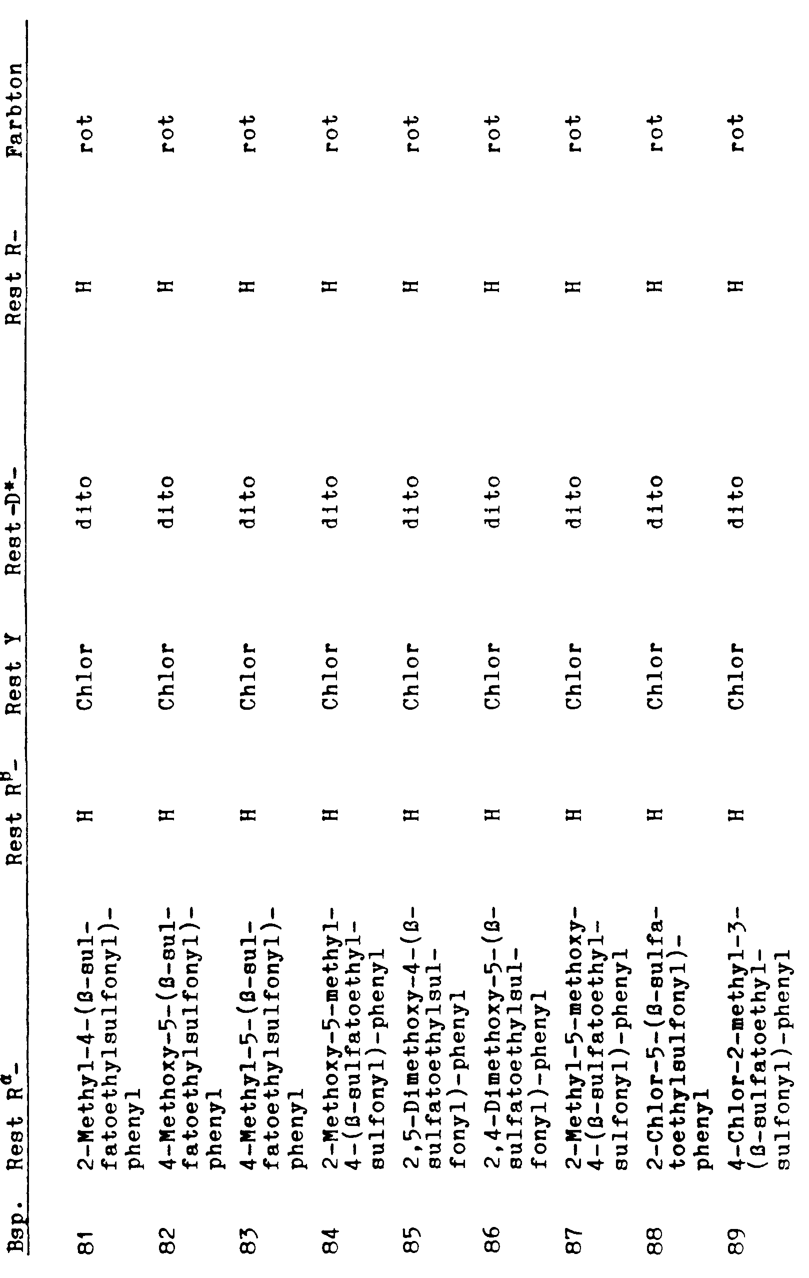

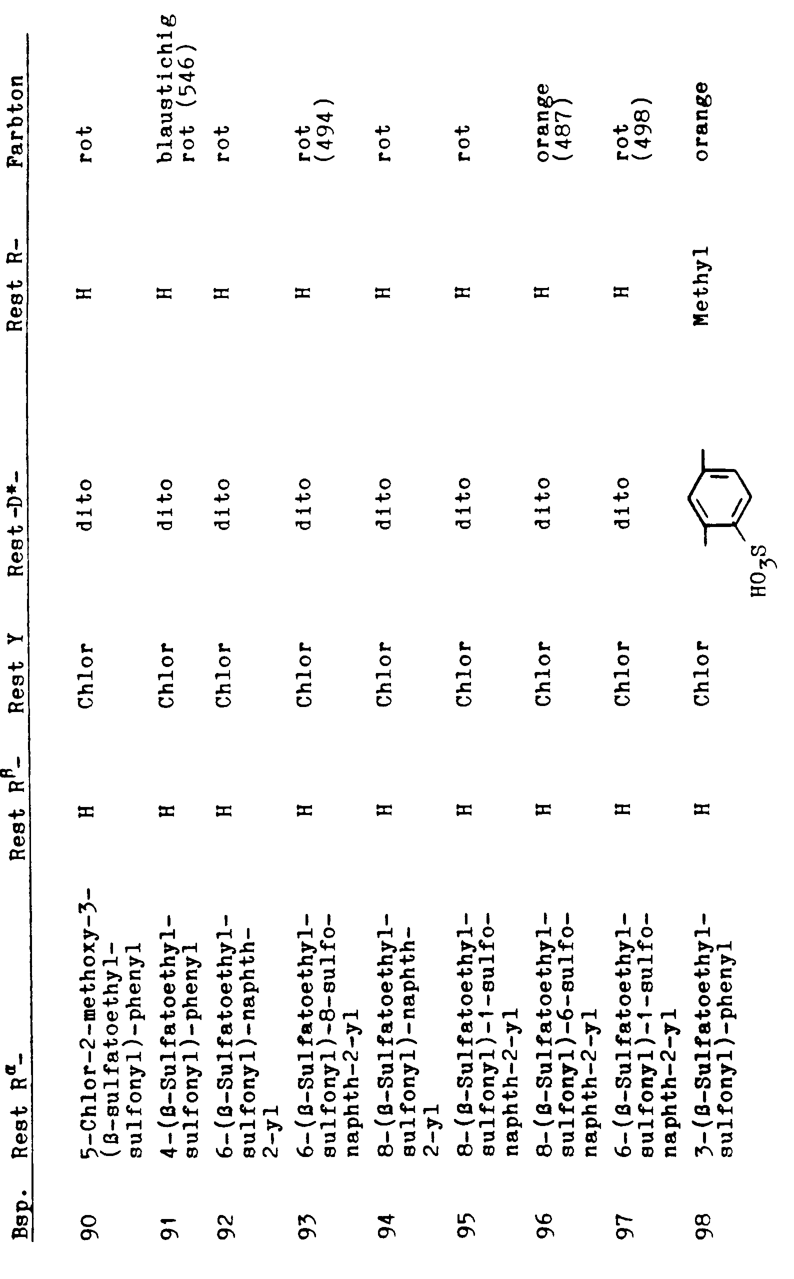

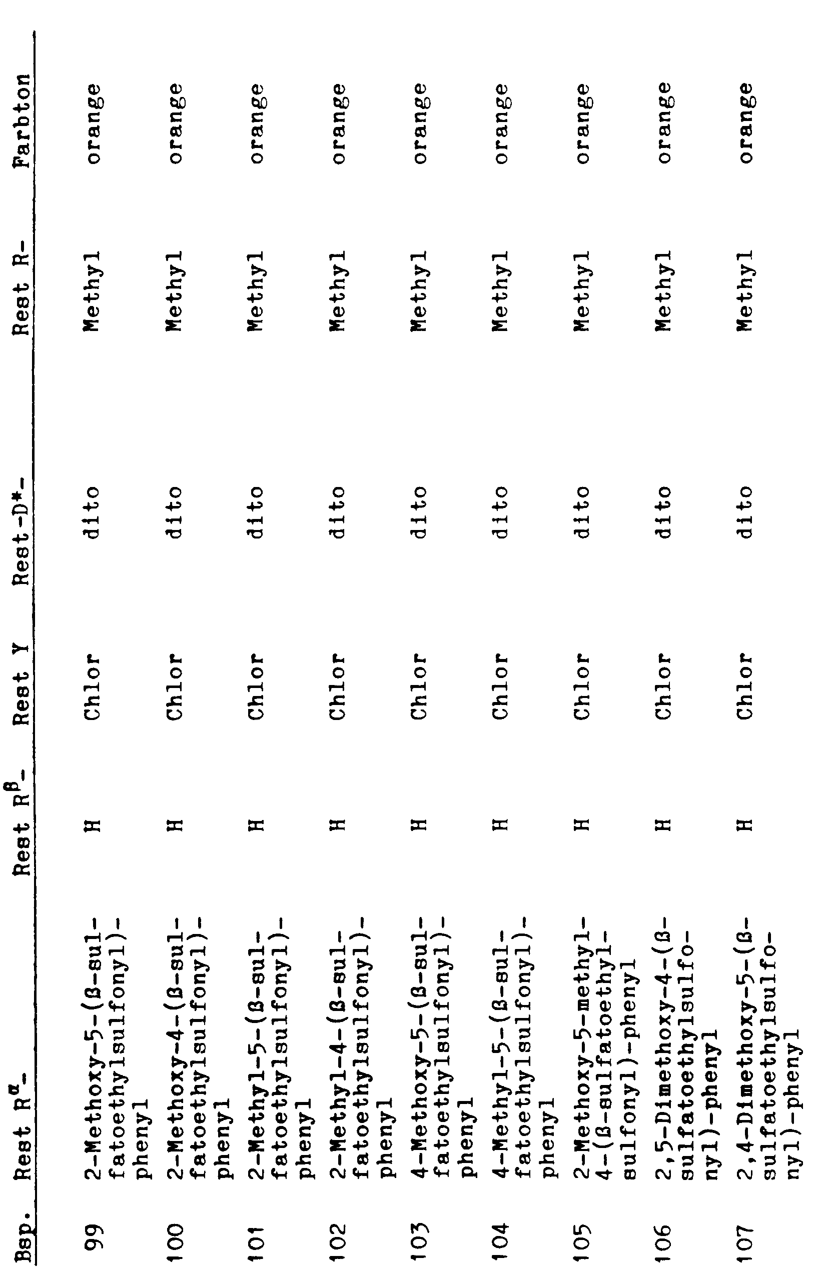

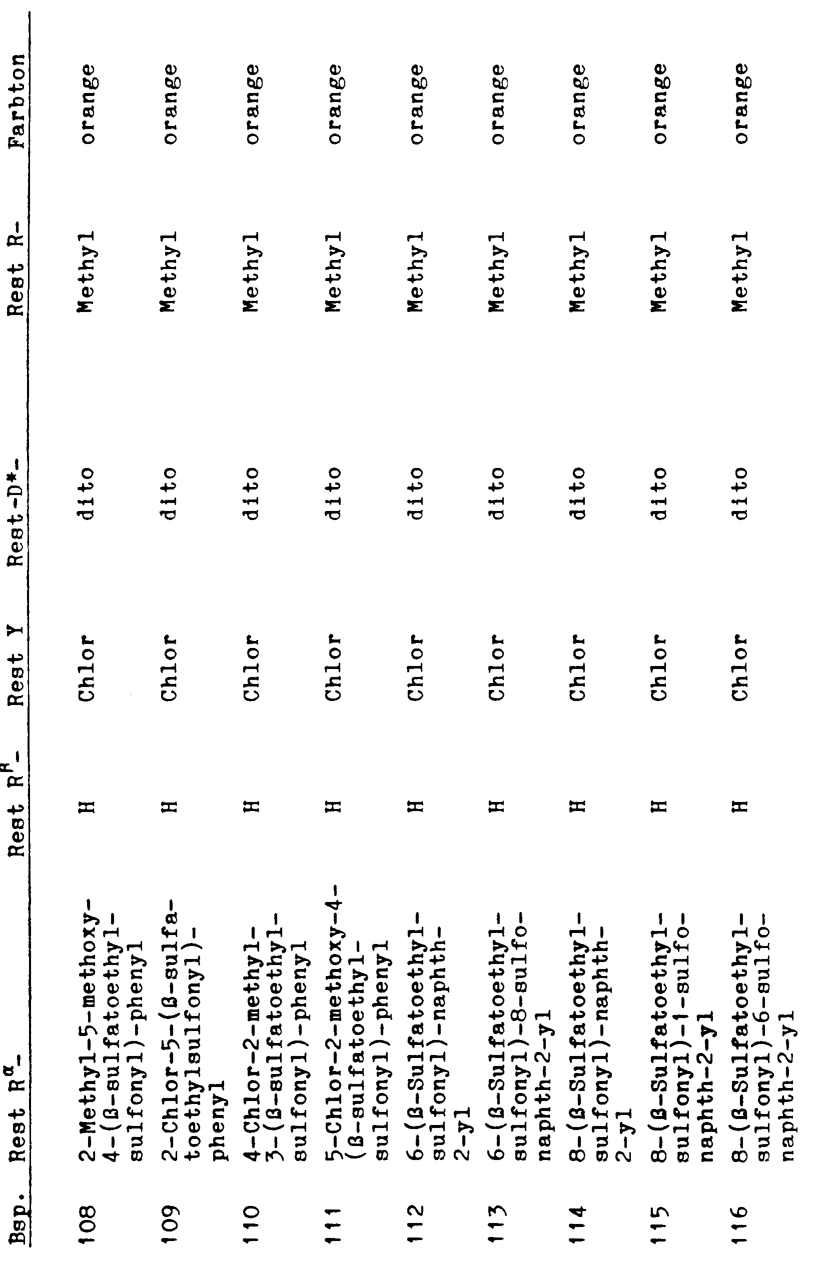

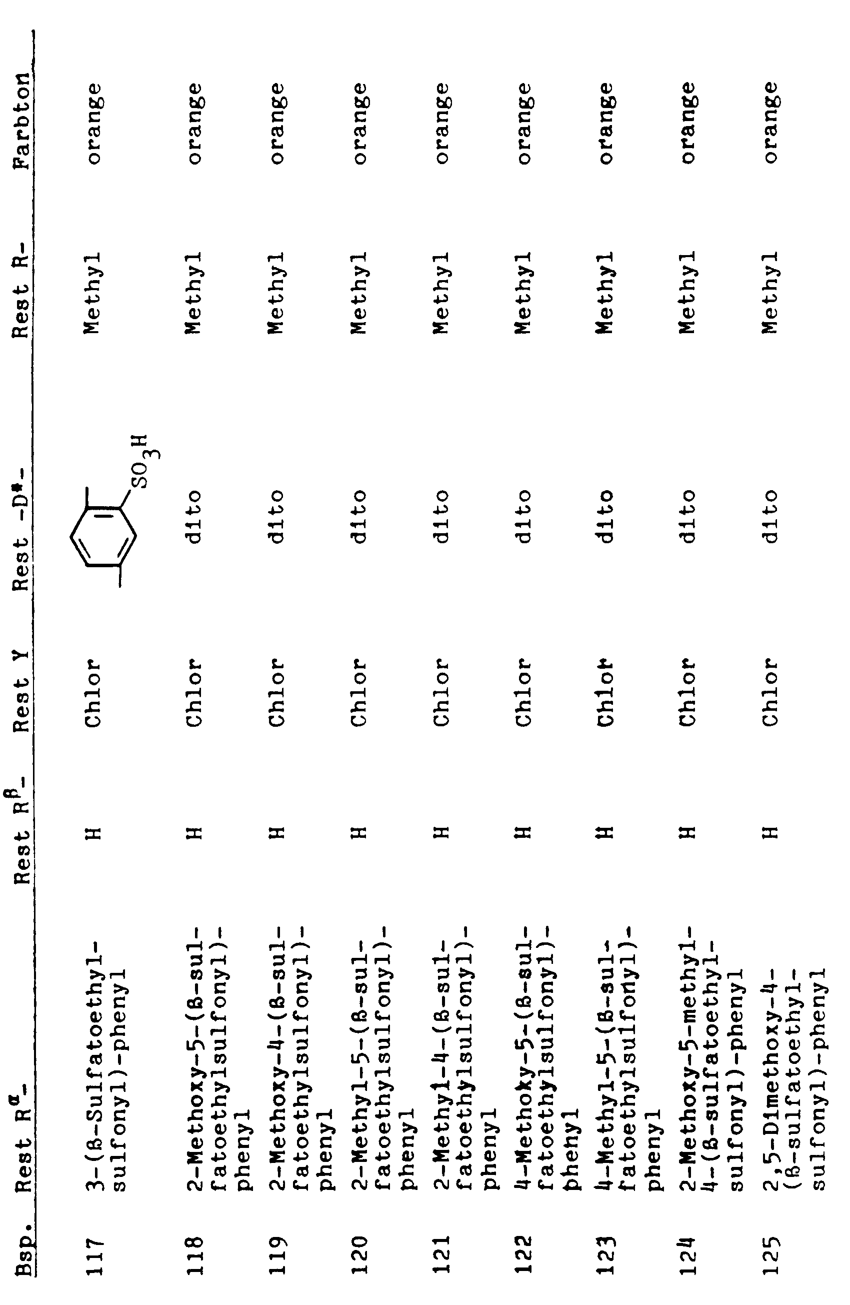

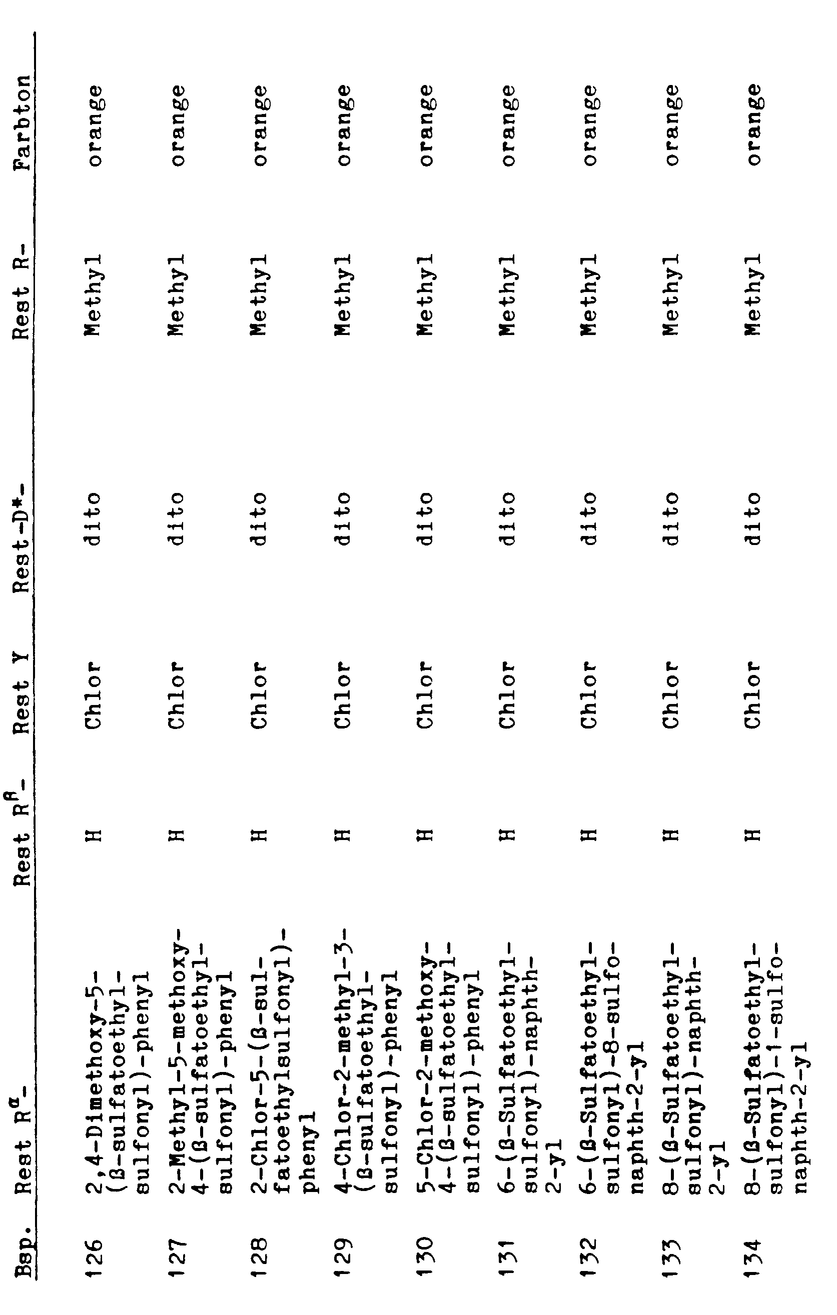

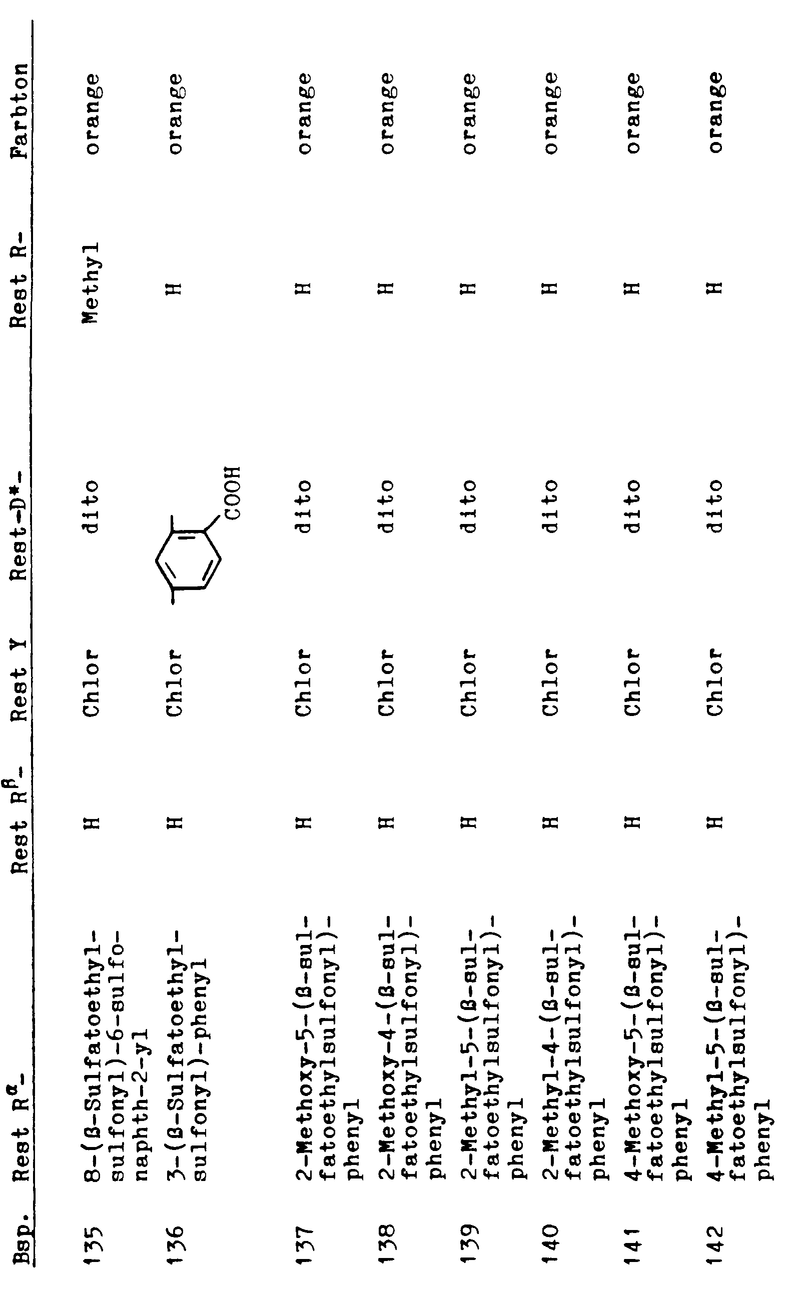

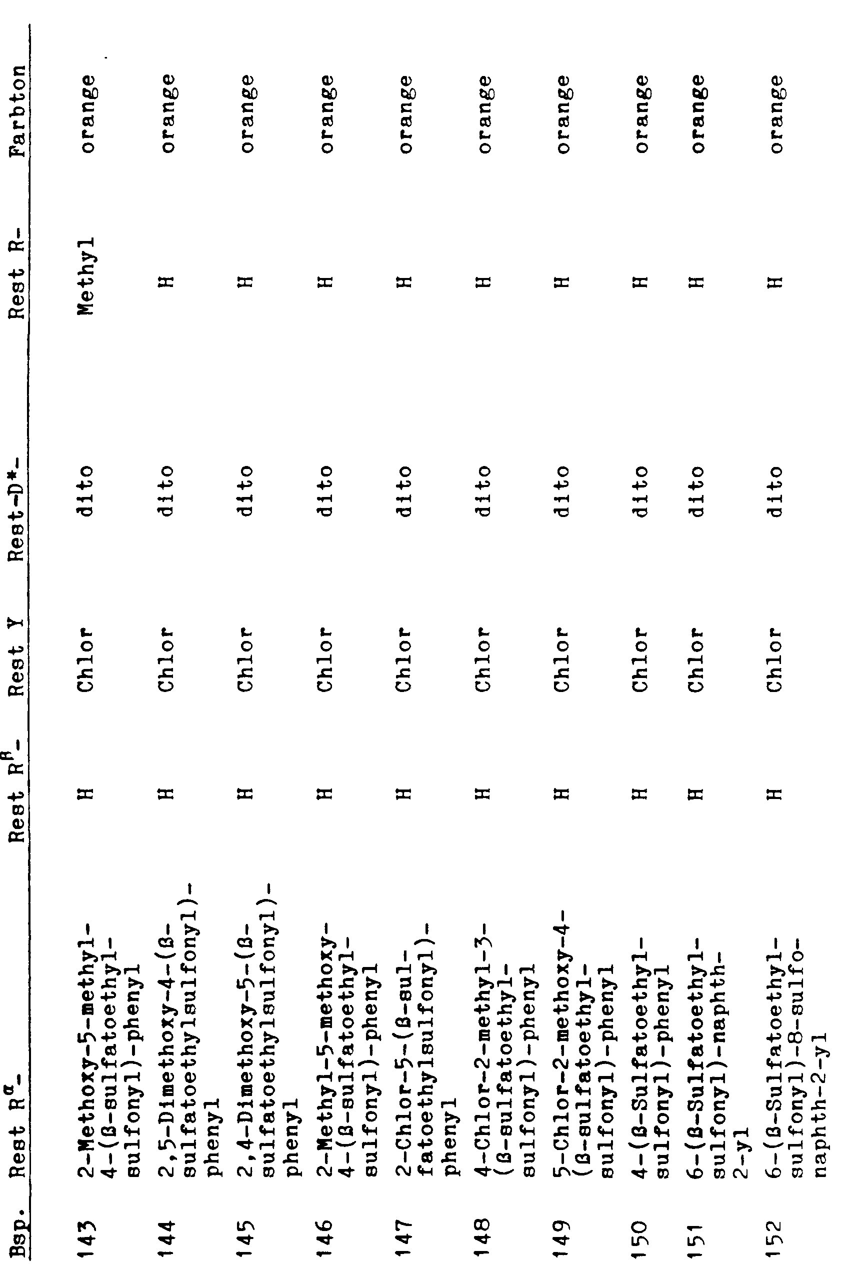

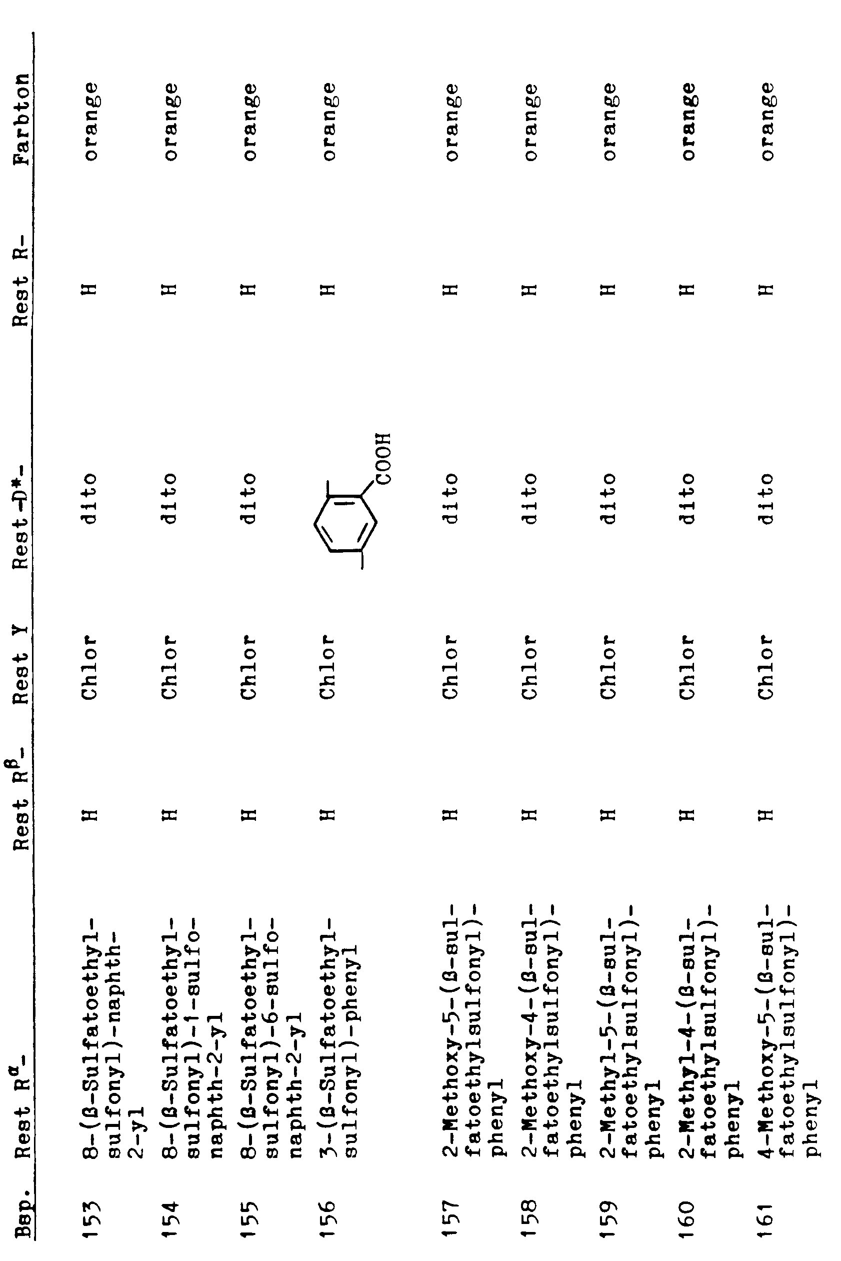

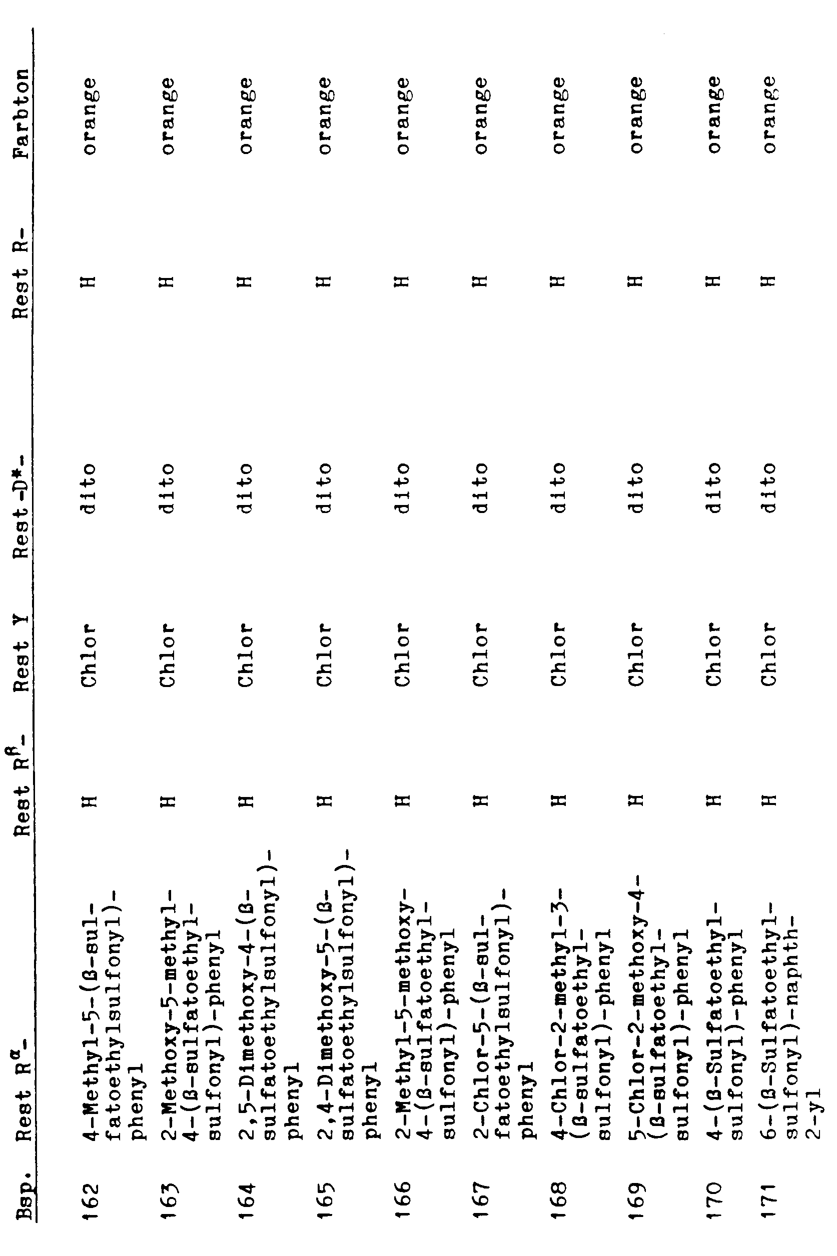

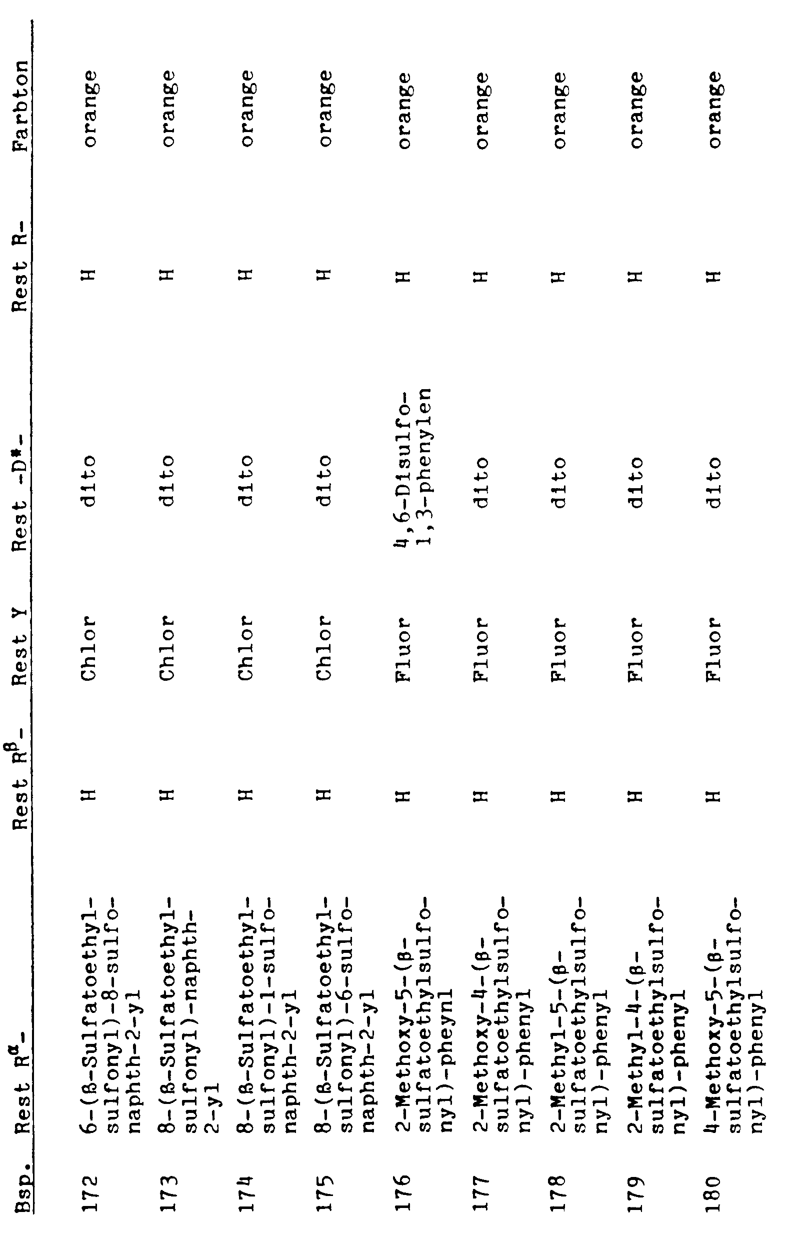

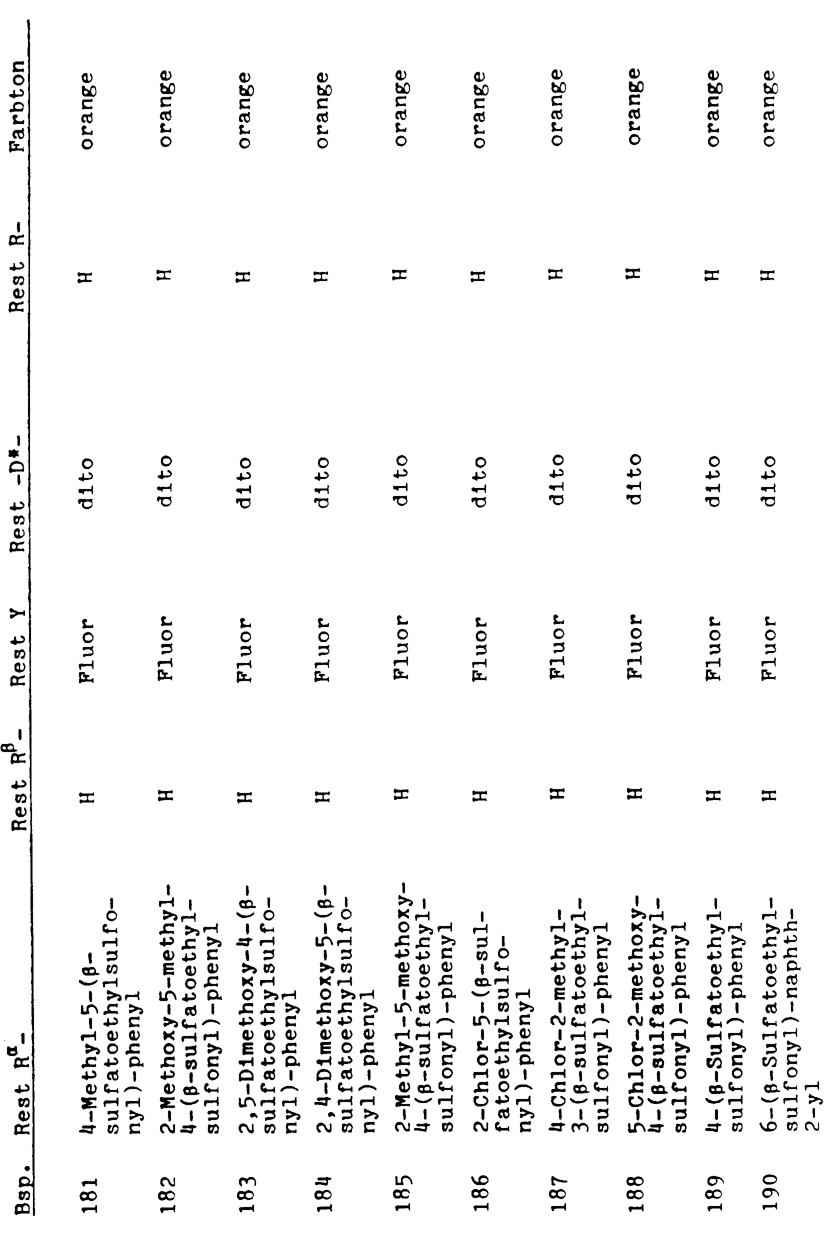

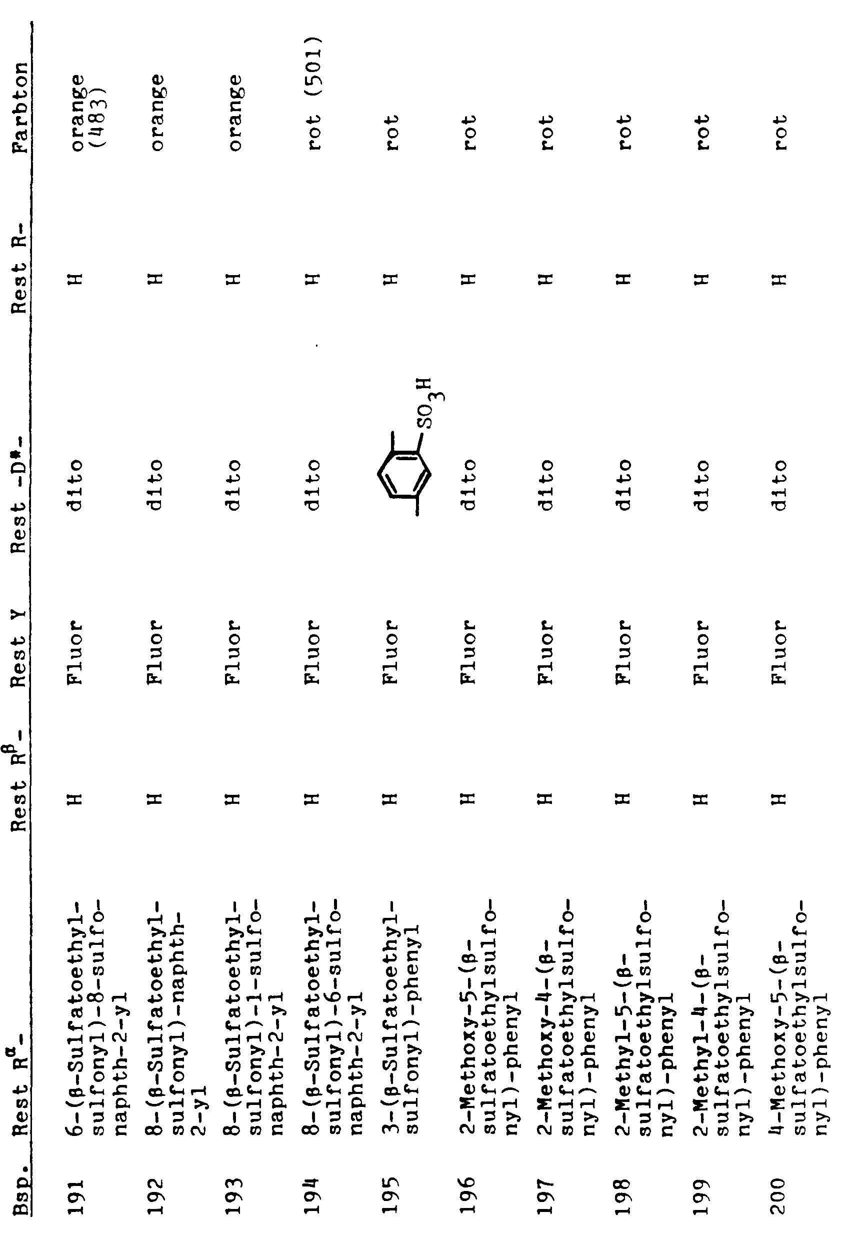

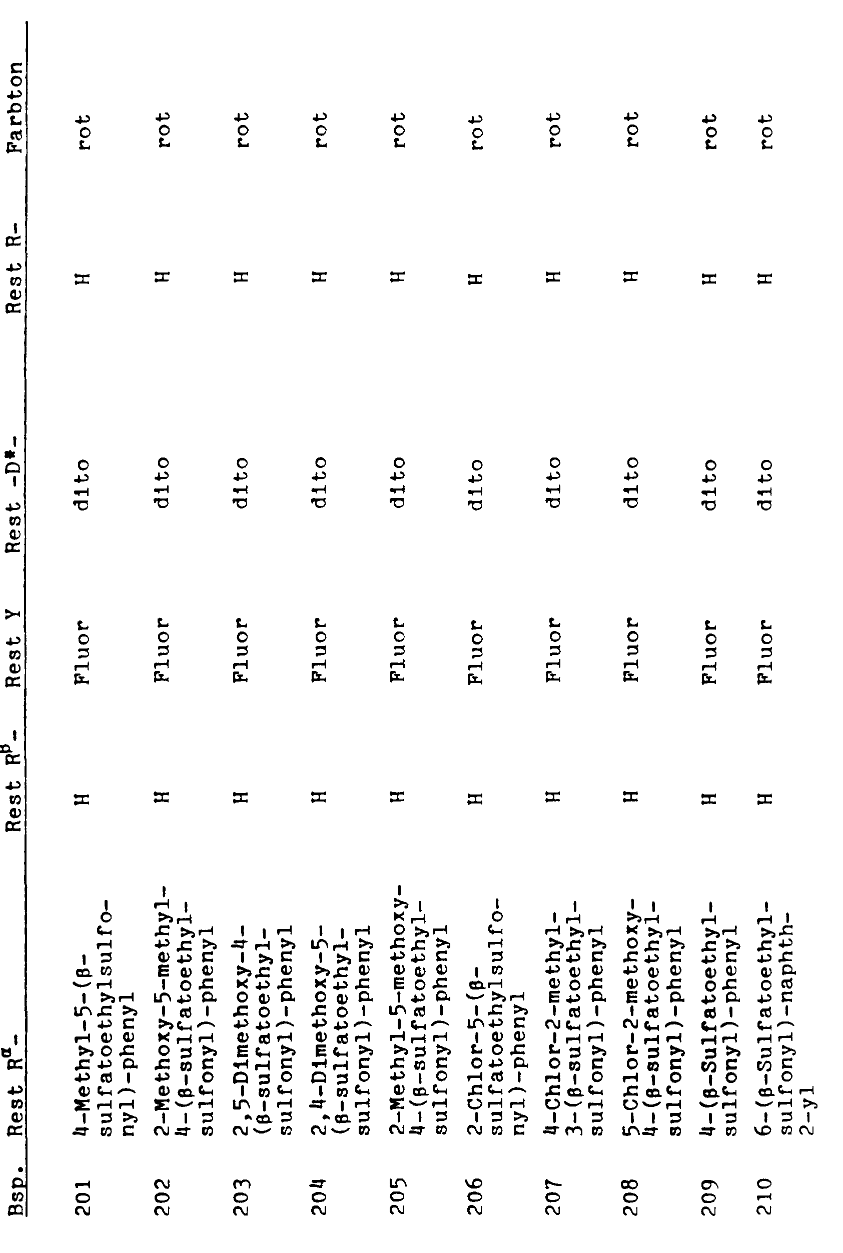

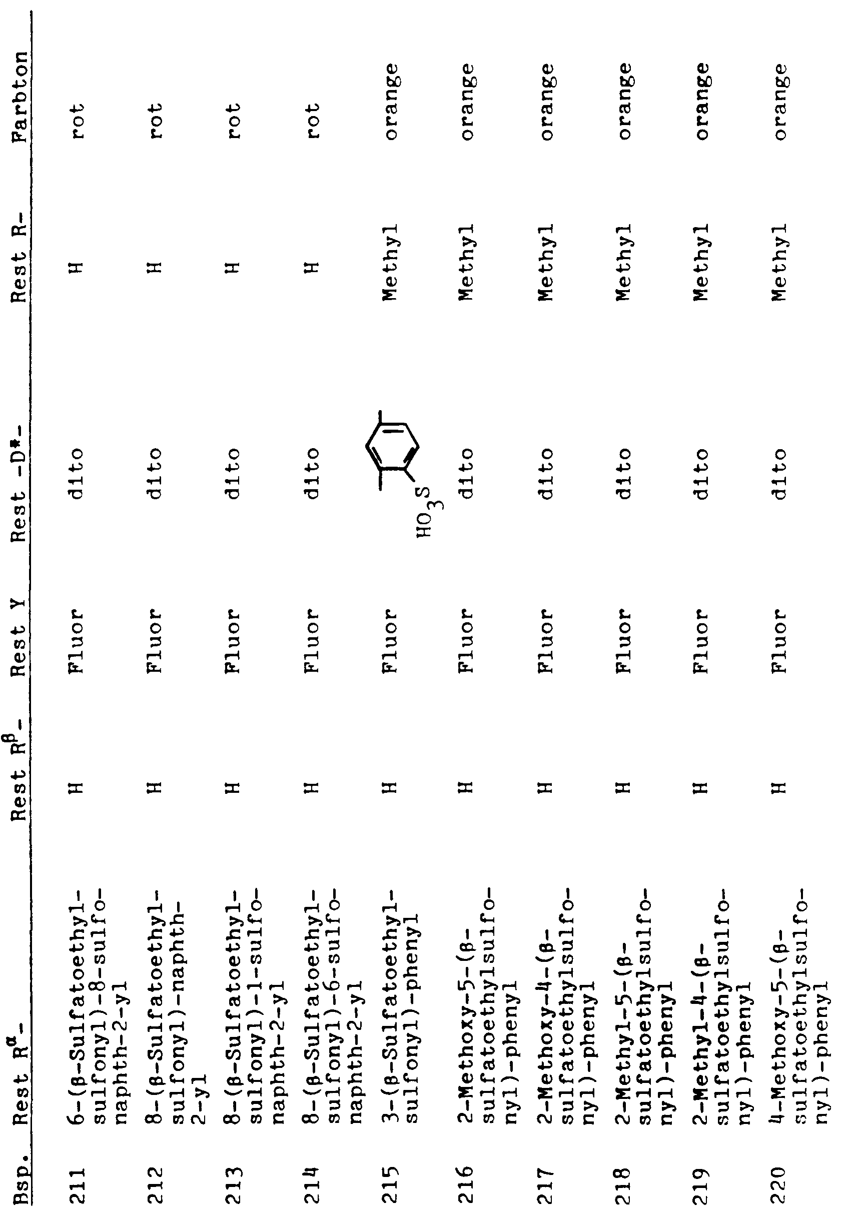

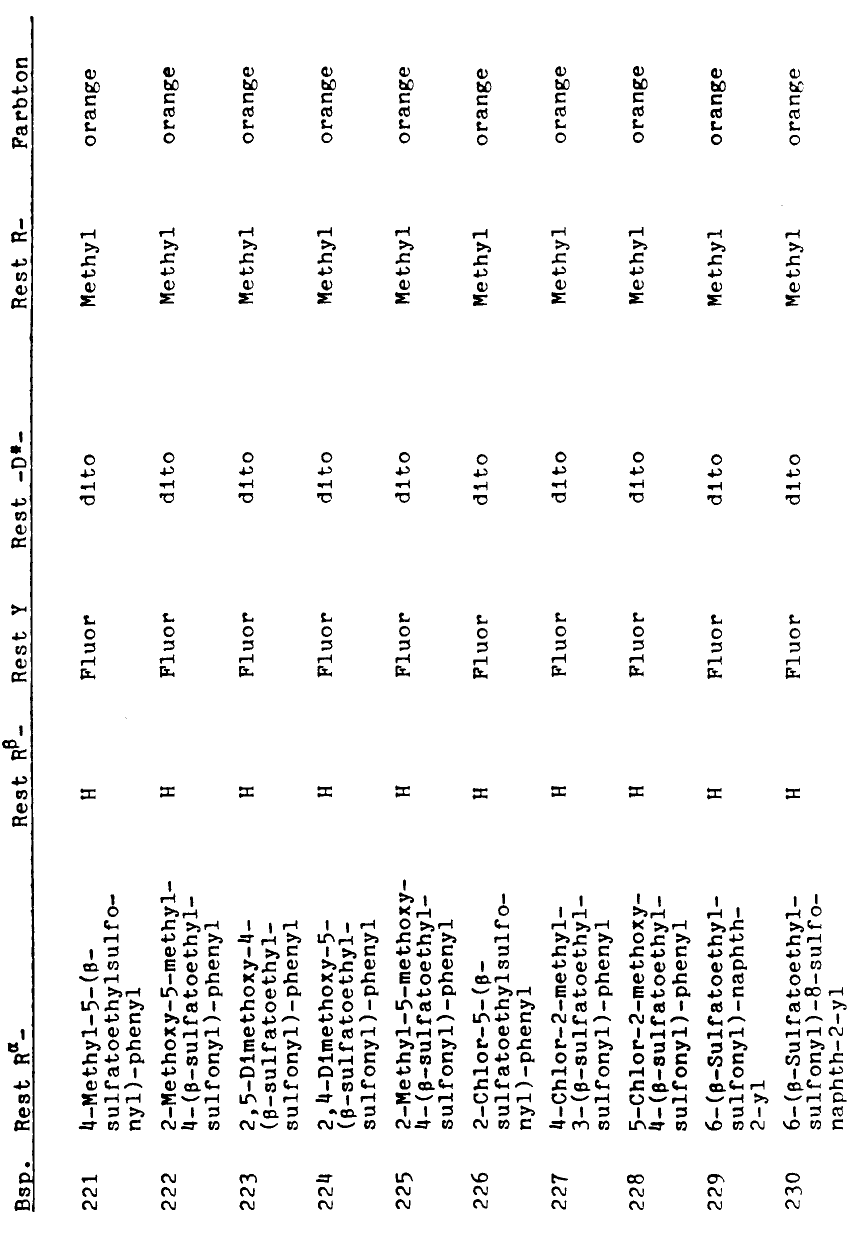

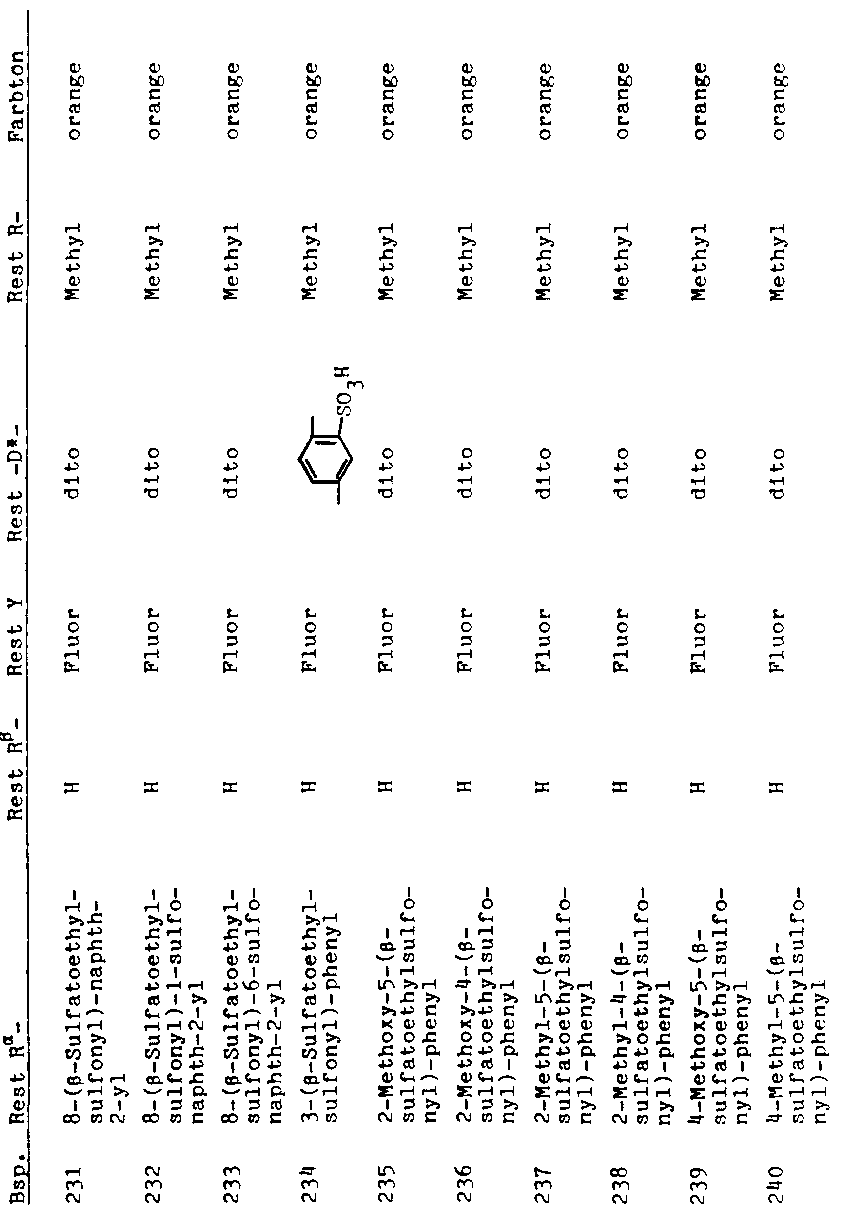

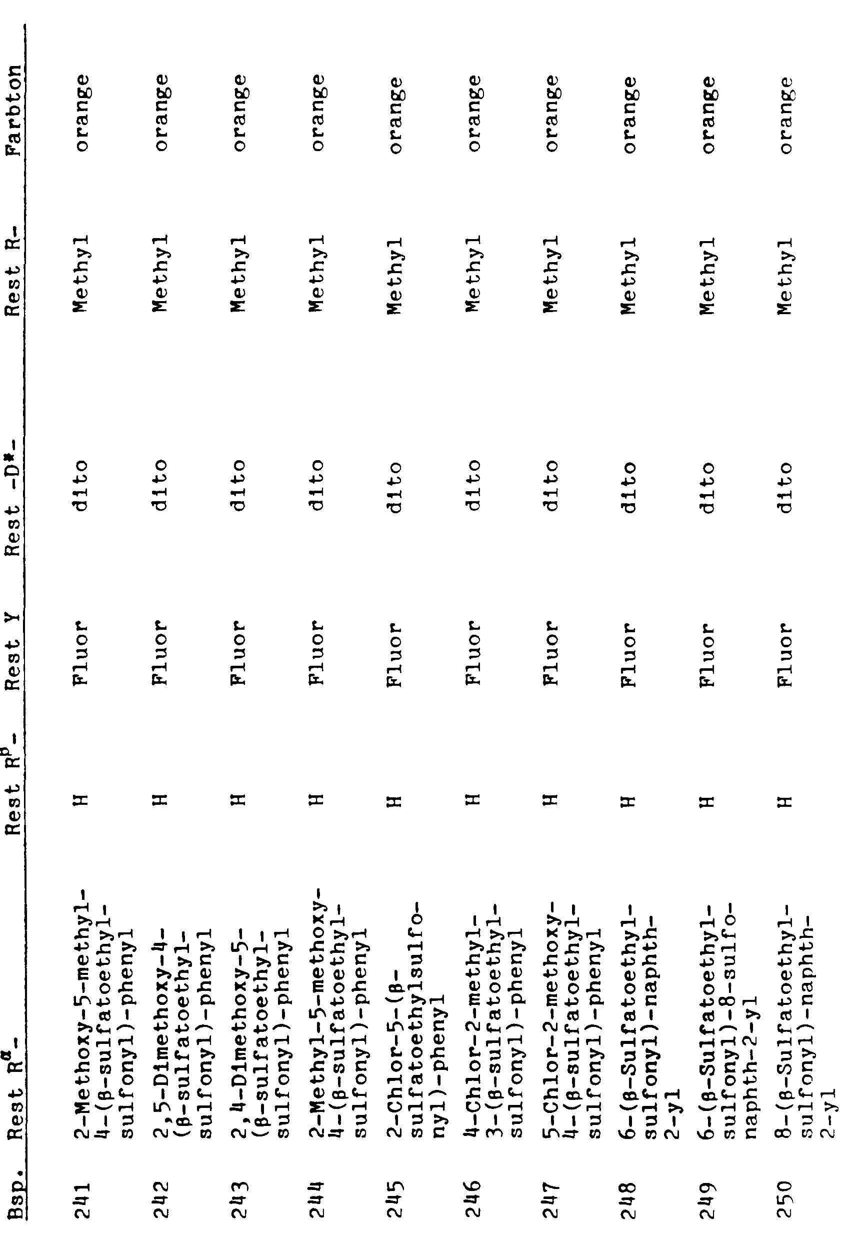

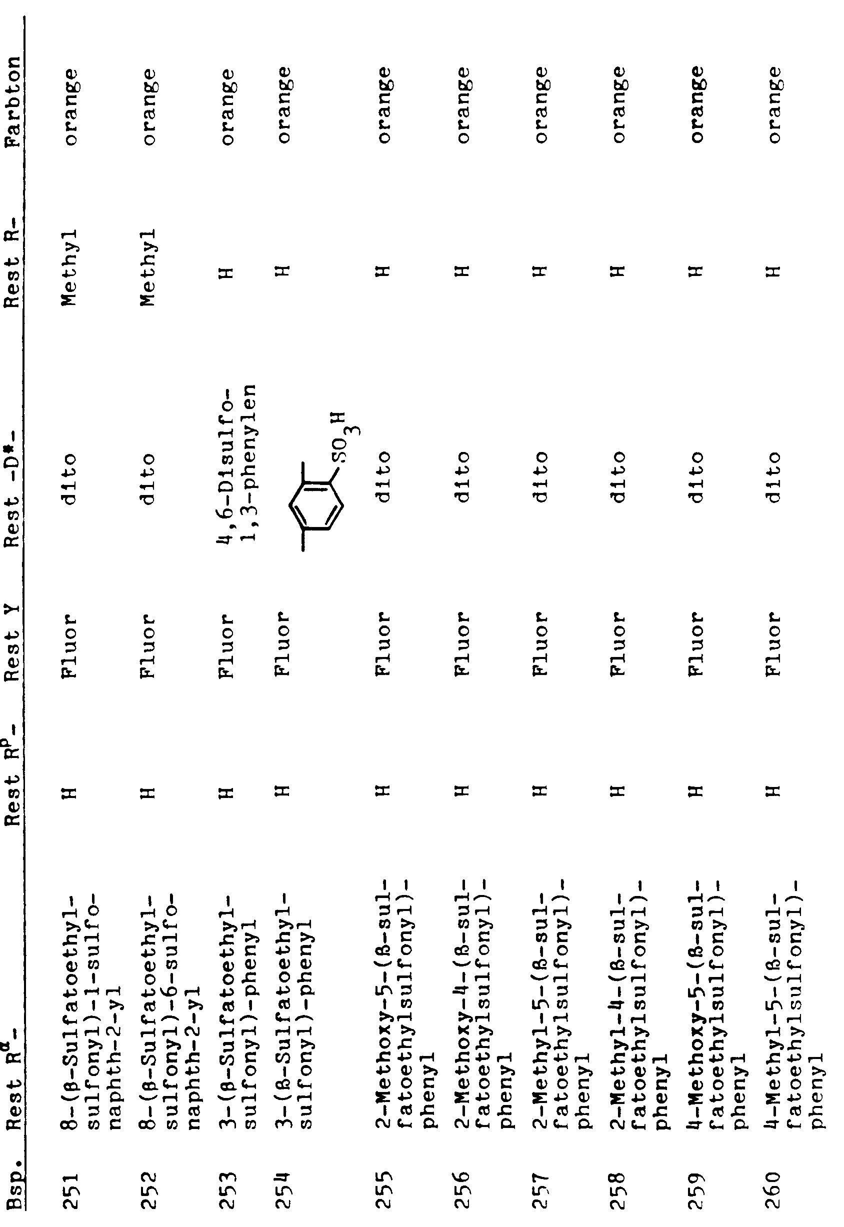

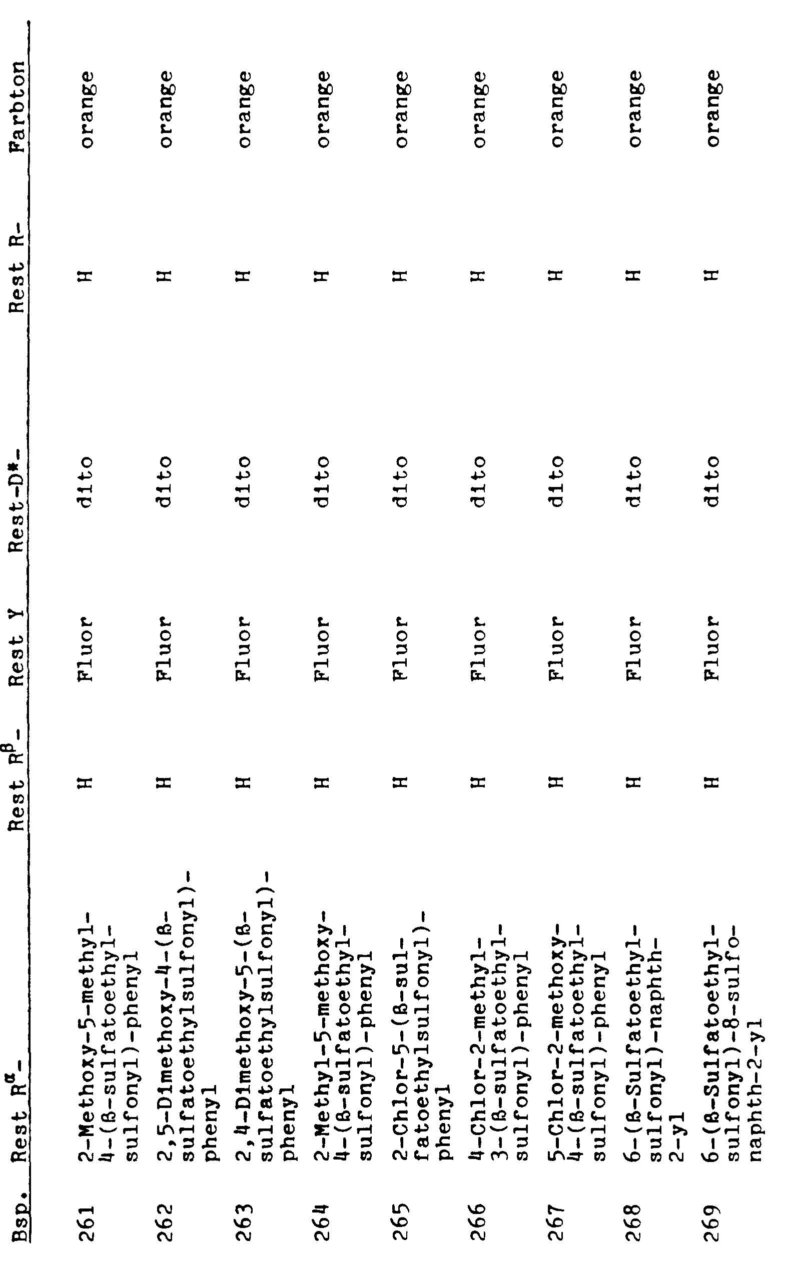

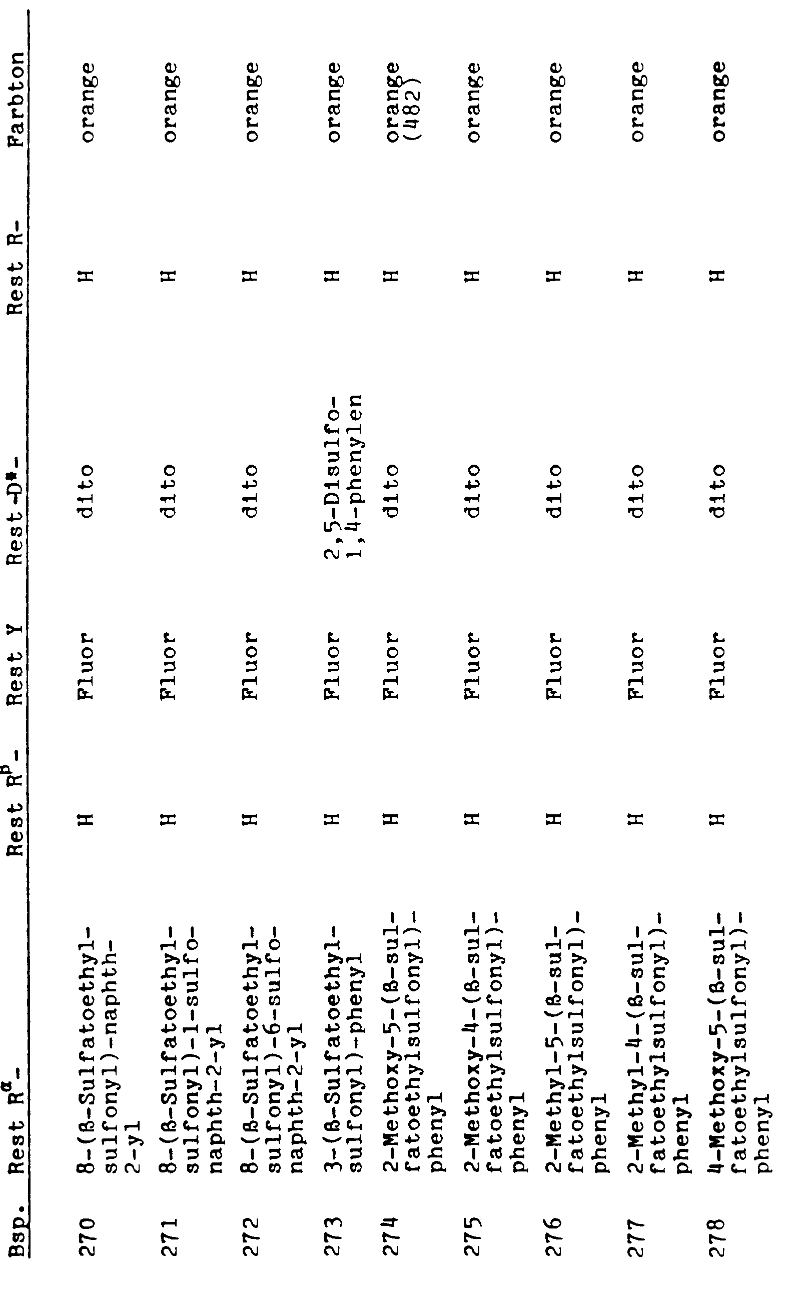

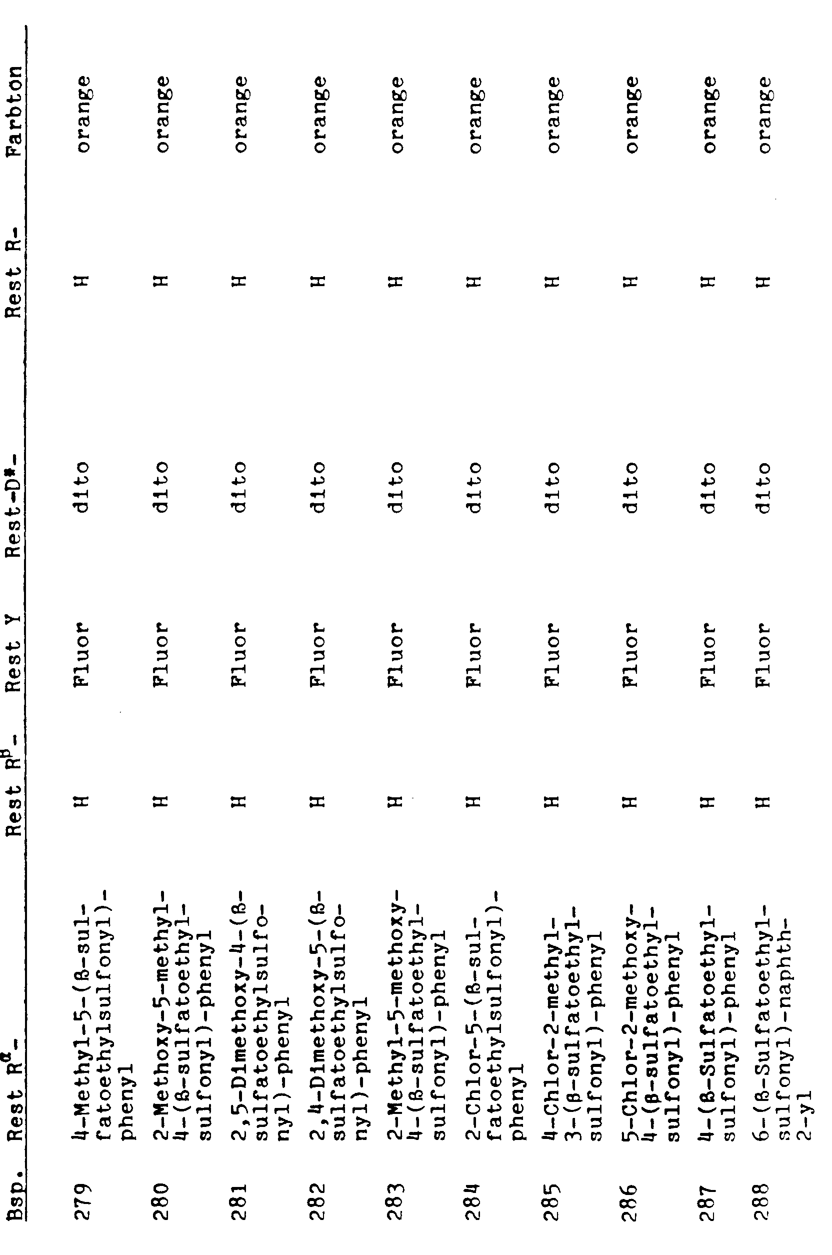

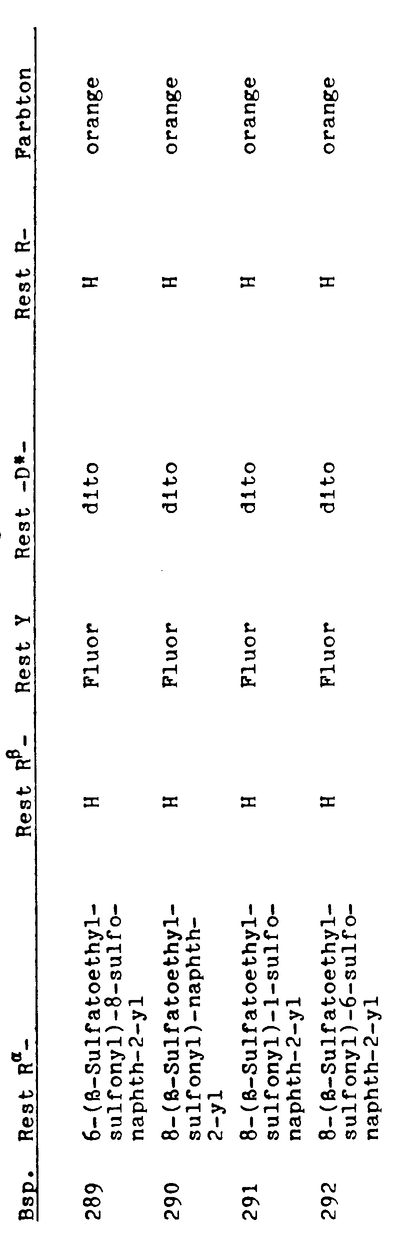

## Patentansprüche (Patentansprüche für folgende(n) Vertragsstaat(en) : BE, CH, DE, FR, GB, IT, LI)

1. Monoazoverbindung entsprechend der allgemeinen Formel (1) 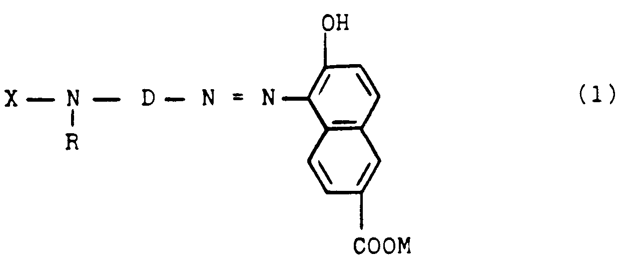 in welcher bedeuten:
D ist eine para- oder meta-Phenylengruppe, die durch 1 Carboxygruppe oder 1 oder 2 Sulfogruppen substituiert sein kann, oder ist eine Naphthylengruppe, die in 1 - oder 2 - Stellung die Azogruppe gebunden enthält und an die in 5 - oder 6 - Stellung die Gruppierung X-N(R)- gebunden ist und die durch 1 Carboxygruppe oder 1 oder 2 Sulfogruppen substituiert sein kann;
R ist ein Wasserstoffatom, eine Alkylgruppe von 1 bis 4 C-Atomen oder eine durch eine Hydroxy -, Cyano -, Carboxy -, Sulfo - , Sulfato- oder Phosphatogruppe oder Phenyl - oder Sulfophenylgruppe substituierte Alkylgruppe von 1 bis 4 C-Atomen;
M ist ein Wasserstoffatom oder ein Alkalimetall oder das Äquivalent eines zweiwertigen Metalls;
X ist eine Gruppe der allgemeinen Formel (2) 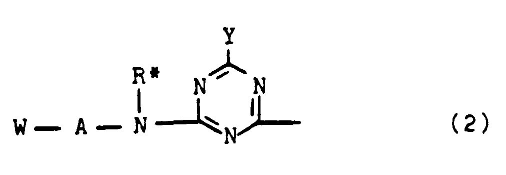 in welcher
Y ein Halogenatom ist,
R* ein Wasserstoffatom oder eine Alkylgruppe von 1 bis 4 C-Atomen ist oder eine Alkylgruppe von 1 bis 4 C - Atomen bedeutet, die durch eine Sulfo -, Carboxy - , Phosphate-, Sulfato - , Hydroxy - oder Cyanogruppe substituiert ist,
A eine direkte Bindung ist oder eine Gruppe der Formel (3a), (3b) oder (3c) 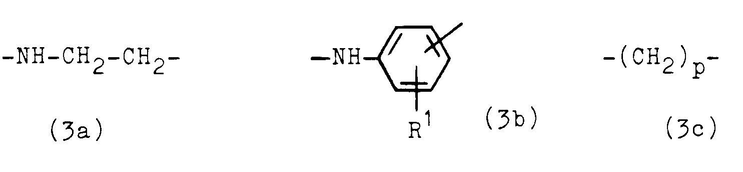 in welchen
R¹ ein Wasserstoffatom oder eine Sulfo - oder Carboxygruppe ist, die freie Bindung im Benzolkern von Formel (3b) in meta-Stellung oder bevorzugt in paraStellung zur Gruppe - NH - gebunden ist und
p die Zahl 1, 2 oder 3 bedeutet, und
W eine Gruppe der allgemeinen Formel (4a) oder (4b) 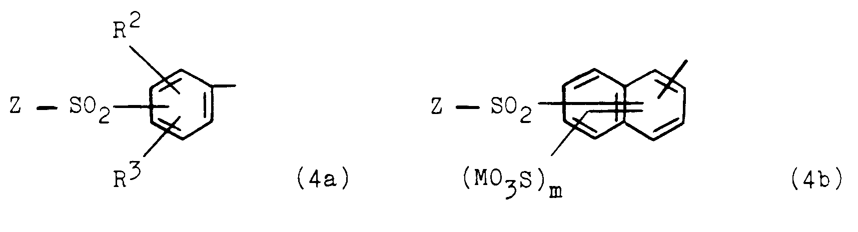 ist, in welchen
R² ein Wasserstoffatom, eine Alkylgruppe von 1 bis 4 C-Atomen, eine Alkoxygruppe von 1 bis 4 C-Atomen, ein Chloratom, ein Bromatom, eine Hydroxygruppe oder eine Sulfo-, Carboxy- oder Nitrogruppe oder eine Alkylaminogruppe von 1 bis 4 C - Atomen oder eine im Alkylrest durch Hydroxy, Sulfato, Sulfo, Phosphato, Alkanoyloxy von 2 bis 5 C-Atomen oder durch carboxysubstituiertes Alkanoylamido von 1 bis 4 C-Atomen im Alkylenrest substituierte Alkylaminogruppe von 1 bis 4 C-Atomen ist,
R³ ein Wasserstoffatom oder Alkylgruppe von 1 bis 4 C-Atomen oder eine Alkoxygruppe von 1 bis 4 C-Atomen ist,
Z die Vinylgruppe bedeutet oder eine Ethylgruppe ist, die in β - Stellung durch einen Substituenten substituiert ist, der durch ein Alkali unter Bildung der Vinylgruppe eliminiert werden kann,
m für die Zahl Null, 1 oder 2 steht (wobei im Falle von m gleich Null diese Gruppe ein Wasserstoffatom bedeutet) und
M die obengenannte Bedeutung besitzt.

2. Verbindung nach Anspruch 1, dadurch gekennzeichnet, daß Y ein Chloratom ist.

3. Verbindung nach Anspruch 1 oder 2, dadurch gekennzeichnet, daß R die Methylgruppe oder bevorzugt ein Wasserstoffatom ist.

4. Verbindung nach einem oder mehreren der Ansprüche 1 bis 3, dadurch gekennzeichnet, daß D die meta- oder para - Phenylengruppe ist, die beide durch 1 oder 2 Sulfogruppen substituiert sind.

5. Verbindung nach Anspruch 3, dadurch gekennzeichnet, daß D eine Gruppe der allgemeinen Formel (3d) 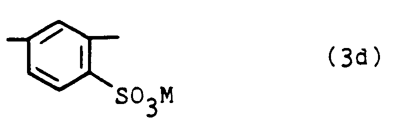 ist, in welcher M ein Wasserstoffatom oder ein Alkalimetall oder das Äquivalent eines zweiwertigen Metalls ist.

6. Verbindung nach einem oder mehreren der Ansprüche 1 bis 5, dadurch gekennzeichnet, daß A eine direkte Bindung ist.

7. Verbindung nach einem oder mehreren der Ansprüche 1 bis 6, dadurch gekennzeichnet, daß W für eine Gruppe der allgemeinen Formel (4a) 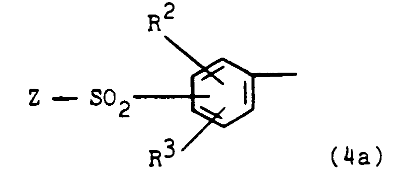 mit R², R³ und Z der in Anspruch 1 genannten Bedeutung steht.

8. Verbindung nach einem oder mehreren der Ansprüche 1 bis 7, dadurch gekennzeichnet, daß Z für die Vinylgruppe oder bevorzugt für die ß - Sulfatoethyl - Gruppe steht.

9. Verbindung nach Anspruch 1 entsprechend der allgemeinen Formel (1 a) 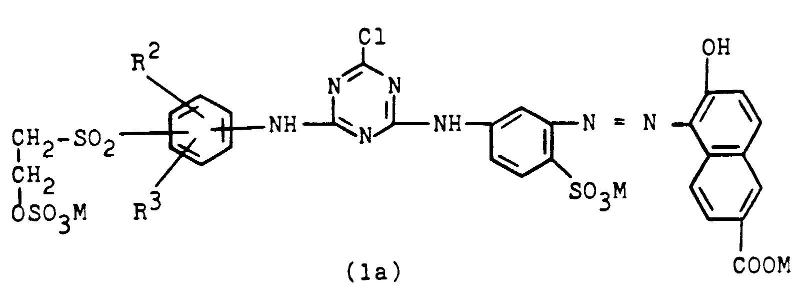 in welcher M, R² und R³ die in Anspruch 1 genannten Bedeutungen haben und β - Sulfatoethylsulfonyl - Gruppe in meta - oder para - Stellung zur Aminogruppe an den Benzolkern gebunden ist.

10. Verbindung nach einem oder mehreren der Ansprüche 1 bis 9, dadurch gekennzeichnet, daß R² ein Wasserstoffatom oder eine Methyl - , Methoxy - oder Ethoxygruppe oder ein Chloratom ist und R³ ein Wasserstoffatom oder eine Methoxy - oder Ethoxygruppe bedeutet.

11. Verbindung nach einem oder mehreren der Ansprüche 1 bis 10, dadurch gekennzeichnet, daß M ein Wasserstoffatom oder ein Alkalimetall ist.

12. Verfahren zur Herstellung einer Verbindung entsprechend der allgemeinen Formel (1) gemäß Anspruch 1, dadurch gekennzeichnet, daß man
a) eine Verbindung der allgemeinen Formel (5) 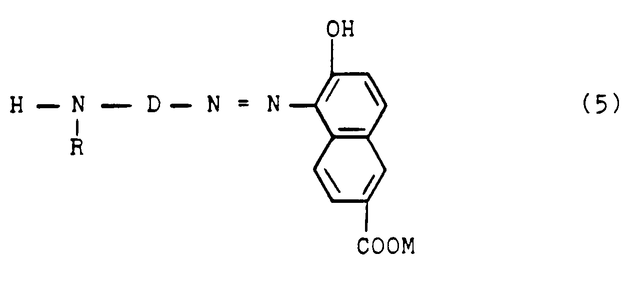 in welcher R, D und M die in Anspruch 1 genannten Bedeutungen haben, mit einer Verbindung der allgemeinen Formel (6) 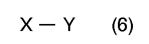 in welcher X und Y die in Anspruch 1 genannten Bedeutungen besitzen, wobei der Formelrest Z in X hier einen Rest Z' bedeutet, der eine ß - Hydroxyethyl - Gruppe darstellt oder die Bedeutung von Z besitzt, umsetzt oder daß man
b) eine aromatische Aminoverbindung der allgemeinen Formel (7) 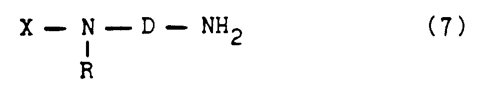 in welcher X, R und D die in Anspruch 1 genannten Bedeutungen haben, wobei der Formelrest Z in X hier einen Rest Z' mit der oben genannten Bedeutung darstellt, diazotiert und mit der 2 - Naphthol-6-carbonsäure oder einem Salz dieser Carbonsäure kuppelt, oder daß man
c) eine Verbindung der allgemeinen Formel (8) 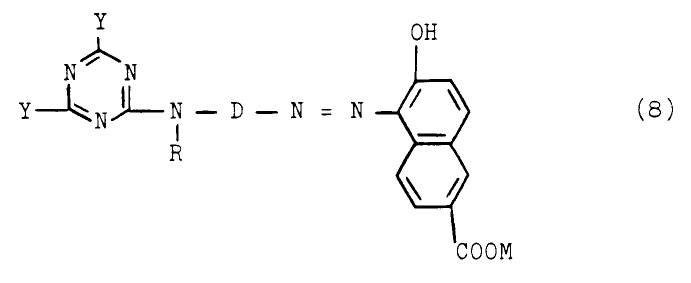 in welcher beide Y sowie R, D und M die in Anspruch 1 genannten Bedeutungen haben, mit einer Aminoverbindung der allgemeinen Formel (9) 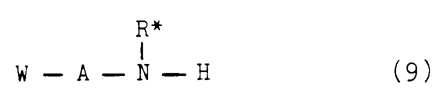 in welcher W, A und R^{*} die in Anspruch 1 genannten Bedeutungen haben, wobei der Formelrest Z in W hier einen Rest Z' der obengenannten Bedeutung darstellt, umsetzt, wobei man im Falle der Verwendung von Ausgangsverbindungen, in welchen Z' für die ß-Hydroxyethyl - Gruppe steht, diese ß - Hydroxyethyl - Gruppe in der erhaltenen Verbindung entspre - chend der Formel (1) mit Z hier der ß - Hydroxyethyl - Gruppe mit Hilfe eines Veresterungsmittels und Acylierungsmittels in eine Ethylgruppe mit einer Estergruppe oder Acyloxygruppe in β - Stellung überführt.

13. Verwendung einer Verbindung entsprechend der Formel (1) gemäß einem oder mehreren der Ansprü - che 1 bis 12 zum Färben von hydroxy - und/oder carbonamidgruppenhaltigem Material, insbesondere Fasermaterial.

14. Verfahren zum Färben von hydroxy - und/oder carbonamidgruppenhaltigem Material, insbesondere Fasermaterial, bei welchem man einen Farbstoff auf das Material aufbringt oder in das Material einbringt und ihn mittels Wärme und/oder mittels einer säurebindenden Verbindung fixiert, dadurch gekennzeichnet, daß man als Farbstoff eine Verbindung entsprechend der Formel (1) gemäß einem oder mehreren der Ansprüche 1 bis 12 einsetzt.

## Patentansprüche (Patentansprüche für folgende(n) Vertragsstaat(en) : ES)

1. Verfahren zur Herstellung einer Monoazoverbindung entsprechend der allgemeinen Formel (1) 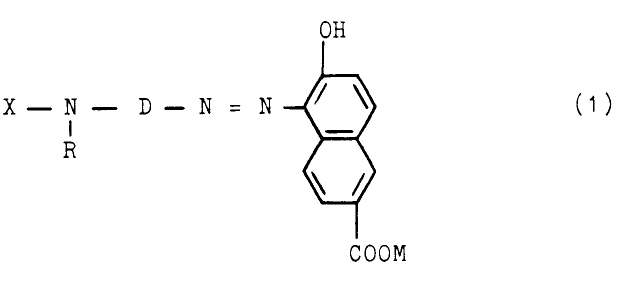 in welcher bedeuten:
D ist eine para- oder meta-Phenylengruppe, die durch 1 Carboxygruppe oder 1 oder 2 Sulfogruppen substituiert sein kann, oder ist eine Naphthylengruppe, die in 1 - oder 2 - Stellung die Azogruppe gebunden enthält und an die in 5 - oder 6 - Stellung die Gruppierung X-N(R)- gebunden ist und die durch 1 Carboxygruppe oder 1 oder 2 Sulfogruppen substituiert sein kann;
R ist ein Wasserstoffatom, eine Alkylgruppe von 1 bis 4 C-Atomen oder eine durch eine Hydroxy -, Cyano -, Carboxy -, Sulfo - , Sulfato- oder Phosphatogruppe oder Phenyl - oder Sulfophenylgruppe substituierte Alkylgruppe von 1 bis 4 C-Atomen;
M ist ein Wasserstoffatom oder ein Alkalimetall oder das Äquivalent eines zweiwertigen Metalls;
X ist eine Gruppe der allgemeinen Formel (2) 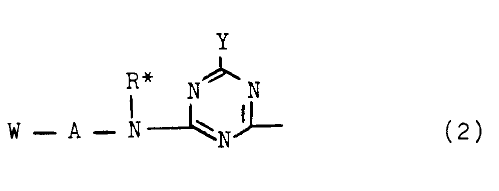 in welcher
Y ein Halogenatom ist,
R* ein Wasserstoffatom oder eine Alkylgruppe von 1 bis 4 C-Atomen ist oder eine Alkylgruppe von 1 bis 4 C - Atomen bedeutet, die durch eine Sulfo -, Carboxy - , Phosphate-, Sulfato - , Hydroxy - oder Cyanogruppe substituiert ist,
A eine direkte Bindung ist oder eine Gruppe der Formel (3a), (3b) oder (3c) 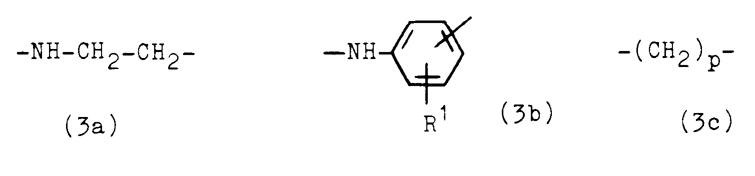 in welchen
R¹ ein Wasserstoffatom oder eine Sulfo - oder Carboxygruppe ist, die freie Bindung im Benzolkern von Formel (3b) in meta-Stellung oder bevorzugt in paraStellung zur Gruppe - NH - gebunden ist und
p die Zahl 1, 2 oder 3 bedeutet, und
W eine Gruppe der allgemeinen Formel (4a) oder (4b) 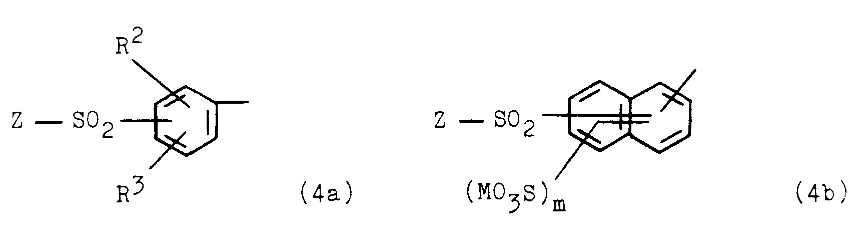 ist, in welchen
R² ein Wasserstoffatom, eine Alkylgruppe von 1 bis 4 C-Atomen, eine Alkoxygruppe von 1 bis 4 C-Atomen, ein Chloratom oder ein Bromatom, eine Hydroxygruppe oder eine Sulfo -, Carboxy - oder Nitrogruppe oder eine Alkylaminogruppe von 1 bis 4 C-Atomen oder eine im Alkylrest durch Hydroxy, Sulfato, Sulfo, Phosphato, Alkanoyloxy von 2 bis 5 C-Atomen oder durch carboxysubstituiertes Alkanoylamido von 1 bis 4 C-Atomen im Alkylenrest substituierte Alkylaminogruppe von 1 bis 4 C-Atomen ist,
R³ ein Wasserstoffatom oder Alkylgruppe von 1 bis 4 C-Atomen oder eine Alkoxygruppe von 1 bis 4 C-Atomen ist,
Z die Vinylgruppe bedeutet oder eine Ethylgruppe ist, die in β - Stellung durch einen Substituenten substituiert ist, der durch ein Alkali unter Bildung der Vinylgruppe eliminiert werden kann,
m für die Zahl Null, 1 oder 2 steht (wobei im Falle von m gleich Null diese Gruppe ein Wasserstoffatom bedeutet) und
M die obengenannte Bedeutung besitzt, dadurch gekennzeichnet, daß man
a) eine Verbindung der allgemeinen Formel (5) 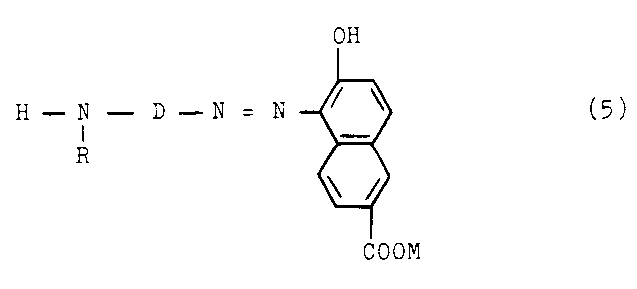 in welcher R, D und M die oben genannten Bedeutungen haben, mit einer Verbindung der allgemeinen Formel (6) 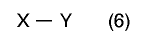 in welcher X und Y die oben genannten Bedeutungen besitzen, wobei der Formelrest Z in X hier einen Rest Z' bedeutet, der eine ß - Hydroxyethyl - Gruppe darstellt oder die Bedeutung von Z besitzt, umsetzt oder daß man
b) eine aromatische Aminoverbindung der allgemeinen Formel (7) 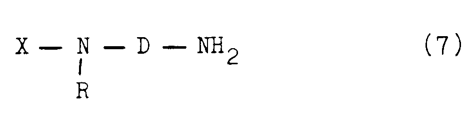 in welcher X, R und D die oben genannten Bedeutungen haben, wobei der Formelrest Z in X hier einen Rest Z' mit der oben genannten Bedeutung darstellt, diazotiert und mit der 2 - Naphthol - 6 - carbonsäure oder einem Salz dieser Carbonsäure kuppelt, oder daß man
c) eine Verbindung der allgemeinen Formel (8) 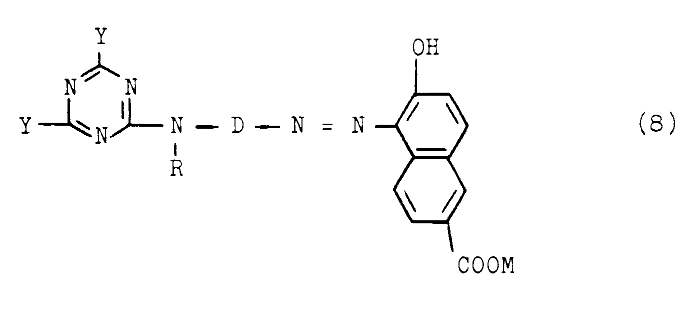 in welcher beide Y sowie R, D und M die oben genannten Bedeutungen haben, mit einer Aminoverbindung der allgemeinen Formel (9) 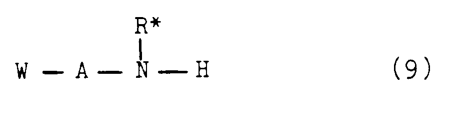 in welcher W, A und R^{*} die oben genannten Bedeutungen haben, wobei der Formelrest Z in W hier einen Rest Z' der obengenannten Bedeutung darstellt, umsetzt, wobei man im Falle der Verwendung von Ausgangsverbindungen, in welchen Z' für die ß-Hydroxyethyl - Gruppe steht, diese ß - Hydroxyethyl - Gruppe in der erhaltenen Verbindung entspre - chend der Formel (1) mit Z hier der β - Hydroxyethyl - Gruppe mit Hilfe eines Veresterungsmittels und Acylierungsmittels in eine Ethylgruppe mit einer Estergruppe oder Acyloxygruppe in β - Stellung überführt.

2. Verfahren nach Anspruch 1, dadurch gekennzeichnet, daß Y ein Chloratom ist.

3. Verfahren nach Anspruch 1 oder 2, dadurch gekennzeichnet, daß R die Methylgruppe oder bevorzugt ein Wasserstoffatom ist.

4. Verfahren nach einem oder mehreren der Ansprüche 1 bis 3, dadurch gekennzeichnet, daß D die meta- oder para - Phenylengruppe ist, die beide durch 1 oder 2 Sulfogruppen substituiert sind.

5. Verfahren nach Anspruch 3, dadurch gekennzeichnet, daß D eine Gruppe der allgemeinen Formel (3d) 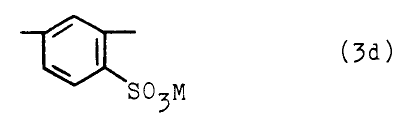 ist, in welcher M ein Wasserstoffatom oder ein Alkalimetall oder das Äquivalent eines zweiwertigen Metalls ist.

6. Verfahren nach einem oder mehreren der Ansprüche 1 bis 5, dadurch gekennzeichnet, daß A eine direkte Bindung ist.

7. Verfahren nach einem oder mehreren der Ansprüche 1 bis 6, dadurch gekennzeichnet, daß W für eine Gruppe der allgemeinen Formel (4a) 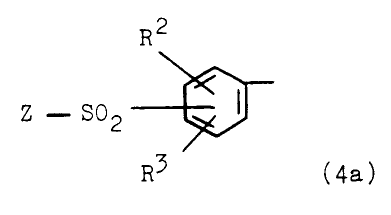 mit R², R³ und Z der in Anspruch 1 genannten Bedeutung steht.

8. Verfahren nach einem oder mehreren der Ansprüche 1 bis 7, dadurch gekennzeichnet, daß Z für die Vinylgruppe oder bevorzugt für die ß - Sulfatoethyl - Gruppe steht.

9. Verfahren nach Anspruch 1, daurch gekennzeichnet, daß die Verbindung (1) eine Verbindung der allgemeinen Formel (1 a) ist 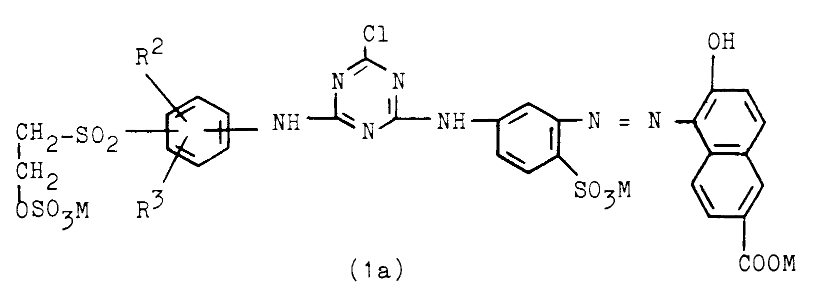 in welcher M, R² und R³ die in Anspruch 1 genannten Bedeutungen haben und β - Sulfatoethylsulfonyl - Gruppe in meta - oder para - Stellung zur Aminogruppe an den Benzolkern gebunden ist.

10. Verfahren nach einem oder mehreren der Ansprüche 1 bis 9, dadurch gekennzeichnet, daß R² ein Wasserstoffatom oder eine Methyl - , Methoxy - oder Ethoxygruppe oder ein Chloratom ist und R³ ein Wasserstoffatom oder eine Methoxy - oder Ethoxygruppe bedeutet.

11. Verfahren nach einem oder mehreren der Ansprüche 1 bis 10, dadurch gekennzeichnet, daß M ein Wasserstoffatom oder ein Alkalimetall ist.

12. Verwendung einer Verbindung entsprechend der Formel (1) gemäß einem oder mehreren der Ansprü - che 1 bis 11 zum Färben von hydroxy - und/oder carbonamidgruppenhaltigem Material, insbesondere Fasermaterial.

13. Verfahren zum Färben von hydroxy - und/oder carbonamidgruppenhaltigem Material, insbesondere Fasermaterial, bei welchem man einen Farbstoff auf das Material aufbringt oder in das Material einbringt und ihn mittels Wärme und/oder mittels einer säurebindenden Verbindung fixiert, dadurch gekennzeichnet, daß man als Farbstoff eine Verbindung entsprechend der Formel (1) gemäß einem oder mehreren der Ansprüche 1 bis 11 einsetzt.

## Claims (Claims for the following Contracting State(s) : BE, CH, DE, FR, GB, IT, LI)

1. A monoazo compound conforming to the general formula (1) 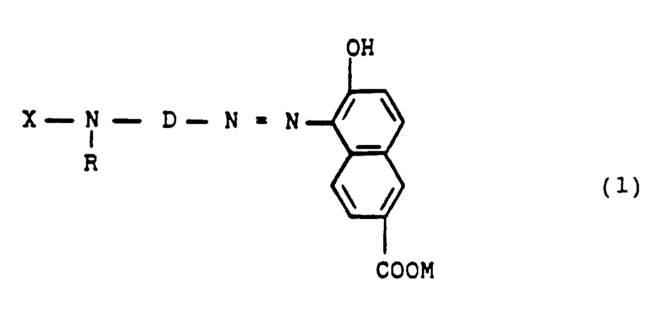 where
D is a para- or meta - phenylene group which can be substituted by 1 carboxyl group or 1 or 2 sulfo groups, or is a naphthylene group which contains the azo group bonded in the 1 - or 2 - position and to which the grouping X - N(R) - is bonded in the 5 - or 6 - position and which can be substituted by 1 carboxyl group or 1 or 2 sulfo groups,
R is a hydrogen atom or an alkyl group of 1 to 4 carbon atoms, or is a hydroxyl -, cyano - , carboxyl - , sulfo -, sulfato - or phosphato - or phenyl - or sulfophenyl - substituted alkyl group of 1 to 4 carbon atoms,
M is a hydrogen atom or an alkali metal or one equivalent of a divalent metal,
X is a group of the general formula (2) 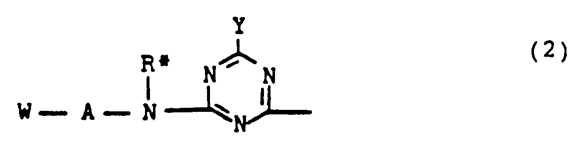 where
Y is a halogen atom,
R* is a hydrogen atom or an alkyl group of 1 to 4 carbon atoms, or is an alkyl group of 1 to 4 carbon atoms which is substituted by a sulfo, carboxyl, phosphato, sulfato, hydroxyl or cyano group,
A is a direct bond or a group of the formula (3a), (3b) or (3c) 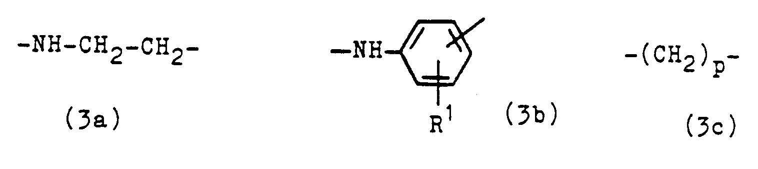 where
R¹ is a hydrogen atom or a sulfo or carboxyl group, the free bond in the benzene nucleus of the formula (3b) is bonded in the meta-position or preferably in the para - position relative to the group - NH - and
p denotes the number 1, 2 or 3, and
W is a group of the general formula (4a) or (4b) 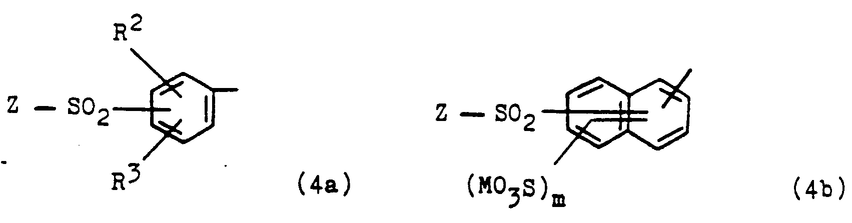 where
R² is a hydrogen atom, an alkyl group of 1 to 4 carbon atoms, an alkoxy group of 1 to 4 carbon atoms, a chlorine atom, a bromine atom, a hydroxyl group or a sulfo, carboxyl or nitro group or an alkylamino group of 1 to 4 carbon atoms or an alkylamino group of 1 to 4 carbon atoms which is substituted in the alkyl radical by hydroxyl, sulfato, sulfo, phosphato, alkanoyloxy of 2 to 5 carbon atoms or by carboxyl - substituted alkanoylamido of 1 to 4 carbon atoms in the alkylene radical,
R³ is a hydrogen atom or alkyl group of 1 to 4 carbon atoms or an alkoxy group of 1 to 4 carbon atoms,
Z is a vinyl group or an ethyl group which is substituted in the ß - position by a substituent which can be eliminated by alkali to form a vinyl group,
m stands for the number zero, 1 or 2 (in the case of m being zero, this group denoting a hydrogen atom) and
M has the abovementioned meaning.

2. A compound as claimed in claim 1, wherein Y is a chlorine atom.

3. A compound as claimed in claim 1 or 2, wherein R is a methyl group or preferably a hydrogen atom.

4. A compound as claimed in one or more of claims 1 to 3, wherein D is a meta- or para-phenylene group which in either case is substituted by 1 or 2 sulfo groups.

5. A compound as claimed in claim 3, wherein D is a group of the general formula (3d) 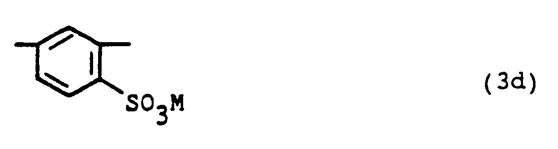 where M is a hydrogen atom or an alkali metal or one equivalent of a divalent metal.

6. A compound as claimed in one or more of claims 1 to 5, wherein A is a direct bond.

7. A compound as claimed in one or more of claims 1 to 6, wherein W stands for a group of the general formula (4a) 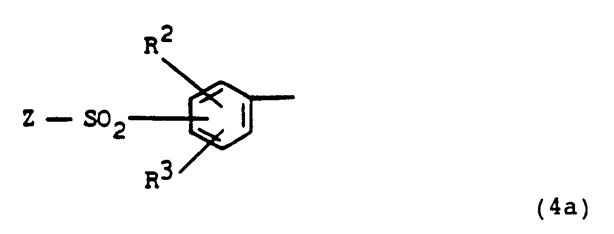 where R², R³ and Z are as defined in claim 1.

8. A compound as claimed in one or more of claims 1 to 7, wherein Z is a vinyl group or preferably a ß - sulfatoethyl group.

9. A compound as claimed in claim 1 conforming to the general formula (1 a) 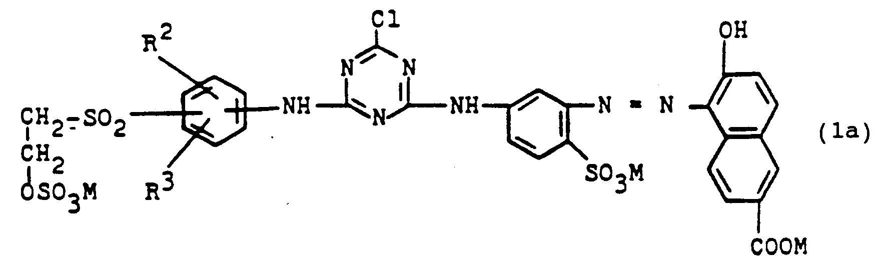 where M, R² and R³ are as defined in claim 1 and the β-sulfatoethylsulfonyl group is bonded to the benzene nucleus in the meta- or para-position relative to the amino group.

10. A compound as claimed in one or more of claims 1 to 9, wherein R² is a hydrogen atom or a methyl, methoxy or ethoxy group or a chlorine atom and R³ denotes a hydrogen atom or a methoxy or ethoxy group.

11. A compound as claimed in one or more of claims 1 to 10, wherein M is a hydrogen atom or an alkali metal.

12. A process for preparing a compound conforming to the general formula (1) as defined in claim 1, which comprises
a) reacting a compound of the general formula (5) 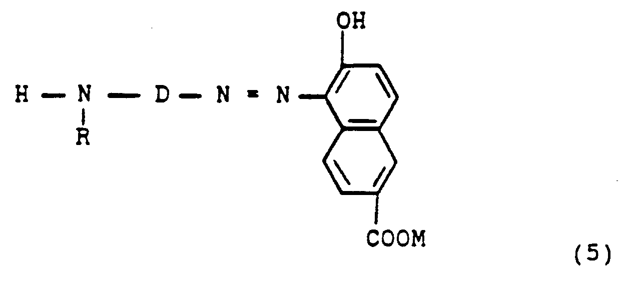 where R, D and M are as defined in claim 1, with a compound of the general formula (6) 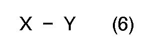 where X and Y are as defined in claim 1, the variable Z in X here denoting a radical Z' which represents a ß - hydroxyethyl group or has the meaning of Z, or
b) diazotizing an aromatic amino compound of the general formula (7) 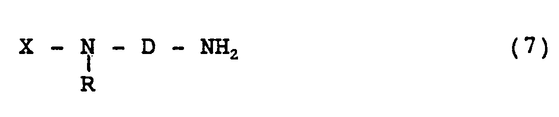 where X, R and D are as defined in claim 1, the variable Z in X here representing a radical Z' of the abovementioned meaning, and coupling the diazonium salt with 2 - naphthol - 6 - carboxylic acid or a salt of this carboxylic acid, or
c) reacting a compound of the general formula (8) 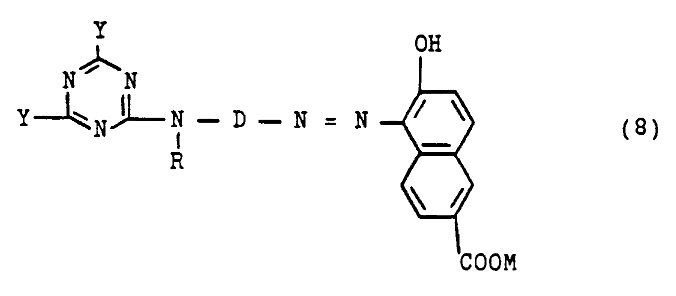 where the two Ys and also R, D and M are as defined in claim 1, with an amino compound of the general formula (9) 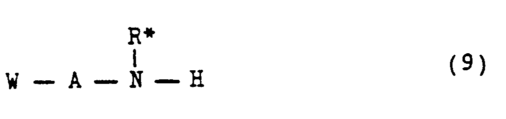 where W, A and R^{*} are as defined in claim 1, the variable Z in W here representing a radical Z' of the abovementioned meaning, and if starting compounds where Z' stands for β - hydroxyethyl are used, converting the β - hydrox - yethyl group in the resulting compound conforming to the formula (1) with Z here a ß - hydroxyethyl group by means of an esterifying agent or acylating agent into an ethyl group with an ester group or acyloxy group in the ß - position.

13. Use of a compound conforming to the formula (1) as claimed in one or more of claims 1 to 12, for dyeing hydroxyl - and/or carboxamido - containing material, in particular fiber material.

14. A process for dyeing hydroxyl - and/or carboxamido - containing material, in particular fiber material, in which a dye is applied to or introduced into the material and fixed by means of heat and/or by means of an acid - binding compound, which comprises using as the dye a compound conforming to the formula (1) as claimed in one or more of claims 1 to 12.

## Claims (Claims for the following Contracting State(s) : ES)

1. A process for preparing a monoazo compound conforming to the general formula (1) 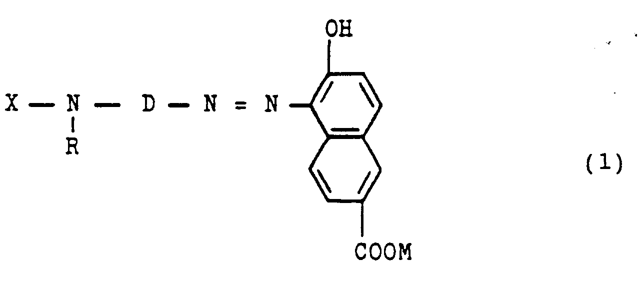 where
D is a para- or meta - phenylene group which can be substituted by 1 carboxyl group or 1 or 2 sulfo groups, or is a naphthylene group which contains the azo group bonded in the 1 - or 2 - position and to which the grouping X - N(R) - is bonded in the 5 - or 6 - position and which can be substituted by 1 carboxyl group or 1 or 2 sulfo groups,
R is a hydrogen atom or an alkyl group of 1 to 4 carbon atoms, or is a hydroxyl -, cyano - , carboxyl - , sulfo -, sulfato - or phosphato - or phenyl - or sulfophenyl - substituted alkyl group of 1 to 4 carbon atoms,
M is a hydrogen atom or an alkali metal or one equivalent of a divalent metal,
X is a group of the general formula (2) 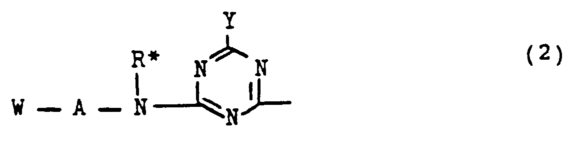 where
Y is a halogen atom,
R* is a hydrogen atom or an alkyl group of 1 to 4 carbon atoms, or is an alkyl group of 1 to 4 carbon atoms which is substituted by a sulfo, carboxyl, phosphato, sulfato, hydroxyl or cyano group,
A is a direct bond or a group of the formula (3a), (3b) or (3c) 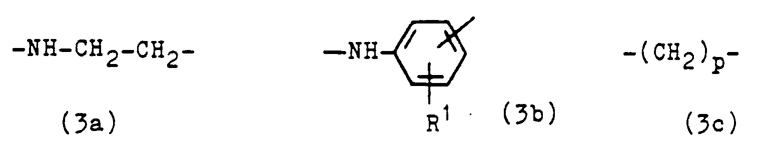 where
R¹ is a hydrogen atom or a sulfo or carboxyl group, the free bond in the benzene nucleus of the formula (3b) is bonded in the meta-position or preferably in the para - position relative to the group - NH - and
p denotes the number 1, 2 or 3, and
W is a group of the general formula (4a) or (4b) 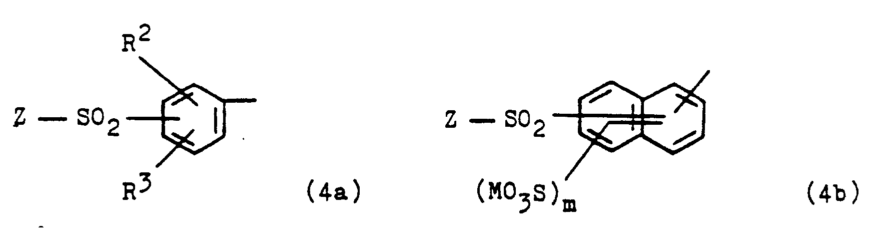 where
R² is a hydrogen atom, an alkyl group of 1 to 4 carbon atoms, an alkoxy group of 1 to 4 carbon atoms, a chlorine atom, or a bromine atom, a hydroxyl group or a sulfo, carboxyl or nitro group or an alkylamino group of 1 to 4 carbon atoms or an alkylamino group of 1 to 4 carbon atoms which is substituted in the alkyl radical by hydroxyl, sulfato, sulfo, phosphato, alkanoyloxy of 2 to 5 carbon atoms or by carboxyl - substituted alkanoylamido of 1 to 4 carbon atoms in the alkylene radical,
R³ is a hydrogen atom or alkyl group of 1 to 4 carbon atoms or an alkoxy group of 1 to 4 carbon atoms,
Z is a vinyl group or an ethyl group which is substituted in the ß - position by a substituent which can be eliminated by alkali to form a vinyl group,
m stands for the number zero, 1 or 2 (in the case of m being zero, this group denoting a hydrogen atom) and
M has the abovementioned meaning, which comprises
a) reacting a compound of the general formula (5) 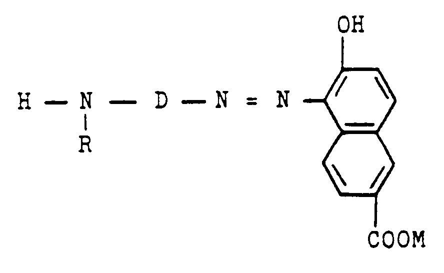 where R, D and M are as defined above with a compound of the general formula (6) 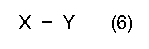 where X and Y are as defined above, the variable Z in X here denoting a radical Z' which represents a ß - hydroxyethyl group or has the meaning of Z, or
b) diazotizing an aromatic amino compound of the general formula (7) 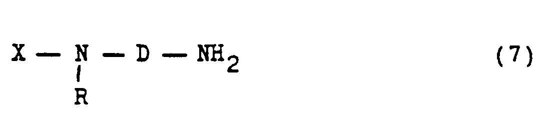 where X, R and D are as defined above, the variable Z in X here representing a radical Z' of the abovementioned meaning, and coupling the diazonium salt with 2 - naphthol - 6 - carboxylic acid or a salt of this carboxylic acid, or
c) reacting a compound of the general formula (8) 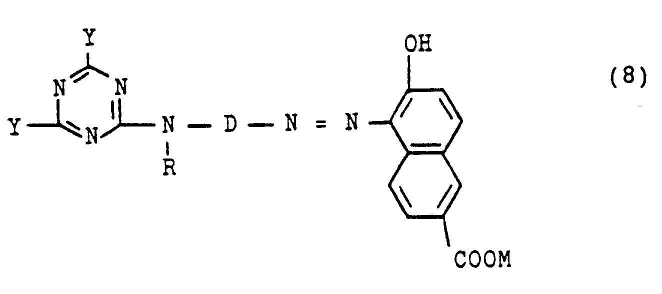 where the two Ys and also R, D and M are as defined above, with an amino compound of the general formula (9) 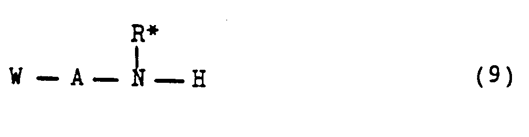 where W, A and R^{*} are as defined, the variable Z in W here representing a radical Z' of the abovementioned meaning, and if starting compounds where Z' stands for hydroxyethyl are used, converting this β - hydroxyethyl group in the resulting compound conforming to the formula (1) with Z here a β - hydroxyethyl group by means of an esterifying agent or acylating agent into an ethyl group with an ester group or acyloxy group in the ß - position.

2. The process as claimed in claim 1, wherein Y is a chlorine atom.

3. The process as claimed in claim 1 or 2, wherein R is a methyl group or preferably a hydrogen atom.

4. The process as claimed in one or more of claims 1 to 3, wherein D is a meta- or para-phenylene group which in either case is substituted by 1 or 2 sulfo groups.

5. The process as claimed in claim 3, wherein D is a group of the general formula (3d) 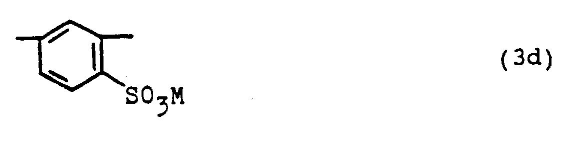 where M is a hydrogen atom or an alkali metal or one equivalent of a divalent metal.

6. The process as claimed in one or more of claims 1 to 5, wherein A is a direct bond.

7. The process as claimed in one or more of claims 1 to 6, wherein W stands for a group of the general formula (4a) 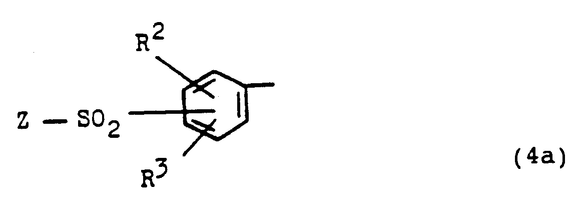 where R², R³ and Z are as defined in claim 1.

8. The process as claimed in one or more of claims 1 to 7, wherein Z is vinyl or preferably ß- sulfatoethyl.

9. The process as claimed in claim 1, wherein the compound (1) is a compound of the general formula (1 a) 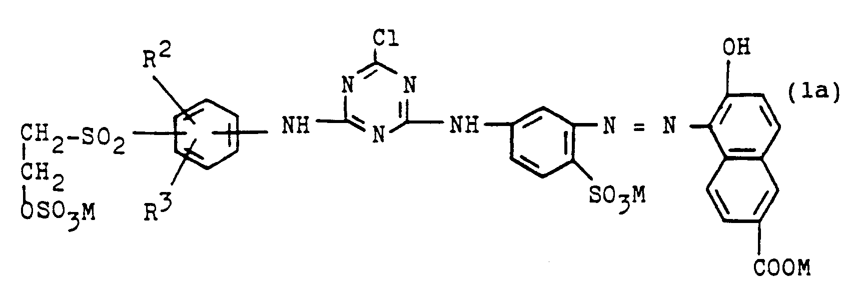 where M, R² and R³ are as defined in claim 1 and the β-sulfatoethylsulfonyl group is bonded to the benzene nucleus in the meta- or para-position relative to the amino group.

10. The process as claimed in one or more of claims 1 to 9, wherein R² is a hydrogen atom or a methyl, methoxy or ethoxy group or a chlorine atom and R³ denotes a hydrogen atom or a methoxy or ethoxy group.

11. The process as claimed in one or more of claims 1 to 10, wherein M is a hydrogen atom or an alkali metal.

12. The use of a compound conforming to the formula (1) as claimed in one or more of claims 1 to 11, for dyeing hydroxyl - and/or carboxamido - containing material, in particular fiber material.

13. A process for dyeing hydroxyl - and/or carboxamido - containing material, in particular fiber material, in which a dye is applied to or introduced into the material and fixed by means of heat and/or by means of an acid - binding compound, which comprises using as the dye a compound conforming to the formula (1) as claimed in one or more of claims 1 to 11.

## Revendications (Revendications pour l'(les) Etat(s) contractant(s) suivant(s) : suivants : BE, CH, DE, FR, GB, IT, LI)

1. Composé monoazoïque répondant à la formule générale (I) 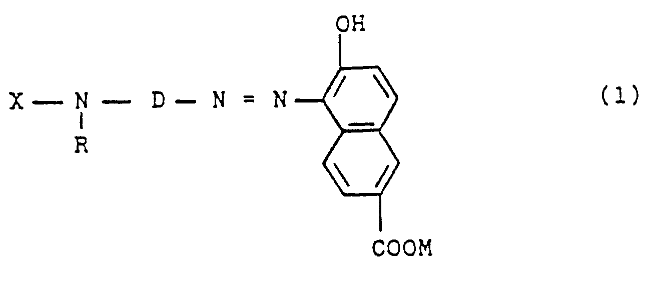 dans laquelle :
D représente un groupe para- ou méta - phénylène, qui peut être substitué par un groupe carboxy ou par un ou deux groupes sulfo, ou bien D représente un groupe naphtylène, qui contient le groupe azoïque fixé en position 1 ou 2 et sur lequel le groupement X - N(R) - est fixé en position 5 ou 6, et qui peut être substitué par un groupe carboxy ou par un ou deux groupes sulfo;
R représente un atome d'hydrogène, un groupe alkyle ayant 1 à 4 atomes de carbone ou un groupe alkyle, ayant 1 à 4 atomes de carbone et qui est substitué par un groupe hydroxy, cyano, carboxy, sulfo, sulfato ou phosphato ou par un groupe phényle ou sulfophényle;
M représente un atome d'hydrogène ou un métal alcalin ou l'équivalent d'un métal divalent;
X représente un groupe de formule générale (2) 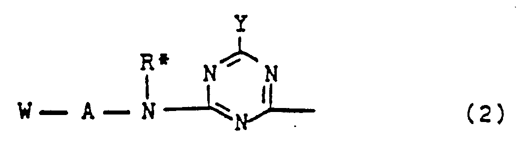 dans laquelle,
Y représente un atome d'halogène;
R^{*} représente un atome d'halogène ou un groupe alkyle ayant 1 à 4 atomes de carbone, ou bien un groupe alkyle ayant 1 à 4 atomes de carbone et qui est substitué par un groupe sulfo, carboxy, phosphato, sulfato, hydroxy ou cyano;
A est une liaison directe ou représente un groupe répondant à l'une des formules (3a), (3b), ou (3c),, 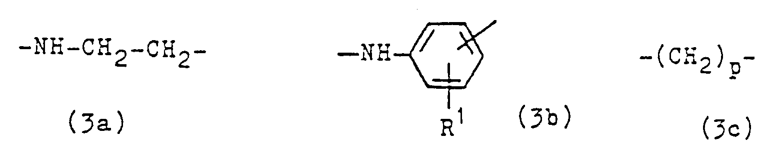 dans lesquelles,
R¹ représente un atome d'hydrogène ou un groupe sulfo ou carboxy, la liaison libre dans le noyau benzénique de formule (3b) est en position méta ou, de préférence, en position para par rapport au groupe - NH - , et
p est un nombre valant 1, 2, ou 3, et
W représente un groupe de formule générale (4a) ou (4b) 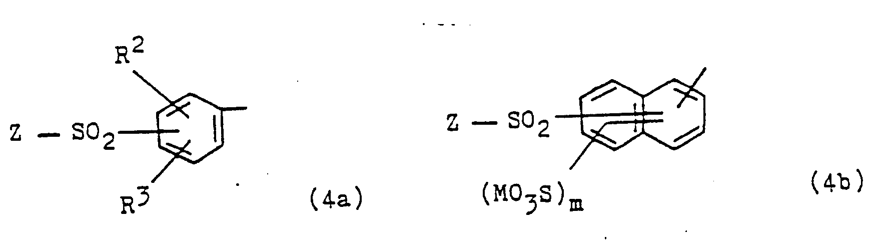 dans l'esquelles
R² représente un atome d'hydrogène, un groupe alkyle ayant 1 à 4 atomes de carbone, un groupe alcoxy ayant 1 à 4 atomes de carbone, un atome de chlore, un atome de brome, un groupe hydroxy ou un groupe sulfo, carboxy ou nitro ou un groupe alkylamino ayant 1 à 4 atomes de carbone ou un groupe alkylamino ayant 1 à 4 atomes de carbone (dont le reste alkyle est substitué par un groupe hydroxy, sulfato, sulfo, phosphato, alcanoyloxy ayant 2 à 5 atomes de carbone ou dont le reste alkylène est substitué par un groupe alcanoyl amido à substituant carboxy ayant 1 à 4 atomes de carbone ;
R³ représente un atome d'hydrogène ou un groupe alkyle ayant 1 à 4 atomes de carbone ou un groupe alcoxy ayant 1 à 4 atomes de carbone ;
Z représente le groupe vinyle ou un groupe éthyle, qui est substitué en position par un substituant pouvant être éliminé par une substance alcaline avec formation du groupe vinyle,
m représente un nombre nul ou valant 1 ou 2 (et, si m est nul, ce groupe représente un atome d'hydrogène), et
M a le sens précité.

2. Composé selon la revendication 1, caractérisé en ce que Y est un atome de chlore.

3. Composé selon la revendication 1 ou 2, caractérisé en ce que M représente le groupe méthyle ou , de préférence, un atome d'hydrogène .

4. Composé selon une ou plusieurs des revendications 1 à 3, caractérisé en ce que D est un groupe méta- ou para - phénylène, qui sont tous deux substitués par un ou deux groupes sulfo,

5. Composé selon la revendication 3, caractérisé en ce que D représente un groupe de formule générale (3d) 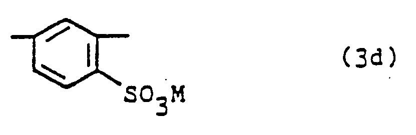 dans laquelle M représente un atome d'hydrogène ou un métal alcalin ou l'équivalent d'un métal divalent.

6. Composé selon une ou plusieurs des revendications 1 à 5, caractérisé en ce que A est une liaison directe.

7. Composé selon une ou plusieurs des revendications 1 à 6, caractérisé en ce que W représente un groupe de formule générale (4a) 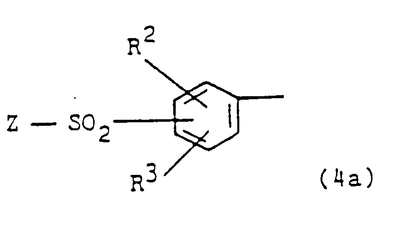 dans laquelle R², R³ et Z ont le sens indiqué à la revendication 1

8. Composé selon une ou plusieurs des revendications 1 à 7 caractérisé en ce que Z représente le groupe vinyle ou de préférence le groupe β-sulfatoéthyle.

9. Composé selon la revendication 1, répondant à la formule générale (1 a) 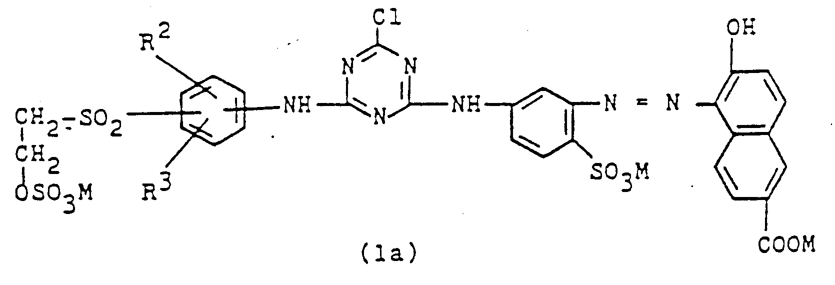 dans laquelle M, R² et R³ ont les sens indiqués à la revendication 1, et le groupe β - sulfatoéthyl - sulfonyle est fixé sur le noyau benzénique en position méta ou para par rapport au groupe amino.

10. Composé selon une ou plusieurs des revendications 1 à 9, caractérisé en ce que R² représente un atome d'hydrogène ou un groupe méthyle, méthoxy ou éthoxy ou un atome de chlore, et R³ représente un atome d'hydrogène ou un groupe méthoxy ou éthoxy.

11. Composé selon une ou plusieurs des revendications 1 à 10, caractérisé en ce que M représente un atome d'hydrogène ou un métal alcalin.

12. Procédé pour préparer un composé répondant à la formule générale (1) selon la revendication 1, caractérisé en ce que :
(a) On fait réagir un composé de formule générale (5) : 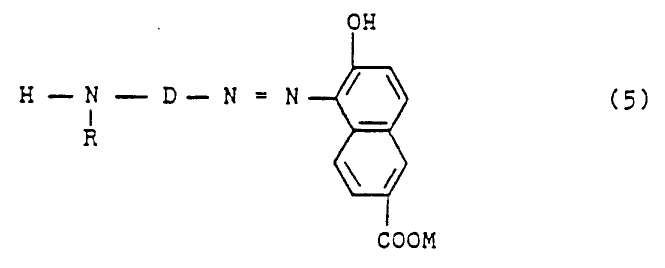 (dans laquelle R, D et M ont les sens indiqués à la revendication 1) avec un composé de formule générale (6) 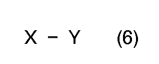 dans laquelle X et Y ont les sens indiqués à la revendication 1, le reste Z présent dans X représentant ici un reste Z', qui est un groupe ß - hydroxyéthyle, ou a le sens de Z, ou en ce que :
(b) on diazote un composé amino aromatique de formule générale (7) 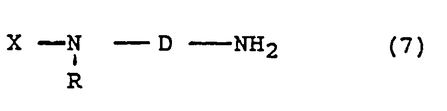 (dans laquelle X, R et D ont les sens indiqués à la revendication 1 et le reste Z présent dans X représente ici un reste Z' ayant le sens précité) et l'on copule avec l'acide 2 - naphtol - 6 - carboxylique ou avec un sel de cet acide carboxylique, ou en ce
(c) qu'on fait réagir un composé de formule générale (8) 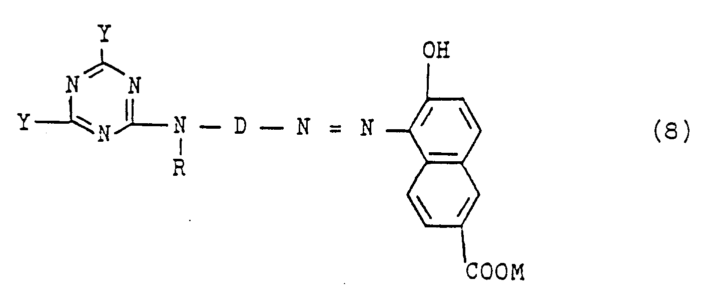 dans laquelle les deux symboles Y, ainsi que R, D et M ont les sens indiqués à la revendication 1, avec un composé amino de formule générale (9) 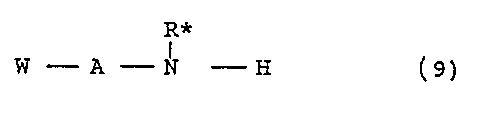 dans laquelle W, A, et R^{*} ont les sens indiqués à la revendication 1, et le reste Z présent dans W représente ici un reste Z' ayant le sens précité, et, si l'on utilise des composés de départ dans lesquels Z' représente le groupe β - hydroxyéthyle, on transforme, dans le composé obtenu répondant à la formule (1) dans laquelle Z représente le groupe ß - hydroxyéthyle, ce groupe β - hydroxyéthyle, à l'aide d'un agent d'estérification et d'un agent d'acylation, en un groupe éthyle comportant un groupe ester ou un groupe acyloxy en position ß.

13. Utilisation d'un composé répondant à la formule (1) selon une ou plusieurs des revendications 1 à 12, pour colorer de la matière, en particulier de la matière fibreuse, contenant des groupes hydroxy et/ou carboxamide.

14. Procédé pour teindre de la matière contenant des groupes hydroxy et/ou des groupes carboxamides, notamment de la matière fibreuse, selon lequel on applique sur la matière ou l'on fait pénétrer dans la matière un colorant et on le fixe à l'aide de la chaleur et/ou à l'aide d'un composé à rôle de fixation des acides, procédé caractérisé en ce qu'on utilise comme colorant un composé répondant à la formule (1) selon une ou plusieurs des revendications 1 à 12.

## Revendications (Revendications pour l'(les) Etat(s) contractant(s) suivant(s) : suivant : ES)

1. Procédé pour préparer un composé monoazoïque répondant à la formule générale (1) 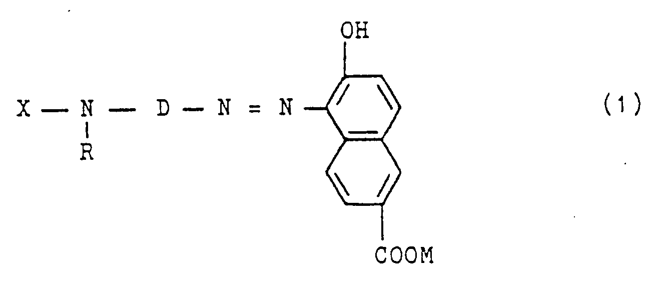 dans laquelle :
D représente un groupe para- ou méta - phénylène, qui peut être substitué par un groupe carboxy ou par un ou deux groupes sulfo, ou bien D représente un groupe naphtylène, qui contient le groupe azoïque fixé en position 1 ou 2 et sur lequel le groupement X - N(R) - est fixé en position 5 ou 6, et qui peut être substitué par un groupe carboxy ou par un ou deux groupes sulfo;
R représente un atome d'hydrogène, un groupe alkyle ayant 1 à 4 atomes de carbone ou un groupe alkyle, ayant 1 à 4 atomes de carbone et qui est substitué par un groupe hydroxy, cyano, carboxy, sulfo, sulfato ou phosphato ou par un groupe phényle ou sulfophényle;
M représente un atome d'hydrogène ou un métal alcalin ou l'équivalent d'un métal divalent;
X représente un groupe de formule générale (2) 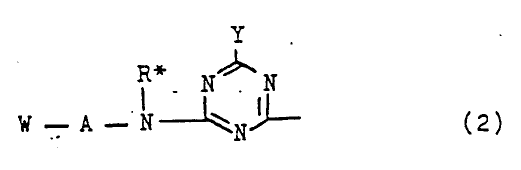 dans laquelle,
Y représente un atome d'halogène;
R^{*} représente un atome d'halogène ou un groupe alkyle ayant 1 à 4 atomes de carbone, ou bien un groupe alkyle ayant 1 à 4 atomes de carbone et qui est substitué par un groupe sulfo, carboxy, phosphato, sulfato, hydroxy ou cyano;
A est une liaison directe ou représente un groupe répondant à l'une des formules (3a), (3b), ou (3c), 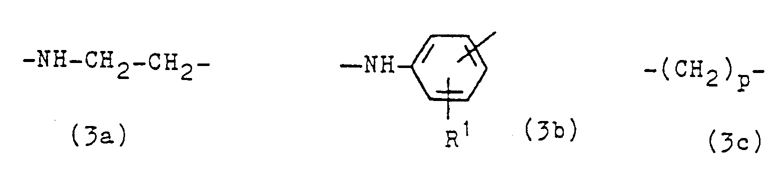 dans lesquelles,
R¹ représente un atome d'hydrogène ou un groupe sulfo ou carboxy, la liaison libre dans le noyau benzénique de formule (3b) est en position méta ou de préférence en position para par rapport au groupe - NH -, et
p est un nombre valant 1, 2, ou 3, et
W représente un groupe de formule générale (4a) ou (4b) 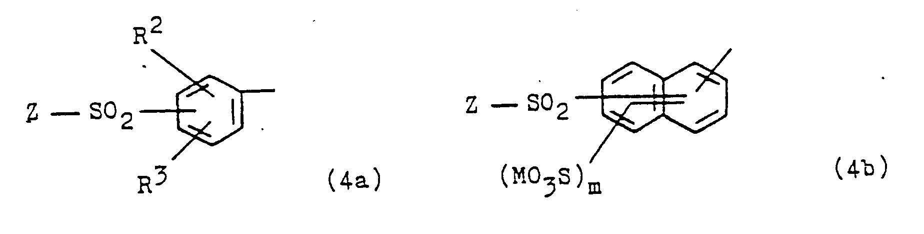 dans lesquelles
R² représente un atome d'hydrogène, un groupe alkyle ayant 1 à 4 atomes de carbone, un groupe alcoxy ayant 1 à 4 atomes de carbone, un atome de chlore, un atome de brome, un groupe hydroxy ou un groupe sulfo, carboxy ou nitro ou un groupe alkylamino ayant 1 à 4 atomes de carbone ou un groupe alkylamino ayant 1 à 4 atomes de carbone (dont le reste alkyle est substitué par un groupe hydroxy, sulfato, sulfo, phosphato, alcanoyloxy ayant 2 à 5 atomes de carbone ou dont le reste alkylène est substitué par un groupe alcanoyl amido à substituant carboxy ayant 1 à 4 atomes de carbone ;
R³ représente un atome d'hydrogène ou un groupe alkyle ayant 1 à 4 atomes de carbone ou un groupe alcoxy ayant 1 à 4 atomes de carbone ;
Z représente le groupe vinyle ou un groupe éthyle, qui est substitué en position par un substituant pouvant être éliminé par une substance alcaline avec formation du groupe vinyle,
m représente un nombre nul ou valant 1 ou 2 (et, si m est nul, ce groupe représente un atome d'hydrogène ), et
M a le sens précité.
procédé caractérisé en ce que
(a) On fait réagir un composé de formule générale (5) : 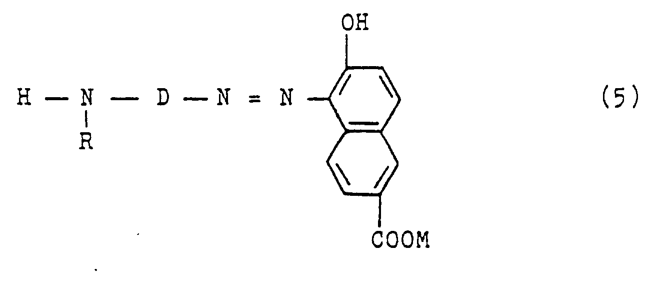 (dans laquelle R, D et M ont les sens précités) avec un composé de formule générale (6) 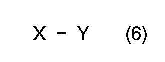 dans laquelle X et Y ont les sens précités, le reste Z présent dans X représentant ici un reste Z', qui est un groupe ß - hydroxyéthyle, ou a le sens de Z, ou en ce que :
(b) on diazote un composé amino aromatique de formule générale (7) 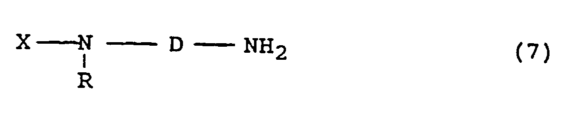 (dans laquelle X, R et D ont les sens précités et le reste Z présent dans X représente ici un reste Z' ayant le sens précité) et l'on copule avec l'acide 2 - naphtol - 6 - carboxylique ou avec un sel de cet acide carboxylique, ou en ce
(c) on fait réagir un composé de formule générale (8) 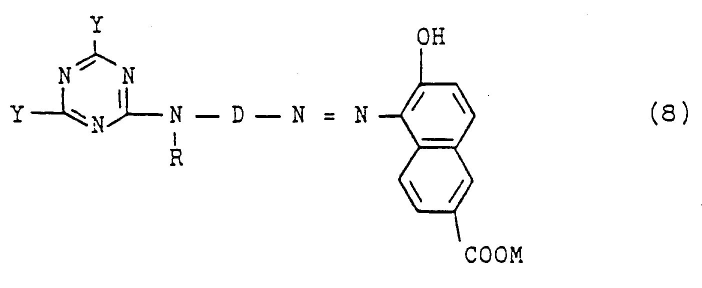 (dans laquelle les deux symboles Y, ainsi que R, D et M ont les sens précités) avec un composé amino de formule générale (9) 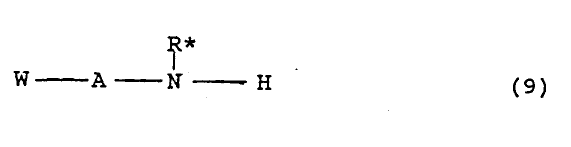 dans laquelle W, A, et R^{*} ont les sens précités et le reste Z présent dans W représente ici un reste Z' ayant le sens précité, et, si l'on utilise des composés de départ dans lesquels Z' représente le groupe ß - hydroxyéthyle, on transforme, dans le composé obtenu répondant à la formule (1) dans laquelle Z représente le groupe ß - hydroxyéthyle ce groupe ß - hydroxyéthyle, à l'aide d'un agent d'estérification et d'un agent d'acylation, en un groupe éthyle comportant un groupe ester ou un groupe acyloxy en position ß.

2. Procédé selon la revendication 1, caractérisé en ce que Y représente un atome de chlore.

3. Procédé selon la revendication 1 ou 2, caractérisé en ce que R représente le groupe méthyle ou, de préférence, un atome d'hydrogène .

4. Procédé selon l'une ou plusieurs des revendications 1 à 3, caractérisé en ce que D représente le groupe méta-phénylène ou para-phénylène, tous deux étant substitués par un ou deux groupes sulfo.

5. Procédé selon la revendication 3, caractérisé en ce que D représente un groupe de formule générale (3d) 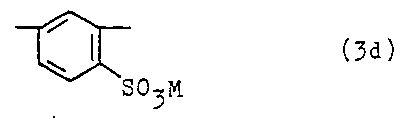 dans laquelle M représente un atome d'hydrogène ou un métal alcalin ou l'équivalent d'un métal divalent.

6. Procédé selon une ou plusieurs des revendications 1 à 5, caractérisé en ce que A est une liaison directe.

7. Procédé selon une ou plusieurs des revendications 1 à 6, caractérisé en ce que W représente un groupe de formule générale (4a) 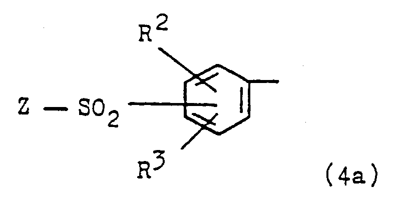 dans laquelle R², R³ et Z ont le sens indiqué à la revendication 1.

8. Procédé selon une ou plusieurs des revendications 1 à 7, caractérisé en ce que Z représente le groupe vinyle ou de préférence le groupe β-sulfatoéthyle.

9. Procédé selon la revendication 1, caractérisé en ce que le composé (1) est un composé de formule générale (1 a) 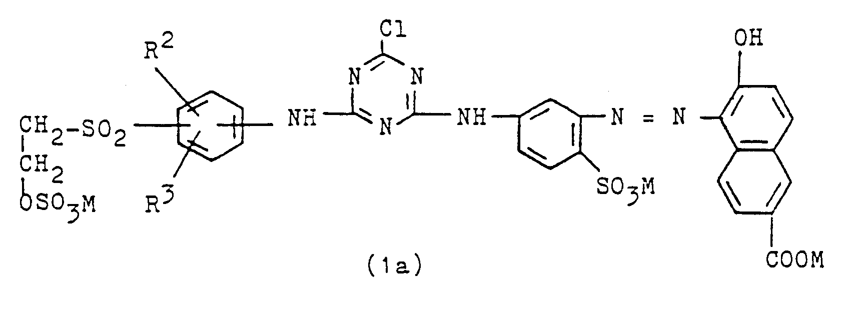 dans laquelle M, R² et R³ ont les sens indiqués à la revendication 1, et le groupe ß - sulfatoéthyle est fixé sur le noyau benzénique en position méta ou en position para par rapport au groupe amino.

10. Procédé selon une ou plusieurs des revendications 1 à 9, caractérisé en ce que R² représente un atome d'hydrogène ou un groupe méthyle, méthoxy ou éthoxy ou un atome de chlore, et R³ représente un atome d'hydrogène ou un méthoxy ou éthoxy.

11. Procédé selon une ou plusieurs des revendications 1 à 10, caractérisé en ce que M représente un atome d'hydrogène ou un métal alcalin.

12. Utilisation d'un composé répondant à la formule (1) selon une ou plusieurs des revendications 1 à 11, pour teindre une matière contenant des groupes hydroxy et/ou carboxamide, en particulier une matière fibreuse.

13. Procédé pour teindre une matière contenant des groupes hydroxy et/ou carboxamide, notamment une matière fibreuse, selon lequel on applique sur la matière, ou l'on introduit dans la matière, un colorant et on l'y fixe à l'aide de la chaleur et/ou à l'aide d'un composé à rôle de fixation des acides, procédé caractérisé en ce qu'on utilise comme colorant un composé repondant à la formule (1) selon une ou plusieurs des revendications 1 à 11.
